(19) Europäisches Patentamt
European Patent Office
Office européen des brevets

(11) EP 0 807 460 A1

(12) EUROPÄISCHE PATENTANMELDUNG

(43) Veröffentlichungstag:
19.11.1997 Patentblatt 1997/47

(51) Int. Cl.[6]: B01D 71/10, B01D 71/12, C08L 1/02

(21) Anmeldenummer: 97107174.1

(22) Anmeldetag: 30.04.1997

(84) Benannte Vertragsstaaten:
AT DE FR GB IT SE

(30) Priorität: 15.05.1996 DE 19619611

(71) Anmelder: Akzo Nobel N.V.
6824 BM Arnhem (NL)

(72) Erfinder:
- Diamantoglou, Michael, Dr.
63906 Erlenbach (DE)
- Nywlt, Martin, Dr.
63785 Obernburg (DE)
- Hölz, Winfried
63840 Hausen (DE)

(74) Vertreter: Fett, Günter et al
Akzo Nobel Faser AG,
Kasinostrasse 19-21
42103 Wuppertal (DE)

# (54) Cellulosische Dialysemembran

(57) Es wird ein Verfahren zur Herstellung von cellulosischen Dialysemembranen in Form von Flach-, Schlauch- oder Hohlfasermembranen durch Verspinnen einer Spinnlösung aus Cellulose und/oder modifizierter Cellulose, einem tertiären Aminoxid sowie weiterer Flüssigkeiten und Zusätzen wie Stabilisatoren, Porenbildner u.dgl. beschrieben. Das Verfahren arbeitet mit hoher Abzugsgeschwindigkeit und liefert Membranen für den low-, middle- und high-flux Bereich. Die Membranen altern praktisch nicht und weisen eine stabile Struktur auf. Der oxidative Abbau der Cellulose bei der Herstellung der Membranen ist äußerst niedrig und die Hämokompatibilität ist sehr gut.

EP 0 807 460 A1

## Beschreibung

Die Erfindung betrifft cellulosische Dialysemembranen, Verfahren zu deren Herstellung und deren Verwendung insbesondere für die Hämodialyse, Hämofiltration und Hämodiafiltration, wobei unter cellulosisch zu verstehen ist, bestehend aus Cellulose oder modifizierter Cellulose, Gemischen aus Cellulose und modfizierter Cellulose, ggf. in Mischung mit synthetischen Polymeren.

Dialysemembranen aus synthetischen bzw. natürlichen Polymeren können bei ihrem Einsatz in künstlichen Nieren sehr leicht eine Gerinnung des Blutes hervorrufen, die jedoch durch entsprechende medikamentöse Behandlung weitgehend verhindert wird.

Bei der Dialysebehandlung eines Nierenkranken mit Dialysatoren, die Membranen aus regenerierter Cellulose enthalten, tritt in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$. Die Leukopenie ist bei der Dialyse am stärksten 15 bis 20 Min. nach Beginn der Behandlung ausgeprägt, wobei die Neutrophilen fast vollständig verschwinden können. Danach erholt sich die Zahl der Leukozyten innerhalb etwa einer Stunde wieder auf fast den Ausgangswert oder übersteigt diesen. Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten positiven Eigenschaften von Dialysemembranen aus regenerierter Cellulose beeinträchtigt werden.

Bei der Hämodialyse mittels Membranen aus regenerierter Cellulose, hergestellt nach dem Cuoxamverfahren, hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen Strukturen der Fremdoberfläche vorhanden sind, kann das Komplementsystem auf dem klassischen Weg aktiviert werden, andernfalls erfolgt auf einem Alternativ-Weg durch besondere Merkmale der Fremdoberfläche die Komplement-Aktivierung. Das Komplement-System besteht aus einer Vielzahl von Plasma-Proteinen. Nach Aktivierung reagieren diese Proteine spezifisch in einer bestimmten Reihenfolge miteinander, und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff., 1983 und D.E. Chenoweth, Asaio-Journal Vol. 7, Seite 44 ff., 1984.

Im Rahmen der vorliegenden Erfindung wurde die Komplement-Aktivierung anhand der Fragmente C5a beurteilt. Dazu wurden in vitro 300ml heparinisiertes Blut über einen Zeitraum von 3 Std. mit einem Fluß von 250 ml/min durch einen Dialysator mit 1 - 1,3 $m^2$ effektiver Austauschfläche rezirkuliert. In dem Blutplasma wurden die C5a-Fragmente mit Hilfe der von den Behring-Werken Marburg entwickelten ELISA-Methode bestimmt (Enzyme-linked-immuno-sorbent-assay). Die relative Komplement-Aktivierung für den jeweiligen Meßzeitpunkt wurde durch Bildung des Verhältnisses aus der Konzentration zum Zeitpunkt der Probenahme zur Konzentration am Anfang in Prozent errechnet. Zur Bewertung wurde der Meßwert nach 3 Std. Rezirkulationszeit herangezogen. Flachmembranen werden mit heparinisiertem Blutplasma 3 Stunden inkubiert und anschließend die C5a-Fragmente bestimmt.

Die Thrombogenität wurde anhand von TAT (Thrombin-antithrombin) und PC (platelet count) beurteilt.

Eine Erhöhung des beta-2-Mikroglobulinspiegels wird bei Langzeit-Dialysepatienten nach Verwendung von Membranen aus regenerierter Cellulose beobachtet und wird darauf zurückgeführt, daß diese Membranen im Molekulargewichtsbereich von 1000 bis 20.000 weniger durchlässig sind und die Mikroglobuline bei der Dialyse deshalb nicht in ausreichendem Maße entfernt werden. An die üblichen Membranen aus regenerierter Cellulose adsorbiert sich das beta-2-Mikroglobulin nicht in nennenswertem Umfang. Hierzu aber können in unerwarteter Weise die erfindungsgemäß verwendeten Cellulosederivate beitragen.

Der Durchschnittspolymerisationsgrad(DP) der Cellulose wurde in einer Cuen-Lösung nach DIN 54270 bestimmt.

Der Modifizierungsgrad bzw. Substitutionsgrad (DS) wurde anhand von Analysen bestimmt, die für die Substituenten bekannt und typisch sind, beispielsweise Stickstoff nach Kjeldahl, Schwefel nach Schöniger und Alkyl- bzw. Aryl-Reste mit Hilfe der NMR-, UV-, NIR-, IR- oder Raman-Spektroskopie.

Weiterhin wurde festgestellt, daß es wünschenswert ist, die Thrombogenität und die Heparinadsorption zu vermeiden.

An cellulosische Dialysemembranen, die insbesondere bei der Hämodialyse zum Einsatz gelangen sollen, werden nun immer größere Anforderungen gestellt. So soll die Membran biokompatibel, d.h. insbesondere blutverträglich sein. Die Komplementaktivierung soll möglichst niedrig sein, auch soll die Membran keine Thrombogenität aufweisen. Darüber hinaus ist man daran interessiert, cellulosische Dialysemembranen zur Verfügung zu haben, deren Ultrafiltrationsrate (UFR) und deren Siebkoeffizienten für den jeweiligen Einsatzzweck eingestellt werden können. Hier interessieren insbesondere die sogenannten "low flux"-, "middle flux"- und "high flux"-Bereiche. Ferner sollen die Membranen alterungsbeständig sein, d.h. bei der Lagerung ihre Eigenschaften nicht verändern, sie sollen mit den bekannten Methoden wie Dampf-, Ethylenoxid- und Strahlenbehandlung sterilisierbar sein. Darüber hinaus ist man auch an Herstellungsverfahren interessiert, die umweltfreundlich und wirtschaftlich arbeiten, d.h. Verfahren, bei denen die Umwelt durch Entsorgung von Chemikalien nicht belastet wird und die eine hohe Produktivität, insbesondere eine hohe Produktionsgeschwindigkeit ermöglichen.

Wichtige Kriterien für die Beurteilung der Leistung einer Dialysemembran sind die Ultrafiltrationsrate (UFR) und der Siebkoeffizient (SK).

Die Ultrafiltrationsrate ist definiert als das pro Zeiteinheit durch die Membranwand durchtretende Permeatvolumen, bezogen auf die Membranfläche und den Prüfdruck (GL. 1):

$$UFR = \frac{V}{t.\ A.\ p} \quad \frac{ml}{h.m^2.\ mm\ Hg} \qquad \textbf{Gleichung 1}$$

V = Flüssigkeitsvolumen (Permeat) [ml]
t = Zeit [h]
A = Membranfläche [$m^2$]
p = Prüfdruck [mm Hg]

Bei Porenmembranen werden die Trenneigenschaften hauptsächlich durch die Porengröße festgelegt. Kleine Moleküle, beispielsweise Harnstoff, können die Membranwand nahezu widerstandslos, mittelgroße Moleküle, beispielsweise Cytochrom C, Beta-2-Mikroglobulin, zu einem gewissen Prozentsatz und große Moleküle, beispielsweise Albumin, praktisch nicht passieren. Die Charakterisierung von Membrantrenneigenschaften gelingt deswegen durch die Bestimmung der Siebkoeffizienten verschieden großer Teilchensorten in einem Ultrafiltrationsexperiment und ist definiert als das Verhältnis der Konzentrationen im Filtrat und der Stammlösung (Gl. 2)

$$SK = \frac{C_F}{C_{St}} \qquad \textbf{Gleichung 2}$$

$C_F$ = Konzentration der betreffenden Teilchensorte im Filtrat

$C_{St}$ = Konzentration der betreffenden Teilchensorte in der Stammlösung

Die klassischen und auch noch heute vielfach angewandten Verfahren zur Herstellung von cellulosischen Dialysemembranen beruhen auf dem sogenannten Cuoxam-Verfahren.

Dieses Verfahren läßt nur eine geringe Produktionsgeschwindigkeit zu, auch sind diese Membranen aufgrund ihrer dichten Struktur im allgemeinen nur für den sogenannten "low flux"-Bereich geeignet. Ferner altern diese Membranen sehr schnell. Auch lassen sich nach dem Cuoxam-Verfahren eine ganze Reihe von modifizierten Cellulosen bzw. Cellulosederivaten sowie Gemische mit synthetischen Polymeren nicht oder nur sehr schlecht verarbeiten.

Ferner ist die Rückgewinnung der bei diesem Verfahren eingesetzten Chemikalien wie Ammoniak und basischem Kupfersulfat aufwendig. Außerdem fällt eine beträchtliche Salzfracht, wie insbesondere Natriumsulfat und Ammoniumsulfat an.

Es werden auch Verfahren beschrieben, bei denen derartige Chemikalien nicht zum Einsatz gelangen. So wird in der DE-C2-3 021 943 ein Verfahren zur Herstellung einer Dialysemembran aus Cellulose offenbart, bei dem man aus einem Gemisch aus Cellulose, einem tertiären Aminoxid sowie gegebenenfalls die Cellulose nicht lösenden Verdünnungsmitteln und sonstigen üblichen Zusätzen eine Spinnlösung herstellt und diese durch eine Düse in ein Fällbad extrudiert. Dabei bildet sich durch Koagulation eine Dialysemembran, die noch gewaschen und nach Zusatz von Weichmacher unter Schrumpfbehinderung zwischen 50 und 110°C getrocknet und aufgewickelt wird.

Das dort erwähnte Verfahren arbeitet aber mit geringer Produktivität; die Abzugsgeschwindigkeit ist sehr niedrig, konkrete Hinweise, wie man die Porenstruktur beeinflussen und insbesondere Membranen herstellen kann, welche je nach Wunsch für den "low"-, "middle"- oder "high"-Fluxbereich geeignet sind, fehlen. Auch stellen sich Probleme bei der Nacharbeitung ein, wie weiter unten noch gezeigt wird. Auch muß die Fällbadtemperatur niedrig gehalten werden, da sonst die Dialyseleistung verringert wird.

Die Membranen besitzen eine sehr dichte Struktur, deren Ultrafiltrationsrate sehr niedrig ist, sie können somit allenfalls als sogenannte "low flux"-Membran eingesetzt werden.

Die dort beschriebenen Membranen müssen in feuchtigkeitsdichten Behältern aufbewahrt werden, da sie eine sehr labile Struktur aufweisen und sehr schnell irreversible Strukturänderungen erleiden.

Obwohl bereits zahlreiche Verfahren zur Herstellung von cellulosischen Membranen bekannt sind, besteht noch ein Bedürfnis nach verbesserten Verfahren zu deren Herstellung sowie nach cellulosischen Membranen mit guten bzw. verbesserten Eigenschaften sowie Membranen für den low-, middle- und highflux-Bereich.

Aufgabe der Erfindung ist es deshalb, ein Verfahren zur Herstellung von cellulosischen Dialysemembranen zur Verfügung zu stellen, das eine hohe Produktivität besitzt und wirtschaftlich durchführbar ist, das Membranen liefert, die unter normalen Bedingungen lagerfähig und alterungsbeständig sind und eine stabile Struktur besitzen, mit dem gezielt Membranen für den low-, middle- und highflux-Bereich erhältlich sind, mit dem ferner Cellulosederivate, Gemische von Cellulose und Cellulosederivaten, ggf. in Mischung mit synthetischen Polymeren zu biokompatiblen Membranen verarbeitbar sind, die hinsichtlich vieler Eigenschaften mit günstigen Eigenschaften von synthetischen Membranen konkurrieren können, mit dem ferner die Herstellung von Membranen möglich ist, die ein Adsorptionsvermögen bzw. eine Affinität hinsichtlich bestimmter im Blut vorhandener Stoffe wie z.B. β-2-Mikroglobulin, LDL (low density lipoprotein) oder Giftstoffe aufweisen, die nicht thrombogen sind und die sterilisierbar sind, und mit dem ferner gezielt und reproduzierbar durch Wahl der Polymerzusammensetzung und -konzentration und der Verfahrensparameter die Struktur der Membran wie Porosität und Oberflächenbeschaffenheit beeinflußt werden kann.

Eine weitere Aufgabe ist es, ein Verfahren zur Verfügung zu stellen, bei dem das Grundgerüst der Cellulose keine oxidative Schädigung erfährt und somit das UV-Spektrum des in Cadoxen gelösten cellulosischen Polymermaterials der hergestellten Membran weitgehend im Bereich der Wellenlängen von 245 bis 320 nm dem UV-Spektrum des Ausgangsmaterials entspricht, d.h. die Differenz zwischen der Extinktion des Materials der hergestellten Membran und der Extinktion des Ausgangsmaterials niedrig ist und vorzugsweise zwischen 0 bis 15 % liegt.

Diese Aufgabe wird gelöst durch ein Verfahren zur Herstellung von stabilen und lagerfähigen cellulosischen Dialysemembranen für den low-, middle- oder high-flux Bereich mit UFR-Werten von 4 bis 15, 15 bis 50 und über 50 ml/hm$^2$mm Hg in Form von Flach-, Schlauch- oder Hohlfasermembranen durch Herstellen einer Spinnlösung aus 3 bis 40 Teilen Cellulose mit einem Polymerisationsgrad (DP)>300 und/oder modifizierter Cellulose mit einem Polymerisationsgrad (DP)>200, 97 bis 60 Teilen eines Gemisches aus tertiärem Aminoxid und einer oder mehrerer weiterer Flüssigkeiten wie Wasser, Dimethylformamid, Dimethylacetamid, Dimethylsulfoxid, N-Methylpyrrolidon, einem oder mehreren Stabilisatoren, sowie gegebenenfalls einem oder mehreren Porenbildnern, weiteren Spinnlösungsadditiven sowie ggf. niedermolekularer organischer oder anorganischer Verbindungen und/oder synthetischer Polymere, Extrudieren dieser Lösung durch eine Düse in ein Fällbad einer Temperatur von 10-95°C, wobei zwischen Düse und Fällbadoberfläche gegebenenfalls ein Luftspalt vorhanden ist, und man im Falle der Herstellung von Hohlfasermembranen ein hohlraumbildendes Fluid verwendet, wobei die Abzugsgeschwindigkeit mindestens 30, vorzugsweise mindestens 50 m/Minute beträgt, ein- oder mehrstufiges Waschen bzw. Extrahieren der erhaltenen Membranen zwecks Entfernen des Aminoxids und der ggf. vorhandenen löslichen Zusätze auf einen Gehalt von weniger als 10 ppm, ggf. Behandeln der Membranen in einem Bad, welches einen oder mehrere Porenstabilisatoren enthält, ggf. Avivieren der Membranen, sowie Trocknen, ggf. vor oder nach dem Trocknen Ondulieren der Membranen sowie gegebenenfalls Aufwickeln der Membranen.

Weitere vorteilhafte Ausführungsformen des erfindungsgemäßen Verfahrens sind in den Patentansprüchen 2 bis 35 wiedergegeben.

Gegenstand der Erfindung sind weiter Dialysemembranen gemäß den Patentansprüchen 36 bis 47.

Ein weiterer Gegenstand der Erfindung ist die Verwendung der Dialysemembran als low-, middle- oder high-flux Membran, insbesondere für die Hämodialyse, die Hämofiltration und die Hämodiafiltration, wie in Patentanspruch 48 angegeben.

Stabil und lagerfähig im Rahmen der vorliegenden Erfindung bedeutet, daß die Membranen unter normalen Bedingungen, wie sie üblicherweise in Räumen wie Krankenzimmern, arztlichen Behandlungszimmern, Lagerräumen u.dgl. herrschen, keine wesentlichen Veränderungen erleiden. Sie brauchen also nicht in feuchtigkeitsdichten Behältern oder in konditionierten Räumen aufbewahrt werden.

Die Struktur der Membran ist nach deren Herstellung also so fixiert, daß die Membran alterungsbeständig ist und lange Zeit gelagert werden kann.

Das Verfahren läßt sich mit hohen Produktionsgeschwindigkeiten durchführen, es arbeitet sehr wirtschaftlich, da u.a. mit hohen Polymerkonzentrationen gearbeitet werden kann.

Bei hohen Modifizierungsgraden, hohen Molekulargewichten und hohen Konzentrationen kann der Einsatz eines Cosolvens für die Herstellung der Spinnlösungen von Vorteil sein. Cellulose bzw. Cellulosederivate mit niedrigerem DP lösen sich einfacher und lassen hohe Konzentrationen zu. Die Löslichkeit und damit die Konzentration der Lösungen kann auch durch Modifizierung der Cellulose oder durch Verwendung von Mischungen oder Vermengen von cellulosischen Verbindungen verschiedener Molekulargewichte erhöht werden.

Das Verfahren erlaubt es, durch Variieren einzelner oder mehrerer Parameter gezielt und reproduzierbar die Eigenschaften und die Struktur der Membranen zu beeinfussen. So läßt sich z.B. mit steigender Fällbadtemperatur die Ultrafiltrationsrate (UFR) erhöhen.

Ferner kann die Struktur und selbstvertändlich damit auch die UFR durch die Zusammensetzung des Fällmediums beeinflußt werden. So kann mittels der Hydrophilie des Fällungsmittels insbesondere die Struktur der Oberfläche der Membranen gesteuert werden. So ergeben stärker hydrophile Fällungsmittel, insbesondere Wasser eine dichtere Haut, wogegen hydrophobere Materialien wie Isopropylmyristat zu offenporigen, stärker porösen Oberflächen führen. Je nach dem Charakter des Fäll- bzw. Koagulationsmittels kann man z.B. Hohlfasermembranen herstellen, die eine dichtere Struktur bei der Außen- und/oder bei der Innenwand aufweisen. In gleicher Weise wie durch die Zusammensetzung des von außen wirkenden Fällbads kann man also durch die Zusammensetzung des hohlraumbildenden Fluids die Struktur der Innenoberfläche von Hohlfasermembranen beeinflussen.

Auch läßt sich die Struktur der Membranen durch die Konzentration der Spinnlösung beeinflussen, wie in verschiedenen Beispielen gezeigt wird.

Auch hat man mit der Konditionierung des Luftspalts ein Mittel in der Hand, um auf die Bildung der Strukturen einzuwirken.

Schließlich kann auch die Avivage, d.h. insbesondere deren Zusammensetzung, zur Strukturbildung und Fixierung derselben mitbeitragen.

Durch das Zusammenspiel der einzelnen Parameter hat man Mittel in der Hand, die Eigenschaften der Membran für den vorgesehenen Einsatz optimal einzustellen.

Es war so besonders überraschend, daß sich gemäß der Erfindung auf einfache Weise Dialysemembranen von hervorragender Qualität herstellen lassen, die je nach Wunsch für den low-, middle- oder high-flux-Bereich eingestellt werden können. Sie weisen eine stabile Struktur auf und brauchen deshalb nicht unter besonderen Bedingungen gelagert zu werden, was ein großer Vorteil insbesondere beim Transport und der Lagerung ist. Da die Membranen auf lange Zeit ihre Struktur nicht verändern, bleibt die UFR- bzw. die Dialyseleistung auch bei längerer Lagerung konstant.

Die Cellulose und die Cellulosederivate lassen sich gemäß der Erfindung sehr gut in Mischung mit synthetischen Polymeren zu Membranen verarbeiten. Ferner lassen sich in hervorragender Weise gemäß der Erfindung niedermolekulare Verbindungen wie Fettalkohole z.B. Stearylalkohol, Fettöle und dergleichen einarbeiten, wodurch die Blutverträglichkeit verbessert werden kann. Derartige Bestandteile brauchen beim Waschen auch nicht extrahiert werden, da sie nicht giftig und kaum blutlöslich sind.

Die Membranen weisen eine günstige Porosität auf und können mit einer scharfen Trenngrenze eingestellt werden. So ist es beispielsweise möglich, Dialysemembranen herzustellen, welche noch das Beta-2-Mikroglobulin durchlassen, für höhermolekulare Eiweiße hingegen undurchlässig sind.

Auch lassen sich gemäß der Erfindung Gemische von Cellulosen oder Cellulosederivaten unterschiedlichen Molekulargewichts verarbeiten.

Es ist ferner möglich, im Rahmen der Erfindung modifizierte Membranen mit sehr guter Biokompatibilität herzustellen, d.h. solche, die u.a. eine geringere Leukopenie und geringere Komplementaktivierung hervorrufen. Ferner sind diese Membranen weniger thrombogen.

Die Erfindung wird durch folgende Beispiele näher erläutert:

**Beispiel 1**

In einem beheizbaren 50 l Kneter wurden 23,982 kg NMMO[1], 1,800 kg Linters Cellulose, 5,996 kg VE[2]-Wasser und 0,018 kg Gallus- säurepropylester 30 Min. bei 80°C geknetet. Die homogene Mischung wurde erst tiefgefroren, dann

[1] N-Methylmorpholin-N-oxid
[2] vollentsalztes

gemahlen und in ein Vorratsgefäß gefüllt, das an einen Doppelschneckenextruder mit zwei Entgasungszonen und gleichlaufenden Schnecken angeschlossen ist. Die pulverisierte Mischung wurde über eine Dosierdoppelschnecke kontinuierlich dem auf 100°C beheizten Extruder zugeführt. In den Entgasungszonen wurde bei einem Druck von 100 mbar die Schmelze entgast, wobei Luft und insgesamt 1,796 kg Wasser entfernt wurden. Die entstehende Spinnlösung wurde filtriert und mittels einer Meßpumpe einer auf 120°C beheizten Hohlfadenspinndüse zugeführt, die in einem Abstand von 70 mm über der Fällbadoberfläche angeordnet war. Der Außendurchmesser der Düsenbohrung betrug 1140 µm, der von der Kernnadel 830 µm. Als hohlraumbildende Flüssigkeit diente Isopropylmyristat. Als Fällbad wurde VE-Wasser von 40°C verwendet. Die Abzugsgeschwindigkeit betrug 200 m/min und der Verzug 6,68. Der Hohlfaden wurde zunächst mit VE-Wasser gewaschen, dann mit einer Lösung aus 30 Gew% Glycerin, 20 Gew% Isopropanol und 50 Gew% Wasser behandelt und bei 50°C getrocknet. Der auf diese Verfahrensweise erhaltene Hohlfaden wies folgende Eigenschaften auf:

| | | |
|---|---|---|
| Festigkeit (cN/tex) | trocken: | 17,5 |
| | naß: | 9,5 |
| Dehnung (%) | trocken: | 11,5 |
| | naß: | 9,8 |
| Modul (cN/tex) | trocken: | 415 |
| | naß: | 120 |
| Kristallitorientierung in Hohlfadenlängsrichtung: | | 0,93 |
| Kristallanteil (%): | | 75 |
| Verhältnis Kristallitlänge zu Kristallitbreite | | 3 |
| Innendurchmesser (µm): | | 200 |
| Wanddicke (µm): | | 18 |
| UFR-Wasser (ml/hm$^2$mm Hg) | | |
| nach 2 Tagen Lagerung: | | 70 |
| nach 100 Tagen Lagerung: | | 65 |
| Siebkoeffizient-Cytochrom C | | |
| nach 2 Tagen Lagerung: | | 0,85 |
| nach 100 Tagen Lagerung: | | 0,80 |
| Siebkoeffizient-Albumin | | |
| nach 2 Tagen Lagerung: | | 0,08 |
| nach 100 Tagen Lagerung: | | 0,05 |

Zur Beurteilung des Einflusses der Alterung auf die Kristallinität und die Kristallitdimension wurden Röntgenweitwinkelspektren an isotropierten Proben (glycerinhaltig) nach dem 2. bzw. 100. Tag Lagerung in Transmission aufgenommen (Abb. 1 und 2). Aus den Spektren kann man entnehmen, daß die Membranen hinsichtlich oben genannter Parameter alterungsstabil sind.

Die mikroskopischen Untersuchungen (s. Abb. 3, 4, 5, 6, 7) weisen auf eine poröse Membran mit einer Hautbildung auf der Außenseite hin.

Zur Bestimmung der Porosität und Porengröße von Kapillarmembranen wurden die Proben in Nanoplast eingebettet. Anschließend wurden am Ultramikrotom etwa 90 nm dicke Schnitte angefertigt.

Die Schnitte wurden im Transmissionsmikroskop (Philips CM12) untersucht und bei einer Vergrößerung von 55000 : 1 über den gesamten Membranquerschnitt fotografiert.

Die Querschnittsaufnahmen wurden mittels Computerbildanalyse (Quantimeter 970) bezüglich der Parameter freie Porenfläche und mittlere freie Weglänge ausgewertet.

Die freie Porenfläche $F_p$ (Abb. 8) wird nach Gleichung 3 berechnet:

$$F_p = \frac{\text{Porenfläche}}{\text{Gesamtfläche}} \qquad \text{Gleichung 3}$$

Für die Porengröße wurde die mittlere freie Weglänge ($\Lambda$) in der Porenstruktur bestimmt, die definiert ist als der Mittelwert der Abstände zwischen den Porengrenzen. Für ihre Messung mit der Bildanalyse wurde eine große Zahl von parallelen Meßlinien (Abb. 9) angelegt und ihre Längenverteilung innerhalb der als Poren identifizierten Flächen bestimmt.

Abb. 10 zeigt den Verlauf der Porengröße in einer Hohlfasermembran gemäß der Erfindung. Die Haut an der Außenfläche besitzt unmittelbar auf ihrer Oberfläche nur winzige Poren, deren Größe unter 10 nm liegt. In Richtung Innenwand steigt die Porengröße schnell auf über 50 nm an und bewegt sich dann entsprechend dem Kurvenverlauf auf ca. 30 nm auf der Innenwand zu. Die Poren auf der Oberfläche der Innenwand sind deutlich größer als die auf der Haut der Außenwand. Ein Großteil der Poren, gerechnet von der Innenwand an, d.h. mehr als 75 % ist größer als die Poren auf der Innenwand.

Abb. 11 zeigt den gleichen Kurvenverlauf, aufgetragen auf einen Membranschnitt als Hintergrund.

Abb. 12 zeigt den porösen Flächenanteil. Die Porosität auf der Außenoberfläche ist äußerst gering, steigt dann ähnlich wie auch die Porengröße schnell an und fällt dann zurück auf etwa 40 %. Daraus ist ersichtlich, daß die Innenoberfläche porös ist, wogegen die Außenoberfläche erheblich dichter ist.

Abb. 13 zeigt den gleichen Kurvenverlauf auf einem Membranschnitt als Hintergrund.

**Vergleichsbeispiel**

Bei dem Versuch, Beispiel 3 der DE-C2-3 021 943 nachzuarbeiten, war mit der dort angegebenen Cellulose von DP 795 keine spinnfähige Lösung zu bekommen. Daher wurde eine 14 und eine 17 %ige Lösung hergestellt, ansonsten aber gemäß der Vorschrift von Beispiel 3 gearbeitet.

Es wurden folgende Membraneigenschaften gefunden:

| | | |
|---|---|---|
| Cellulosegehalt der Spinnlösung (%) | 14 | 17 |
| Verzug | 4,8 | 4,5 |
| UFR-Wasser, nach 2 Tagen Lagerung | 8,5 ml/hm$^2$mm Hg | 2,4 |
| Siebkoeffizient-Cytochrom C, nach 2 Tagen Lagerung | 0,15 | 0,08 |
| Siebkoeffizient-Albumin, nach 2 Tagen Lagerung | 0,02 | 0,02 |
| Kristallitorientierung: | | 0,87 |
| Kristallanteil (%): | | 50 |
| Verhältnis Kristallitlänge zu Kristallitbreite: | | 3,25 |

Die mikroskopische Untersuchung (s. Abb. 14, 15, 16, 17) bestätigt auch, daß es sich dabei um eine sehr dichte Membran handelt. Die Porengrößen können nur abgeschätzt werden und liegen weit unter 10 nm. Die Bestimmung der Porosität ist mittels Computerbildanalyse auf Grund der sehr kleinen Poren nicht möglich.

**Beispiel 2**

In einem beheizbaren 50 l Kneter wurden 23,982 kg NMMO, 1,800 kg Linters Cellulose, 5,996 kg VE-Wasser und 0,018 kg Gallussäurepropylester 30 Min. bei 80°C geknetet. Die homogene Mischung wurde erst tiefgefroren, dann gemahlen und in ein Vorratsgefäß gefüllt, das an einen Doppelschneckenextruder mit zwei Entgasungszonen und gegenläufigen Schnecken angeschlossen ist. Die pulverisierte Mischung wurde über eine Dosierdoppelschnecke kontinuierlich dem auf 100°C beheizten Extruder zugeführt. In den Entgasungszonen wurde bei einem Druck von 100 mbar die Schmelze entgast, wobei Luft und insgesamt 1,796 kg Wasser entfernt wurden. Die entstehende Spinnlösung wurde filtriert und mittels einer Meßpumpe einer auf 120°C beheizten Hohlfadenspinndüse zugeführt, die in einem Abstand von 110 mm über der Fällbadoberfläche angeordnet war. Der Außendurchmesser der Düsenbohrung betrug 1140 µm, der von der Kernnadel 830 µm. Als hohlraumbildende Flüssigkeit diente Isopropylmyristat. Als Fällbad wurde VE-Wasser von 40°C verwendet. Die Abzugsgeschwindigkeit betrug 200 m/min und der Verzug 9,43. Der Hohlfaden wurde zunächst mit VE-Wasser gewaschen, dann mit einer Lösung aus 15 Gew% Glycerin, 35 Gew% Isopropanol und 50 Gew% Wasser behandelt und bei 50°C getrocknet. Der auf diese Verfahrensweise erhaltene Hohlfaden wies folgende Eigenschaften auf:

| | |
|---|---|
| Innendurchmesser (µm) | 195 |
| Wanddicke (µm) | 20 |
| UFR-Wasser (ml/hm$^2$mm Hg) | 33 |
| Siebkoeffizient-Cytochrom C | 0,64 |
| Siebkoeffizient-Albumin | 0,05 |

**Beispiel 3**

In einem beheizbaren 50 l Kneter wurden 23,982 kg NMMO, 1,350 kg Linters Cellulose, 0,450 kg Benzylcellulose mit einem DS[3] von 0,24, 5,996 kg VE-Wasser und 0,018 kg Gallussäurepropylester 30 Min. bei 80°C geknetet. Die homogene Mischung wurde erst tiefgefroren, dann gemahlen und in ein Vorratsgefäß gefüllt, das an einen Doppelschneckenextruder mit zwei Entgasungszonen und gegenläufigen Schnecken angeschlossen war. Die pulverisierte Mischung wurde über eine Dosierdoppelschnecke kontinuierlich dem auf 100°C beheizten Extruder zugeführt. In den Entgasungszonen wurde bei einem Druck von 100 mbar die Schmelze entgast, wobei Luft und ingesamt 1,796 kg Wasser entfernt wurden. Die entstehende Spinnlösung wurde filtriert und mittels einer Meßpumpe einer auf 120°C beheizten Hohlfadenspinndüse zugeführt, die in einem Abstand von 110 mm über der Fällbadoberfläche angeordnet war. Der Außendurchmesser der Düsenbohrung betrug 1140 µm, der von der Kernnadel 830 µm. Als hohlraumbildende Flüssigkeit diente Isopropylmyristat. Als Fällbad wurde VE-Wasser von 40°C verwendet. Die Abzugsgeschwindigkeit betrug 200 m/min und der Verzug 9,43. Der Hohlfaden wurde zunächst mit VE-Wasser gewaschen, dann mit einer Lösung aus 15 Gew% Glycerin, 35 Gew% Isopropanol und 50 Gew% Wasser behandelt und bei 50°C getrocknet. Der auf diese Verfahrensweise erhaltene Hohlfaden wies eine poröse Struktur mit einer maximalen Porengröße von 15 bis 20 nm und einer etwas dichteren jedoch noch offenen Außen- und Innenoberfläche auf (s. Abb. 18, 19, 20) und zeigte folgende Eigenschaften:

| | |
|---|---|
| Innendurchmesser (µm) | 195 |
| Wanddicke (µm) | 24 |
| UFR-Wasser (ml/hm$^2$mm Hg) | 57 |
| Siebkoeffizient-Cytochrom C | 0,66 |
| Siebkoeffizient-Albumin | 0,016 |

Die Kapillarmembranen wurden zu Testkörpern (Dialysatoren) von 1,2 m$^2$ Fläche verarbeitet und ihre Biokompatibilitätseigenschaften geprüft. Folgende Ergebnisse wurden erhalten:

[3] Modifizierungsgrad bzw. Substitutionsgrad

| | |
|---|---|
| C5a-Aktivierung (ng/ml) | 19 (N=9) |
| TAT (ng/ml) | 15 (N=9) |
| PC (%) | 85 (N=9) |
| Heparin (U/m,l) | 4,1 (N=9) |

Cuprophan (Vergleich)

| | |
|---|---|
| C5a-Aktivierung (ng/ml) | 601 (N=9) |
| TAT (ng/ml) | 17 (N=9) |
| PC (%) | 77 (N=9) |
| Heparin (U/ml) | 4,0 (N=9) |

Aus diesen Ergebnissen geht eindeutig hervor, daß die modifizierten Membranen eine sehr gute Biokompatibilität aufweisen.

**Beispiel 4**

In einem beheizbaren 50 l Kneter wurden 23,982 kg NMMO, 1,350 kg Linters Cellulose, 0,450 kg Benzylcellulose mit einem DS von 0,18, 5,996 kg VE-Wasser und 0,018 kg Gallussäurepropylester 30 Min. bei 80°C geknetet. Die homogene Mischung wurde erst tiefgefroren, dann gemahlen und in ein Vorratsgefäß gefüllt, das an einen Doppelschneckenextruder mit zwei Entgasungszonen und gegenläufigen Schnecken angeschlossen ist. Die pulverisierte Mischung wurde über eine Dosierdoppelschnecke kontinuierlich dem auf 100°C beheizten Extruder zugeführt. In den Entgasungszonen wurde bei einem Druck von 100 mbar die Schmelze entgast, wobei Luft und insgesamt 1,796 kg Wasser entfernt wurden. Die entstehende Spinnlösung wurde filtriert und mittels einer Meßpumpe einer auf 120°C beheizten Hohlfadenspinndüse zugeführt, die in einem Abstand von 110 mm über der Fällbadoberfläche angeordnet war. Der Außendurchmesser der Düsenbohrung betrug 1140 µm, der von der Kernnadel 830 µm. Als hohlraumbildende Flüssigkeit diente Isopropylmyristat. Als Fällbad wurde VE-Wasser von 40°C verwendet. Die Abzugsgeschwindigkeit betrug 200 m/min und der Verzug 9,43. Der Hohlfaden wurde zunächst mit VE-Wasser gewaschen, dann mit einer Lösung aus 15 Gew% Glycerin, 35 Gew% Isopropanol und 50 Gew% Wasser behandelt und bei 50°C getrocknet. Der auf diese Verfahrensweise erhaltene Hohlfaden wies eine poröse Struktur mit einer maximalen Porengröße von 15 bis 20 nm und einer dichteren jedoch noch offenen Außen- und Innenoberfläche auf (s. Abb. 18, 21, 22) und zeigte folgende Eigenschaften:

| | |
|---|---|
| Innendurchmesser (µm) | 200 |
| Wanddicke (µm) | 13 |
| UFR-Wasser (ml/hm$^2$mm Hg) | 61 |
| Siebkoeffizient-Cytochrom C | 0,70 |
| Siebkoeffizient-Albumin | 0,06 |

Die Kapillarmembranen wurden zu Testkörpern (Dialysatoren) von 1,2 m$^2$ Fläche verarbeitet und ihre Biokompatibilitätseigenschaften geprüft. Folgende Ergebnisse wurden erhalten:

| | |
|---|---|
| C5a-Aktivierung (ng/ml) | 27 (N=9) |
| TAT (ng/ml) | 18 (N=9) |
| PC (%) | 80 (N=9) |
| Heparin (U/ml) | 3,9 (N=9) |

Cuprophan (Vergleich)

| | |
|---|---|
| C5a-Aktivierung (ng/ml) | 601 (N=9) |
| TAT (ng/ml) | 17 (N=9) |
| PC (%) | 77 (N=9) |
| Heparin (U/ml) | 4,0 (N=9) |

Aus diesen Ergebnissen geht eindeutig hervor, daß die modifizierten Membranen eine sehr gute Biokompatibilität aufweisen.

**Beispiel 5**

In einem beheizbaren 50 l Kneter wurden 23,982 kg NMMO, 1,350 kg Linters Cellulose, 0,450 kg Cellulosedodecenylsuccinat mit einem DS von 0,37, 5,996 kg VE-Wasser und 0,018 kg Gallussäurepropylester 30 Min. bei 80°C geknetet. Die homogene Mischung wurde erst tiefgefroren, dann gemahlen und in ein Vorratsgefäß gefüllt, das an einen Doppelschneckenextruder mit zwei Entgasungszonen und gegenläufigen Schnecken angeschlossen ist. Die pulverisierte Mischung wurde über eine Dosierdoppelschnecke kontinuierlich dem auf 100°C beheizten Extruder zugeführt. In den Entgasungszonen wurde bei einem Druck von 100 mbar die Schmelze entgast, wobei Luft und insgesamt 1,796 kg Wasser entfernt wurden. Die entstehende Spinnlösung wurde filtriert und mittels einer Meßpumpe einer auf 120°C beheizten Hohlfadenspinndüse zugeführt, die in einem Abstand von 110 mm über der Fällbadoberfläche angeordnet war. Der Außendurchmesser der Düsenbohrung betrug 1140 µm, der von der Kernnadel 830 µm. Als hohlraumbildende Flüssigkeit diente Isopropylmyristat. Als Fällbad wurde VE-Wasser von 40°C verwendet. Die Abzugsgeschwindigkeit betrug 200 m/min und der Verzug 9,43. Der Hohlfaden wurde zunächst mit VE-Wasser gewaschen, dann mit einer Lösung aus 15 Gew% Glycerin, 35 Gew% Isopropanol und 50 Gew% Wasser behandelt und bei 50°C getrocknet. Der auf diese Verfahrensweise erhaltene Hohlfaden wies eine noch deutlich erkennbare Porosität mit einer maximalen Porengröße von 10 bis 15 nm auf (s. Abb. 18) und zeigte folgende Eigenschaften:

| | |
|---|---|
| Innendurchmesser (µm) | 200 |
| Wanddicke (µm) | 13 |
| UFR-Wasser (ml/hm$^2$mm Hg) | 37 |
| Siebkoeffizient-Cytochrom C | 0,57 |
| Siebkoeffizient-Albumin | 0,004 |

Die Kapillarmembranen wurden zu Testkörpern (Dialysatoren) von 1,2 m$^2$ Fläche verarbeitet und ihre Biokompatibilitätseigenschaften geprüft. Folgende Ergebnisse wurden erhalten:

| | |
|---|---|
| C5a-Aktivierung (ng/ml) | < 10 (N=9) |
| TAT (ng/ml) | 14 (N=9) |
| PC (%) | 91 (N=9) |
| Heparin (U/ml) | 4,8 (N=9) |

Cuprophan (Vergleich)

| | |
|---|---|
| C5a-Aktivierung (ng/ml) | 601 (N=9) |
| TAT (ng/ml) | 17 (N=9) |
| PC (%) | 77 (N=9) |
| Heparin (U/ml) | 4,0 (N=9) |

Aus diesen Ergebnissen geht eindeutig hervor, daß die modifizierten Membranen eine sehr gute Biokompatibilität aufweisen.

**Beispiel 6**

In einem beheizbaren 50 l Kneter wurden 23,280 kg NMMO, 2,550 kg Linters Cellulose, 0,450 kg des Copolymers Polymethacrylsäurebutylmethacrylat, 5,830 kg VE-Wasser und 0,018 kg Gallussäurepropylester 30 Min. bei 80°C geknetet. Die homogene Mischung wurde erst tiefgefroren, dann gemahlen und in ein Vorratsgefäß gefüllt, das an einen Doppelschneckenextruder mit zwei Entgasungszonen und gegenläufigen Schnecken angeschlossen ist. Die pulverisierte Mischung wurde über eine Dosierdoppelschnecke kontinuierlich dem auf 100°C beheizten Extruder zugeführt. In den Entgasungszonen wurde bei einem Druck von 100 mbar die Schmelze entgast, wobei Luft und insgesamt 2,280 kg Wasser entfernt wurden. Die entstehende Spinnlösung wurde filtriert und mittels einer Meßpumpe einer auf 120°C beheizten Hohlfadenspinndüse zugeführt, die in einem Abstand von 110 mm über der Fällbadoberfläche angeordnet war. Der Außendurchmesser der Düsenbohrung betrug 1140 μm, der von der Kernnadel 830 μm. Als hohlraumbildende Flüssigkeit diente Isopropylmyristat. Als Fällbad wurde VE-Wasser von 40°C verwendet. Die Abzugsgeschwindigkeit betrug 120 m/min und der Verzug 5,2. Der Hohlfaden wurde zunächst mit VE-Wasser gewaschen, dann mit einer Lösung aus 15 Gew% Glycerin, 35 Gew% Isopropanol und 50 Gew% Wasser behandelt und bei 50°C getrocknet. Der auf diese Verfahrensweise erhaltene Hohlfaden wies eine poröse Struktur mit einer maximalen Porengröße von <5 nm auf (s. Abb. 18) und zeigte folgende Eigenschaften:

| | |
|---|---|
| Innendurchmesser (μm) | 225 |
| Wanddicke (μm) | 25 |
| UFR-Wasser (ml/hm$^2$mm Hg) | 17 |
| Siebkoeffizient-Cytochrom C | 0,17 |
| Siebkoeffizient-Albumin | 0,005 |

Die Kapillarmembranen wurden zu Testkörpern (Dialysatoren) von 1,2 m$^2$ Fläche verarbeitet und ihre Biokompatibilitätseigenschaften geprüft. Folgende Ergebnisse wurden erhalten:

| | |
|---|---|
| C5a-Aktivierung (ng/ml) | 72 (N=9) |
| TAT (ng/ml) | 45 (N=9) |
| PC (%) | 69 (N=9) |
| Heparin (U/ml) | 3,7 (N=9) |

Cuprophan (Vergleich)

| | |
|---|---|
| C5a-Aktivierung (ng/ml) | 601 (N=9) |
| TAT (ng/ml) | 17 (N=9) |
| PC (%) | 77 (N=9) |
| Heparin (U/ml) | 4,0 (N=9) |

Aus diesen Ergebnissen geht eindeutig hervor, daß die modifizierten Membranen eine sehr gute Biokompatibilität aufweisen.

**Beispiele 7 - 8**

Nach gleicher Verfahrensweise wie Beispiel in 1 wurden aus einer Cellulose-Spinnlösung Kapillarmembranen versponnen, mit Avivage unterschiedlicher Zusammensetzung behandelt und ihre Dialyseleistung geprüft. Die Ergebnisse sind in der Tabelle 1 aufgeführt.

Tabelle 1

| Beispiel | Avivsgezusammensetzung (Gew%) | $UFR_{Wasser}$ ml/h $m^2$mm Hg | $Siebk_{cc}$ | $Siebk_{Albumin}$ |
|---|---|---|---|---|
| 7 | Glycerin:IPA:Wasser = 40 : 10 : 50 | 101 | 0,91 | 0,09 |
| 8 | PEG 4000:IPA:Wasser = 20 : 30 : 50 | 73 | 0,83 | 0,07 |

**Beispiel 9**

Aus der Spinnlösung von Beispiel 1 wurde nach gleicher Verfahrensweise ein Hohlfaden gesponnen, mit Wasser von 85°C gefällt, danach mit Wasser gewaschen, mit einer Mischung aus Glycerin (30 Gew%), Isopropanol (20 Gew%) und Wasser (50 Gew%) aviviert und bei 50°C getrocknet. Der Hohlfaden zeigt folgende Dialyseeigenschaften:

| | |
|---|---|
| UFR-Wasser (ml/hm$^2$mm Hg): | 160 |
| Siebkoeffizient-Cytochrom C: | 0,95 |
| Siebkoeffizient-Albumin: | 0,22 |

**Beispiel 10**

Auf der Grundlage von Beispiel 1 wurde eine NMMO-Spinnlösung mit 8 % Benzylcellulose-Gehalt vom DS = 0,24 hergestellt und zu Hohlfäden versponnen. Der Abstand der Spinndüse zur Fällbadoberfläche betrug 130 mm. Das Fällmedium war Wasser von 40°C. Der Hohlfaden wurde nach dem Waschen mit Wasser mit einer Mischung aus 20 Gew% Glycerin, 30 Gew% Isopropanol und 50 Gew% Wasser behandelt und bei 50°C getrocknet. Der Innendurchmesser des Hohlfadens betrug 210 µm und die Wanddicke 17 µm. Der Hohlfaden wurde zu Testkörpern verarbeitet, an denen folgende Daten ermittelt wurden:

| | |
|---|---|
| UFR-Wasser (ml/h $m^2$mm Hg): | 90 |
| Siebkoeffizient-Cytochrom C: | 0,82 |
| Siebkoeffizient-Albumin: | 0,08 |

Im Vergleich zur unmodifizierten Cellulosemembran ist die $C_{5a}$-Aktivierung um mehr als 98 % reduziert. Die Thrombogenität und die Heparinabsorption liegen in der gleichen Größenordnung wie bei Cuprophan.

**Beispiel 11**

Aus einer NMMO-Spinnlösung mit 6 % Polymergehalt, der aus 75 Gew% Linters Cellulose und 25 Gew% Benzylcellulose vom DS = 0,24 bestand, wurden nach gleicher Verfahrensweise wie Beispiel 1 Kapillarmembranen mit einem Innendurchmesser von 194 µm und einer Wanddicke von 19 µm erhalten. Die aus diesen Hohlfäden gefertigten Testkörper zeigten folgende Dialyseeigenschaften:

| | |
|---|---|
| UFR-Wasser (ml/h$m^2$mm Hg): | 94 |
| Siebkoeffizient-Cytochrom C: | 0,80 |
| Siebkoeffizient-Albumin: | 0,09 |

Im Vergleich zur unmodifizierten Cellulosemembran ist die $C_{5a}$-Aktivierung um 97 % vermindert. Die Thrombogenität und die Heparinabsorption liegen in der gleichen Größenordnung wie bei Cuprophan.

**Beispiel 12**

11,991 kg NMMO, 0,900 kg Benzylcellulose mit einem DS von 0,19, 2,998 kg VE-Wasser und 0,010 kg Gallussäurepropylester wurden in einem dem Extruder vorgeschalteten Kneter gut vermischt. Das Gemisch wurde über eine Dosierdoppelschnecke kontinuierlich dem auf 100°C beheizten Extruder zugeführt. In der Entgasungszone wurde bei 100 mbar die Schmelze entgast, wobei Luft und 0,898 kg Wasser entfernt wurden. Die entstehende Spinnlösung wurde filtriert und mittels einer Meßpumpe einer auf 120°C beheizten Hohlfadenspinndüse zugeführt, die in einem Abstand von 5 mm über der Fällbadoberfläche angeordnet war. Als Fällbad wurde Wasser von 60°C verwendet. Als hohlraumbildende Flüssigkeit diente Isopropylmyristat. Die Abzugsgeschwindigkeit betrug 250 m/min. Der Hohlfaden wurde zunächst mit VE-Wasser gewaschen, dann mit einer Lösung aus 15 Gew% Glycerin, 35 Gew% Isopropanol und 50 Gew% Wasser behandelt und bei 50°C getrocknet. Der auf diese Verfahrensweise erhaltene Hohlfaden wies folgende Eigenschaften auf:

| | |
|---|---|
| Innendurchmesser: | 200 µm |
| Wanddicke: | 10 µm |
| UFR-Wasser (ml/hm$^2$mm Hg): | 98 |
| Siebkoeffizient-Cytochrom C: | 0,82 |
| Siebkoeffizient-Albumin: | 0,08 |

Im Vergleich zur unmodifizierten Cellulosemembran ist die $C_{5a}$-Aktivierung um 93 % vermindert. Die Thrombogenität und die Heparinabsorption liegen in der gleichen Größenordnung wie bei Cuprophan.

**Beispiel 13**

In einem beheizbaren 600 ml Duplex-Kneter mit Destillationsaufsatz wurden 23,4 g Benzylcellulose (DS = 0,24) mit 3,9 % Feuchtigkeit, 226,7 g NMMO mit 14 % Wassergehalt, 16,1 g VE-Wasser und 0,225 g Gallussäurepropylester 20 Min. bei 80°C geknetet. Danach wurden bei 120 mbar und 100°C innerhalb von 30 Min. 16,3 g Wasser abdestilliert. Die Lösung wurde mit Hilfe eines Folienziehgerätes zu Flachmembranen verarbeitet. Als Fällmedium diente Wasser von 20°C. Die Membranen wurden mit Wasser gründlich gewaschen, mit einer Lösung von 10 Gew% Glycerin, 40 Gew% Ethanol und 50 Gew% Wasser behandelt, auf einen Rahmen aufgespannt und bei 22°C getrocknet. Die auf diese Verfahrensweise hergestellte Flachmembran war 22 µm dick und wies folgende Eigenschaften auf:

| | |
|---|---|
| UFR-Wasser (ml/h m$^2$mm Hg): | 55 |
| Siebkoeffizient-Cytochrom C: | 0,76 |
| Siebkoeffizient-Albumin: | 0,04 |

Im Vergleich zu unmodifizierter Membran ist die $C_{5a}$-Aktivierung um über 95 % reduziert. Die Thrombogenität und die Heparinabsorption liegen in der gleichen Größenordnung wie bei Cuprophan.

**Beispiele 14 - 24**

Analog dem Beispiel 13 wurden aus Benzylcellulose, Cellulosedodecenylsuccinat, Cellulosebutylcarbamat, Cellulose-2-hydroxytetradecylether, Cellulose-3-trimethoxysilyl-2-hydroxypropylether sowie aus Gemischen von Cellulose mit Benzylcellulose, Olivenöl, Eicosyl/docosylamin, Stearinsäure und Polymethacrylsäurebutylmethacrylat Spinnlösungen mit 10 % Polymergehalt hergestellt, zu Flachmembranen verarbeitet und auf ihre Biokompatibilitätseigenschaften geprüft.

Die Ergebnisse sind in der Tabelle 2 zusammengestellt.

Tabelle 2

| Beispiel | Membran | $C_{5a}$-Reduktion bezogen auf unmod. Cellulosemembran (%) |
|---|---|---|
| 14 | Benzylcellulose (DS=0,07) | 88,5 |
| 15 | Benzylcellulose (DS=0,09)/Cellulose (5:95) | 74,5 |
| 16 | Benzylcellulose (DS=0,09)/Cellulose (20:80) | 89,0 |
| 17 | Cellulosedodecenylsuccinat (DS=0,10) | 97,0 |
| 18 | Cellulosebutylcarbamat (DS=0,70) | 94,0 |
| 19 | Cellulose-2-hydroxytetradecylether (0,06) | 79,0 |
| 20 | Cellulose-3-trimethoxysilyl-2-hydroxy-propylether (0,05) | 68,0 |
| 21 | Cellulose/Olivenöl (85:15) | 86,6 |
| 22 | Cellulose-Eicosyl-Docosylamin (80:20) | 77,3 |
| 23 | Cellulose/Stearinsäure (85:15) | 70,8 |
| 24 | Cellulose/Polymethacryläurebutylmethacrylat (85:15) | 94,6 |

Die Thrombogenität und die Heparinabsorption liegen in der gleichen Größenordnung wie bei Cuprophan.

**Beispiel 25**

In einem beheizbaren 600 ml Duplex-Kneter mit Destillationsaufsatz wurden 16,86 g (0,1 Mol) Linters Cellulose mit 3,9% Feuchtigkeit, 7,5 g (0,05 Mol) 1,2-Epoxy-3-phenoxypropan, 1 g Natriumhydroxid, 0,15 g Gallussäurepropylester, 19,3 g VE-Wasser und 280,9 g NMMO mit 14,5 % Wassergehalt 3 Stunden bei 85°C gerührt. Danach wurden bei 120 mbar und 100°C innerhalb von 45 Min. 16,3 g Wasser abdestilliert. Die Lösung wurde mit Hilfe eines Folienziehgerätes zu Flachmembranen verarbeitet. Als Fällbad diente Wasser von 40°C. Die Membranen wurden mit Wasser, Ethanol und Wasser gründlich gewaschen, mit einer Lösung aus 40 Gew% Glycerin, 10 Gew% Isopropanol und 50 Gew% Wasser behandelt, auf einen Rahmen aufgespannt und bei 22°C getrocknet. Die auf diese Verfahrensweise hergestellte Flachmembran hatte einen DS von 0,11, war 15 µm dick und zeigte im Vergleich zu unmodifizierter Membran eine um 81 % verminderte $C_{5a}$-Aktivierung. Die Thrombogenität und die Heparinabsorption liegt in der gleichen Größenordnung wie bei Cuprophan.

**Beispiele 26 - 37**

Analog dem Beispiel 13 wurden aus Cellulose-NMMO-Lösungen mit 14 % Cellulosegehalt Flachmembranen hergestellt. Als Fällmedien dienten Wasser, ein organisches Lösungsmittel oder ein Gemisch von diesen. Die Membranen wurden mit VE-Wasser gewaschen und mit einem Gemisch aus Glycerin, Ethanol und Wasser unterschiedlicher Zusammensetzung behandelt. Es wurden folgende $UFR_{Wasser}$-Werte gemessen (Tabelle 3).

Tabelle 3

| Beispiel | Membrandicke -(μm) | Fällbad | Avivagebad Glycerin/Ethanol/Wasser (Gew%) | $UFR_{Wasser}$ (ml/hm²mm Hg) |
|---|---|---|---|---|
| 26 | 14 | Wasser | 5:45:50 | 25 |
| 27 | 16 | Wasser | 25:25:50 | 118 |
| 28 | 19 | Wasser | 30:20:50 | 149 |
| 29 | 18 | Wasser | 40:10:50 | 154 |
| 30 | 16 | Ethanol | 5:45:50 | 21 |
| 31 | 23 | Ethanol/Wasser = 20:80 | 20:30:50 | 141 |
| 32 | 42 | Propanol | 5:45:50 | 28 |
| 33 | 13 | Propanol/Wasser = 80:20 | 5:45:50 | 22 |
| 34 | 12 | Aceton/Wasser = 80:20 | 5:45:50 | 15 |
| 35 | 15 | Dimethylsulfoxid | 5:45:50 | 46 |
| 36 | 12 | Dimethylsulfoxid/Wasser = 60:40 | 5:45:50 | 39 |
| 37 | 20 | Dimethylsulfoxid/Wasser = 20:80 | 20:30:50 | 127 |

**Beispiele 38 - 44**

Analog dem Beispiel 13 wurden unter Zusatz eines wasserlöslichen Additives NMMO-Lösungen mit 12 % Cellulosegehalt hergestellt und zu Flachmembranen verarbeitet. Als Fällbad diente Wasser von 20°C. Die Membranen wurden mit VE-Wasser gewaschen und vor dem Trocknen mit einem Gemisch aus Glycerin, Ethanol und Wasser (5:45:50 Gew%) behandelt. Folgende $UFR_{Wasser}$-Werte wurden gemessen (Tabelle 4).

Tabelle 4

| Beispiel | Additiv 20 % bez.auf Cellulose | Membrandicke (μm) | $UFR_{Wasser}$ (ml/h m²mm Hg) |
|---|---|---|---|
| 38 | Ethylenglykol | 18 | 55 |
| 39 | Glycerin | 17 | 40 |
| 40 | PEG 200 | 18 | 44 |
| 41 | PEG 600 | 16 | 46 |
| 42 | PEG 1000 | 16 | 48 |
| 43 | PEG 4000 | 16 | 53 |
| 44 | D(-)Sorbit | 14 | 54 |

**Beispiele 45 - 48**

Analog dem Beispiel 13 wurden NMMO-Lösungen aus einem Gemisch von Cellulose mit Benzylcellulose (DS = 0,18), Diethylaminoethylcellulose (DS = 0,40), Polyacrylnitril und Polymethacrylsäurebutylmethacrylat mit 10 % Polymergehalt hergestellt und zu Flachmembranen verarbeitet. Als Fällbad diente Wasser von 20°C. Die Membranen wurden mit VE-Wasser gewaschen und vor dem Trocknen mit Glycerin/Ethanol/Wasser-Gemisch (5:45:50 Gew%) behandelt. Folgende $UFR_{Wasser}$-Werte wurden gemessen (Tabelle 5).

Tabelle 5

| Beispiel | Membran | Membran-dicke (μm) | $UFR_{Wasser}$ (ml/h $m^2$mm Hg) |
|---|---|---|---|
| 45 | Cellulose/Benzylcellulose (70:30) | 14 | 34 |
| 46 | Cellulose/Diethylaminoethylcellulose (95:5) | 15 | 46 |
| 47 | Cellulose/Polyacrylnitril (90:10) | 11 | 85 |
| 48 | Cellulose/Polymethacrylsäurebutyl methacrylat (90:10) | 10 | 42 |

**Beispiel 49**

Analog dem Beispiel 13 wurde eine NMMO-Spinnlösung aus einem Gemisch von Zellstoff und Carboxyethylcellulose vom DS = 0,10 (90:10 Gew%) mit 8 % Polymergehalt hergestellt und zu Flachmembranen verarbeitet. Als Fällbad diente Wasser von 60°C. Die Membranen wurden mit VE-Wasser gewaschen und vor dem Trocknen mit einem Gemisch aus Glycerin, Ethanol und Wasser (20:30:50 Gew%) behandelt. Die Membrandicke betrug 18 μm und der $UFR_{Wasser}$-Wert 357 ml/h $m^2$mm Hg.

**Beispiel 50**

Die Membranen vom Beispiel 49 wurden vor dem Trocknen mit einem Glycerin/Ethanol/Wasser-Gemisch (20:30:50 Gew%), das 5 Gew% Glycidether enthielt, eine Stunde bei 20°C behandelt, auf einen Rahmen aufgespannt, erst bei 22°C vorgetrocknet und dann bei 60°C 24 Stunden ausgehärtet. Die Membrandicke betrug 19 μm und der $UFR_{Wasser}$-Wert 500 - 600 ml/h $m^2$mm Hg.

**Beispiele 51 - 55**

Analog dem Beispiel 1 wurde eine Spinnlösung aus Linters Cellulose und einem Additiv, jeweils 20 % bezogen auf Cellulose, hergestellt und zu Kapillarmembranen verarbeitet. Die nach dieser Verfahrensweise hergestellten Membranen wiesen die in der Tabelle (6) aufgeführten Dialyseeigenschaften auf.

Tabelle 6

| Beispiel | Additive (20 Gew%) | $UFR_{Wasser}$ ml/h $m^2$mm Hg | $Siebk_{cc}$ | $Siebk_{Albumin}$ |
|---|---|---|---|---|
| 51 | Sorbit | 84 | 0,83 | 0,08 |
| 52 | Glycerin | 77 | 0,80 | 0,07 |
| 53 | Polyvinylpyrrolidon | 77 | 0,80 | 0,09 |
| 54 | Mikrokrystalline Cellulose | 40 | 0,67 | 0,04 |
| 55 | PEG 1000 | 66 | 0,89 | 0,09 |

**Beispiele 56 - 61**

Analog dem Beispiel 3 wurde eine NMMO-Spinnlösung mit 6% Polymergehalt, der aus 75 Gew% Linters Cellulose und 25 Gew% Benzylcellulose mit einem DS von 0,24 bestand, hergestellt und zu Kapillarmembranen versponnen. Zur

Koagulation wurden Fällmedien unterschiedlicher Zusammensetzung verwendet (s. Tab. 7). Der Abstand zwischen Spinndüse und Fällbadoberfläche betrug 100 mm. Als hohlraumbildende Flüssigkeit diente Isopropylmyristat. Die Kapillarmembranen wurden zunächst mit VE-Wasser gewaschen, dann mit einer Lösung aus 20 Gew% Glycerin, 30 Gew% Isopropanol und 50 Gew% Wasser behandelt und bei 50°C getrocknet. Die auf diese Verfahrensweise hergestellten Membranen wiesen die in der Tabelle 7 aufgeführten Dialyseeigenschaften auf.

Tabelle 7

| Beispiel | Fällmedium | Fällbadtemp. (°C) | Abzugsgeschw. (m/min) | $UFR_{Wasser}$ ml/h $m^2$mm Hg | $Siebk_{cc}$ | $Siebk_{Albumin}$ |
|---|---|---|---|---|---|---|
| 56 | Wasser/NMMO 80/20 | 40 | 150 | 85 | 0,81 | 0,09 |
| 57 | Wasser/NMMO 90/10 | 40 | 200 | 55 | 0,82 | 0,08 |
| 58 | Ethanol | 22 | 200 | 67 | 0,70 | 0,01 |
| 59 | Isopropanol | 22 | 100 | 120 | 0,92 | 0,20 |
| 60 | Wasser/NMP 90/10 | 21 | 100 | 64 | 0,85 | 0,09 |
| 61 | Wasser/DMSO 90/10 | 29 | 100 | 61 | 0,84 | 0,08 |

Die mikroskopischen Untersuchungen der Membranen der Beispiele 58, 59 und 60 zeigen, daß diese porös sind, wobei die maximale Porengröße vom Beispiel 59 zwischen 30 und 40 nm, die vom Beispiel 58 zwischen 20 und 30 nm und die vom Beispiel 60 zwischen 15 und 20 nm liegt (s. Abb. 23). Demnach wird die Membranstruktur signifikant vom Fällungsmittel beeinflußt. Mit steigender Hydrophilie des Fällungsmittels verdichtet sich bzw. bildet sich eine Haut im Bereich der Außenoberfläche, wie dies anhand der Membran vom Beispiel 58 (s. Abb. 24) gezeigt wird. Die Innenwand ist aufgrund der lipophilen Lumenfüllung offener und großporiger (s. Abb. 25).

**Beispiele 62-70**

Analog dem Beispiel 3 wurde eine NMMO-Spinnlösung mit 6% Polymergehalt, der aus 75 Gew% Linters Cellulose und 25 Gew% Benzylcellulose mit einem DS von 0,24 bestand, hergestellt und zu Kapillarmembranen versponnen. Dabei wurden zur Hohlraumbildung (Lumenfüllung) Flüssigkeiten unterschiedlicher Zusammensetzung verwendet. Der Abstand zwischen Spinndüse und Fällbadoberfläche betrug mit Ausnahme der Beispiele 65 (20 mm), 68 (5 mm) und 69 (5 mm) 100 mm. Als Fällbad wurde VE-Wasser von 24 bis 60°C verwendet. Die Abzugsgeschwindigkeit betrug 100 bis 200 m/min. Die Kapillarmembranen wurden zunächst mit VE-Wasser gewaschen, dann mit einer Lösung aus 20 Gew% Glycerin, 30 Gew% Isopropanol und 50 Gew% Wasser behandelt (Ausnahme Beispiel 68; Avivagezusammensetzung: 10 Gew% Glycerin, 40 Gew% Isopropanol und 50 Gew% Wasser) und bei 50°C getrocknet. Die auf diese Verfahrensweise hergestellten Membranen wiesen die in der Tabelle 8 aufgeführten Dialyseeigenschaften auf.

Tabelle 8

| Beispiel | Lumenfüllung | Fällbadtemp. (°C) | Abzugsgeschw. (m/min) | $UFR_{Wasser}$ ml/h $m^2$mm Hg | $Siebk_{cc}$ | $Siebk_{Albumin}$ |
|---|---|---|---|---|---|---|
| 62 | Wasser/NMMO 40/60 | 24 | 200 | 38 | 0,82 | 0,007 |
| 63 | Wasser/NMMO 40/60 | 40 | 200 | 49 | 0,90 | 0,08 |
| 64 | Wasser/NMMO 40/60 | 60 | 200 | 59 | 0,97 | 0,23 |
| 65 | Wasser/NMMO 50/50 | 40 | 100 | 53 | 0,85 | 0,20 |
| 66 | Wasser/NMP 20/80 | 40 | 200 | 44 | 0,92 | 0,05 |
| 67 | Wasser/Glycerin 20/80 + 5% NaCl | 40 | 200 | 46 | 0,65 | 0,06 |
| 68 | PEG 400 | 40 | 200 | 28 | 0,55 | 0,02 |
| 69 | PEG 400 | 40 | 200 | 51 | 0,73 | 0,09 |
| 70 | Wasser/DMSO 20/80 | 40 | 200 | 57 | 0,82 | 0,08 |

Nach den mikroskopischen Untersuchungen sind die Membranen vom Beispiel 67 und 69 porös. Bei den Membranen, die mit einer Innenfüllung aus Glycerin/Wasser/NaCl gesponnen wurden (Beispiel 67), ist im Bereich der Außenoberfläche eine Verdichtung und im Bereich der Innenoberfläche eine Hautbildung zu beobachten (s. Abb. 26,27). Die maximale Porengröße beträgt 30 bis 40 nm (s. Abb. 28). Die mit PEG 400 gesponnenen Membranen (Beispiel 69) weisen an der Außenwand eine Verdichtung und an der Innenwand eine gegenüber der unmittelbar angrenzenden grobporigen Struktur eine leichte Verdichtung auf (s. Abb. 29,30). Die maximale Porengröße liegt zwischen 25 bis 55 nm (s. Abb. 28).

**Beispiele 71-74**

Nach gleicher Verfahrensweise wie in Beispiel 3 wurden aus einer NMMO-Spinnlösung mit 6 % Polymergehalt, der aus 75 Gew% Linters Cellulose und 25 Gew% Benzylcellulose mit einem DS von 0,24 bestand, Kapillarmembranen versponnen. Als Fällbad wurde VE-Wasser von 77°C verwendet. Die Kapillarmembranen wurden mit Avivage unterschiedlicher Zusammensetzung behandelt und ihre Dialyseleistung geprüft. Die Ergebnisse sind in der Tabelle 9 aufgeführt.

Tabelle 9

| Beispiel | Avivagezusammensetzung Glycerin : IPA : Wasser (Gew%) | $UFR_{Wasser}$ (ml/h$m^2$mmHg) | $Siebk._{cc}$ |
|---|---|---|---|
| 71 | 0 : 50 : 50 | 10 | 0,37 |
| 72 | 5 : 45 : 50 | 55 | 0,81 |
| 73 | 10 : 40 : 50 | 90 | 0,91 |
| 74 | 20 : 30 : 50 | 158 | 0,96 |

Die Ergebnisse der Tabelle 9 verdeutlichen, daß die Dialyseleistung der Membranen sehr stark von der Zusammensetzung der Avivage abhängt. Sie nimmt mit steigendem Glyceringehalt sehr stark zu. Überraschenderweise weist aber auch die Membran, die nicht mit Glycerin behandelt wurde, eine signifikant höhere Dialyseleistung als die behandelten Membranen der DE-C2-3021943 auf. Dies deutet auf eine poröse und stabile Membranstruktur hin.

**Beispiele 75 - 82**

Nach gleicher Verfahrensweise wie in Beispiel 3 wurden NMMO-Spinnlösungen mit unterschiedlichem Polymergehalt hergestellt und zu Kapillarmembranen versponnen. Das Polymer bestand aus 75 Gew% Linters Cellulose und 25 Gew% Benzylcellulose mit einem DS von 0,24. Der Abstand der Spinndüse zur Fällbadoberfläche betrug 110 mm. Als hohlraumbildende Flüssigkeit diente Isopropylmyristat. Als Fällbad wurde VE-Wasser von 26 bis 80°C verwendet. Die Abzugsgeschwindigkeit betrug 200 m/min. Die Kapillarmembranen wurden zunächst mit VE-Wasser gewaschen, dann mit einer Lösung aus 20 Gew% Glycerin, 30 Gew% Isopropanol und 50 Gew% Wasser behandelt und bei 50°C getrocknet. Die Membranen wiesen die in der Tabelle 10 aufgeführten Dialyseeigenschaften auf.

Tabelle 10

| Beispiel | Polymergehalt der Spinnlösung(%) | Fällbadtemp. (°C) | $UFR_{Wasser}$ (ml/hm$^2$mmHg) | Siebk.$_{cc}$ | Siebk.$_{Albumin}$ |
|---|---|---|---|---|---|
| 75 | 6 | 26 | 49 | 0,67 | 0,013 |
| 76 | 6 | 40 | 59 | 0,81 | 0,07 |
| 77 | 6 | 60 | 113 | 0,85 | 0,21 |
| 78 | 8 | 40 | 28 | 0,45 | 0,005 |
| 79 | 8 | 60 | 39 | 0,59 | 0,009 |
| 80 | 8 | 80 | 51 | 0,70 | 0,10 |
| 81 | 10 | 60 | 9 | 0,30 | 0,003 |
| 82 | 10 | 80 | 12 | 0,45 | 0,03 |

Die Ergebnisse der Tabelle 10 zeigen einen starken Anstieg der Dialyseleistung der Membranen mit fallendem Polymergehalt der Spinnlösung und steigender Temperatur des Fällbades.

Die mikroskopischen Untersuchungen der Membranen von Beispiel 78 und 80 zeigen ferner, daß die Membranen porös sind und daß die Porengröße mit steigender Temperatur des Fällbades signifikant zunimmt (s. Abb. 31). Die maximale Porengröße der Membranen vom Beispiel 80 liegt zwischen 45 und 50 nm und die vom Beispiel 78 zwischen 20 und 30 nm.

**Beispiele 83 - 88**

Analog dem Beispiel 3 wurde eine NMMO-Spinnlösung mit 6% Polymergehalt, der aus 75 Gew% Linters Cellulose und 25 Gew% Benzylcellulose bestand, hergestellt und zu Kapillarmembranen versponnen. Dabei wurde die Abzugsgeschwindigkeit zwischen 50 und 300 m/min variiert. Der Abstand zwischen Spinndüse und Fällbadoberfläche betrug 70 mm. Als hohlraumbildende Flüssigkeit diente Isopropylmyristat. Als Fällbad wurde VE-Wasser von 40 bis 80°C verwendet. Die Membranen wurden zunächst mit VE-Wasser gewaschen, dann mit einer Lösung aus 20 Gew% Glycerin, 30 Gew% Isopropanol und 50 Gew% Wasser behandelt und bei 50°C getrocknet. Die auf diese Verfahrensweise hergestellten Membranen wiesen die in der Tabelle 11 aufgeführten Dialyseeigenschaften auf.

Tabelle 11

| Beispiel | Abzugsgeschw. m/min | Verzug | Fällbadtemp.°C | $UFR_{Wasser}$ ml/hm$^2$mmHg | Siebk.$_{CC}$ | $f_c$ | $X_c$ % |
|---|---|---|---|---|---|---|---|
| 83 | 50 | 6,68 | 40 | 65 | 0,80 | 0,304 | 55 |
| 84 | 100 | 6,68 | 40 | 61 | 0,81 | 0,735 | 59 |
| 85 | 100 | 6,68 | 80 | 112 | 0,97 | 0,199 | 55 |
| 86 | 200 | 6,68 | 40 | 59 | 0,81 | 0,791 | 55 |
| 87 | 200 | 6,68 | 80 | 96 | 0,95 | 0,297 | 54 |
| 88 | 300 | - | 40 | 74 | 0,78 | | |
| $X_c$ = Kristallanteil | | | | | | | |

Wie den Ergebnissen der Tabelle 11 zu entnehmen ist, nimmt die Kristallitorientierung mit steigender Abzugsgeschwindigkeit zu und mit steigender Temperatur des Fällbades ab. Mit abnehmender Kristallitorientierung ($f_c$) steigt die Dialyseleistung der Membranen überraschenderweise stark an.

**Beispiel 89**

Nach gleicher Verfahrensweise wie in Beispiel 3 wurden aus einer NMMO-Spinnlösung mit 5 % Polymergehalt, der aus 95 Gew% Linters Cellulose und 5 Gew% Benzylcellulose mit einem DS von 0,31 bestand, Kapillarmembranen versponnen. Als Fällmedium wurde VE-Wasser von 85°C verwendet. Die Kapillarmembranen wurden zunächst mit VE-Wasser und danach mit Aceton gewaschen. Die acetonfeuchten Membranen wurden mit einer 7%igen acetonischen Toluylendiisocyanat-Lösung behandelt und in einem Trockenschrank unter Stickstoff und Luftfeuchtigkeitsausschluß 3 Stunden bei 40°C erwärmt. Anschließend wurden die Membranen gründlich mit kaltem und warmem Ethanol gewaschen, mit einer Lösung aus 30 Gew% Glycerin, 20 Gew% Isopropanol und 50 Gew% Wasser behandelt und bei 50°C getrocknet. Der Innendurchmesser der Membran betrug 200 µm, die Wanddicke 16 µm und der $UFR_{Wasser}$-Wert 350 ml/hm$^2$mm Hg.

**Beispiel 90**

Analog dem Beispiel 3 wurde eine NMMO-Spinnlösung mit 30 % Polymergehalt, der aus 65 Gew% Linters Cellulose mit einem DP von 350 und 35 Gew% Benzylcellulose mit einem DS von 0,20 und einem DP von 270 bestand, hergestellt und zu Kapillarmembranen versponnen. Der Abstand zwischen Spinndüse und Fällbadoberfläche betrug 180 mm. Als Fällbad wurde VE-Wasser von 85°C verwendet. Die Abzugsgeschwindigkeit betrug 200 m/min. Die Kapillarmembranen wurden mit VE-Wasser von 70°C gewaschen, mit einer Lösung aus 35 Gew% Glycerin, 15 Gew.% Isopropanol und 50 Gew% Wasser behandelt und bei 50°C getrocknet. Der Innendurchmesser der Membran betrug 230 µm, die Wanddicke 35 µm und der $UFR_{Wasser}$-Wert 9 ml/hm$^2$mm Hg.

**Beispiel 91**

Analog dem Beispiel 3 wurde eine NMMO-Spinnlösung mit 7 % 3-Butoxi-2-hydroxipropylcellulose vom DS 0,20 hergestellt und zu Kapillarmembranen versponnen. Als Fällbad wurde VE-Wasser von 60°C verwendet. Der Abstand zwischen Spinndüse und Fällbadoberfläche betrug 160 mm. Die Abzugsgeschwindigkeit betrug 100 m/min. Als Innenfüllung diente Isospropylmyristat. Zwecks Waschens wurden die Kapillarmembranen durch mehrere hintereinandergeschaltete Wasserbäder von 80°C geführt, mit einer Lösung aus 10 Gew% Glycerin, 40 Gew% Isopropanol und 50 Gew% Wasser behandelt, onduliert, getrocknet und mit Hilfe eines Flyers zu Bündeln von 1,3 m$^2$ Fläche verarbeitet. Die Bündel wurden mit Isopropanol extrahiert, mit einem Gemisch aus Glycerin und Isopropanol (10:90) aviviert und im Stickstoffstrom getrocknet. Die auf diese Verfahrensweise hergestellten Kapillarmembranen enthielten nach den analytischen Untersuchungen weder NMMO noch Isopropylmyristat oder andere extrahierbare Bestandteile außer Glycerin.

**Beispiel 92**

Analog dem Beispiel 3 wurde eine NMMO-Spinnlösung mit 14 % Benzylcellulose vom DS = 0,15 hergestellt und zu Kapillarmembranen versponnen. Als Fällbad wurde VE-Wasser von 70°C verwendet. Der Abstand zwischen Spinndüse und Fällbadoberfläche betrug 185 mm und die Spinngeschwindigkeit 200 m/min. Als Innenfüllung diente Isopropylmyristat. Die Kapillarmembranen wurden im Gegenstrom mit VE-Wasser von 70°C vorgewaschen, auf eine Restfeuchtigkeit von 140% getrocknet, onduliert und zu Bündeln von 1,3 $m^2$ verarbeitet. Die Bündel wurden mit Isopropanol extrahiert, mit einem Gemisch aus Glycerin und Isopropanol (25 : 75) aviviert und im Stickstoffstrom getrocknet. Nach der Extraktion war in den Bündeln weder NMMO noch Isopropylmyristat analytisch nachweisbar.

**Beispiel 93**

Analog dem Beispiel 3 wurde eine NMMO-Spinnlösung mit 9 % Polymergehalt, der aus 70 Gew% Linters Cellulose und 30 Gew% 3-Phenoxi-2-hydroxi-propylcellulose bestand, hergestellt und zu Kapillarmembranen versponnen. Als Fällbad wurde Ethanol von 25°C verwendet. Der Abstand zwischen Spinndüse und Fällbadoberfläche betrug 140 mm und die Abzugsgeschwindigkeit 200 m/min.

Als hohlraumbildende Flüssigkeit diente eine Lösung aus 60 Gew% NMMO und 40° Gew% Wasser. Die Kapillarmembranen wurden durch ein ethanolisches Bad von 25°C geführt, auf ein Wickelrad aufgewickelt und anschließend zu Bündeln von 1,3 $m^2$ verarbeitet. Die Bündel wurden mit Ethanol extrahiert, mit einem Gemisch aus Glycerin und Ethanol (15:85) aviviert und im Stickstoffstrom getrocknet. In den Bündeln war nach der Extraktion kein NMMO mehr nachweisbar.

**Beispiel 94**

Analog dem Beispiel 3 wurde eine NMMO-Spinnlösung mit 6 % Benzylcellulosegehalt vom DS = 0,28 hergestellt und zu Kapillarmembranen versponnen. Als Fällbad wurde VE-Wasser von 80°C verwendet. Der Abstand zwischen Spinndüse und Fällbadoberfläche betrug 120 mm. Die Spinndüse befand sich in einem geschlossenen Raum, in dem eine rel. Luftfeuchte von 87 % und eine Temperatur von 40°C herrschte. Als Innenfüllung diente Isopropylmyristat. Die Abzugsgeschwindigkeit betrug 200 m/min. Die Kapillarmembranen wurden im Gegenstrom mit VE-Wasser gewaschen, auf eine Restfeuchtigkeit von 100 % getrocknet, onduliert und zu Bündeln verarbeitet. Die Bündel wurden mit Isopropanol extrahiert, mit einem Gemisch aus Glycerin und Isopropanol (5:95) aviviert und im Stickstoffstrom getrocknet. Die Bündel enthielten nach der Extraktion kein NMMO oder Isopropylmyristat mehr.

**Beispiel 95**

Nach gleicher Verfahrensweise wie in Beispiel 3 wurden aus einer NMMO-Spinnlösung mit 6 % Polymergehalt, der aus 75 Gew% Linters Cellulose und 25 Gew% Benzylcellulose mit einem DS von 0,28 bestand, Kapillarmembranen versponnen. Als Fällbad wurde VE-Wasser von 40°C verwendet. Der Abstand zwischen Spinndüse und Fällbadoberfläche betrug 100 mm, die Spinngeschwindigkeit 200 m/min und der Verzug 9,43. Als Lumenfüllung diente Isopropylmyristat. Die Kapillarmembranen wurden mit VE-Wasser gewaschen, dann mit einer Lösung aus 20 Gew% Glycerin, 30 Gew% Isopropanol und 50 Gew% Wasser behandelt und bei 50°C getrocknet. Die auf diese Verfahrensweise hergestellten Membranen wiesen folgende Eigenschaften auf:

| | |
|---|---|
| Kristallitorientierung: | 0,78 |
| Kristallanteil (%): | 60 |
| Verhältnis Kristallitlänge zu Kristallitbreite: | 3,21 |
| Innendurchmesser (μ): | 175 |
| Wanddicke (μm): | 25 |
| UFR-Wasser (ml/hm$^2$mm Hg): | 88,1 |
| Siebkoeffizient-Cytochrom C: | 0,85 |
| Siebkoeffizient-Albumin: | 0,10 |

**Beispiel 96**

Nach gleicher Verfahrensweise wie in Beispiel 95, jedoch mit dem Unterschied, daß der Verzug 10,75 betrug, wurden Kapillarmembranen hergestellt und geprüft. Sie wiesen folgende Eigenschaften auf:

| | |
|---|---|
| Kristallitorientierung: | 0,83 |
| Kristallanteil (%): | 60 |
| Verhältnis Kristallitlänge zu Kristallitbreite: | 3,78 |
| Innendurchmesser (μ): | 177 |
| Wanddicke (μm): | 16 |
| UFR-Wasser (ml/hm$^2$mm Hg): | 99 |
| Siebkoeffizient-Cytochrom C: | 0,83 |
| Siebkoeffizient-Albumin: | 0,10 |

**Beispiel 97**

Nach gleicher Verfahrensweise wie in Beispiel 95, jedoch mit dem Unterschied, daß der Verzug 7,55 betrug, wurden Kapillarmembranen hergestellt und geprüft. Sie wiesen folgende Eigenschaften auf:

| | |
|---|---|
| Kristallanteil(%): | 58 |
| Innenwand (μm): | 177 |
| Wanddicke (μm): | 25 |
| UFR-Wasser (ml/h m$^2$mmHg): | 76 |
| Siebkoeffizient-Cytochrom C: | 0,84 |
| Siebkoeffizient-Albumin: | 0,07 |

**Beispiele 98-110**

Analog dem Beispiel 13 wurden aus Celluloseacetat, Cellulosepropionat, Cellulosebutyrat, Cellulosestearat, Cellulosebenzoat, Cellulosephenylacetat, Cellulosephthalat, Cellulosebutylcarbamat, Celluloseoctadecylcarbamat und Cellulosetolylcarbamat NMMO-Lösungen mit 6% Polymergehalt hergestellt, zu Flachmembranen verarbeitet und auf ihre Biokompatibilitätseigenschaften geprüft.

Die Ergebnisse sind in der Tabelle 12 zusammengestellt.

Tabelle 12

| Beispiel | Membran | $C_{5a}$-Reduktion bezogen auf unmod. Cellulosemembran (%) |
|---|---|---|
| | Linters Cellulose/Cellulose-2,5-acetat (50:50) | 50 |
| 98 | Cellulose-1,4-propionat | 83 |
| 99 | Cellulose-1,1-butyrat | 95 |
| 100 | Cellulose-0,08-stearat | 97 |
| 101 | Cellulose-0,04-stearat | 93 |
| 102 | Cellulose-0,55-benzoat | 86 |
| 103 | Cellulose-0,65-phenylacetat | 91 |
| 104 | Cellulose-0,80-phthalat | 96 |
| 105 | Cellulose-1,70-phthalat | 98 |
| 106 | Cellulose-0,80-butylcarbamat | 95 |
| 107 | Cellulose-1,00-butylcarbamat | 97 |
| 108 | Cellulose-0,03-octadecylcarbamat | 65 |
| 109 | Cellulose-0,07-octadecylcarbamat | 82 |
| 110 | Cellulose-0,20-tolylcarbamat | 96 |

Die Thrombogenität und die Heparinabsorption liegen in der gleichen Größenordnung wie bei Cuprophan.

**Beispiel 111**

Analog dem Beispiel wurde unter Zusatz von Natriumcarbonat (20 % bezogen auf das Polymer) eine NMMO-Lösung mit 6% Benzylcellulosegehalt vom DS = 0,24 hergestellt und zu Flachmembranen verarbeitet. Als Fällbad diente eine 1%ige, 65°C warme, wäßrige Schwefelsäurelösung. Die Membranen wurden mit VE-Wasser gewaschen und vor dem Trocknen mit einem Gemisch aus Glycerin, Ethanol und Wasser (5:45:50 Gew%) behandelt. Die auf diese Verfahrensweise hergestellte Flachmembran war 30 µm dick und wies eine sehr poröse Struktur auf (s. Abb. 32 außen, max. Porengröße 10 - 20 nm; 33 innen, max. Porengröße 20 - 30 nm).

**Patentansprüche**

1. Verfahren zur Herstellung von stabilen und lagerfähigen cellulosischen Dialysemembranen für den low-, middle- oder high-flux Bereich mit UFR-Werten von 4 bis 15, 15 bis 50 oder über 50 ml/hm$^2$mmHg in Form von Flach-, Schlauch- oder Hohlfasermembranen durch Herstellen einer Spinnlösung aus 3 bis 40 Teilen Cellulose mit einem Polymerisationsgrad (DP)> 300 und/oder modifizierter Cellulose mit einem Polymerisationsgrad (DP)> 200, 97 bis 60 Teilen eines Gemisches aus tertiärem Aminoxid und einer oder mehrerer weiterer Flüssigkeiten wie Wasser, Dimethylformamid, Dimethylacetamid, Dimethylsulfoxid, N-Methylpyrrolidon, einem oder mehreren Stabilisatoren, sowie gegebenenfalls einem oder mehreren Porenbildnern, weiteren Spinnlösungsadditiven sowie ggf. niedermolekularer organischer oder anorganischer Verbindungen und/oder synthetischer Polymere, Extrudieren dieser Lösung durch eine Düse in ein Fällbad einer Temperatur von 10-95°C, wobei zwischen Düse und Fällbadoberfläche gegebenenfalls ein Luftspalt vorhanden ist, und man im Falle der Herstellung von Hohlfasermembranen ein hohlraumbildendes Fluid verwendet, wobei die Abzugsgeschwindigkeit mindestens 30, vorzugsweise mindestens 50 m/min beträgt, ein- oder mehrstufiges Waschen bzw. Extrahieren der erhaltenen Membranen zwecks Entfernen des Aminoxids und der löslichen Zusätze auf einen Gehalt von weniger als 10 ppm und gegebenenfalls Behandeln der Membranen in einem Bad, welches einen oder mehrere Porenstabilisatoren enthält, und ggf. Avivieren der Membran, sowie Trocknen und ggf. vor oder nach dem Trocknen Ondulieren der Membranen sowie gegebenenfalls Aufwickeln der Membranen.

2. Verfahren nach Anspruch 1, dadurch gekennzeichnet, daß man als tertiäres Aminoxid N-Methylmorpholin-N-oxid (NMMO) oder Dimethylcyclohexylamin-N-oxid verwendet.

3. Verfahren nach den Ansprüchen 1 oder 2, dadurch gekennzeichnet, daß man die Komponenten für die Spinnlösung in einem Kneter vermischt und anschließend einer Vorrichtung zuführt, in der durch Wasserentzug und/oder Entgasung die Spinnlösung hergestellt wird.

4. Verfahren nach einem der Ansprüche 1 oder 2, dadurch gekennzeichnet, daß man die Komponenten direkt der Vorrichtung zur Herstellung der Spinnlösung zuführt.

5. Verfahren nach einem der Ansprüche 1 bis 3, dadurch gekennzeichnet, daß man die Komponenten für die Spinnlösung in einem Kneter bei 65 bis 95°C vermischt, das Gemisch nach dem Erkalten mahlt und einer Vorrichtung zur Herstellung der Spinnlösung zuführt.

6. Verfahren nach einem der Ansprüche 1 bis 5, dadurch gekennzeichnet, daß die Herstellung der Spinnlösung, d.h. Wasserentzug und/oder Entgasung des Gemisches in einem Extruder und/oder Filmtruder und/oder in einer oder mehreren Flashverdampfungsstufen erfolgt, und die entstandene Spinnlösung mit Hilfe einer Spinnpumpe der Spinndüse zugeführt und versponnen wird.

7. Verfahren nach einem der Ansprüche 1 bis 6, dadurch gekennzeichnet, daß die Abzugsgeschwindigkeit mindestens 100 m/min beträgt.

8. Verfahren nach einem der Ansprüche 1 bis 7, dadurch gekennzeichnet, daß zwischen Düse und Fällbadoberfläche ein Luftspalt von mindestens 1 mm, vorzugsweise mindestens 5 mm Länge vorhanden ist.

9. Verfahren nach einem der Ansprüche 1 bis 8, dadurch gekennzeichnet, daß man in einen zwischen Düse und Fällbad vorhandenen Raum, in dem sich ein konditioniertes Gas oder Gasgemisch befindet, extrudiert.

10. Verfahren nach Anspruch 9, dadurch gekennzeichnet, daß das konditionierte Gas Wasserdampf oder ein Gemisch aus Wasserdampf und gasförmigem Alkohol, Keton, Dimethylacetamid, N-Methylpyrrolidon, Dioxan, Dimethylsulfoxid oder Dimethylformamid ist.

11. Verfahren nach einem der Ansprüche 1 bis 10, dadurch gekennzeichnet, daß das Fällbad ganz oder teilweise aus Wasser, ein- oder mehrwertigen Alkoholen, Ketonen, Dimethylacetamid, N-Methylpyrrolidon, Dimethylsulfoxid, Dimethylformamid, Gemischen dieser Verbindungen oder wäßrigem Aminoxid oder wäßriger Salzlösung besteht.

12. Verfahren nach einem der Ansprüche 1 bis 7 und 11, dadurch gekennzeichnet, daß die Spinndüse in ein Fällbad eintaucht, das eine Temperatur von mindestens 70°C aufweist.

13. Verfahren nach einem der Ansprüche 1 bis 12, dadurch gekennzeichnet, daß die modifizierte Cellulose eine durch die Formel

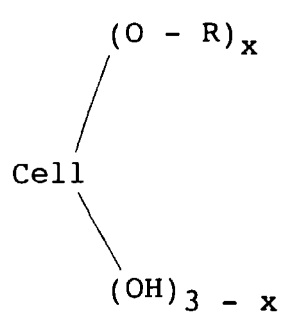

wiedergegebene Etherstruktur aufweist, worin Cell die Monomereinheit der unmodifizierten Cellulose (AGU = anhydroglucose unit) ist, x dem Veretherungsgrad entspricht, der im Bereich von 0,001 bis 2,60 liegt und worin R ein gegebenenfalls substituierter Alkyl-, und/oder Alkenyl- und/oder Cycloalkyl- und/oder Cycloalkenyl- und/oder Arylalkyl- und/oder Arylalkenyl-Rest ist, wobei die Kohlenstoffkette durch Sauerstoff- oder Schwefelatome unterbrochen sein kann.

**14.** Verfahren nach Anspruch 13, dadurch gekennzeichnet, daß der substituierte Rest eine nicht-ionische Gruppe, wie OH oder OR' und/oder SH oder SR' und/oder CN und/oder Halogen und/oder R', eine basische Gruppe, wie $NH_2$ oder NHR' und/oder $NR'_2$ und/oder Piperidin und/oder Morpholin, eine Estergruppe wie COOR und/oder $SO_3R$ und/oder $Si(OR)_3$ enthält, wobei R' = H, Methyl, Ethyl oder R ist.

**15.** Verfahren nach Anspruch 13, dadurch gekennzeichnet, daß der Rest mehr als drei Kohlenstoffatome aufweist und mit einer anionischen Gruppe wie COOH und/oder $SO_3H$ und/oder $OSO_3H$ und/oder $PO_3H$ und/oder $OPO_3H_2$ und/oder $Si(OH)_3$ bzw. als Salz, substituiert ist.

**16.** Verfahren nach einem der Ansprüche 13 bis 15, dadurch gekennzeichnet, daß R eine Benzyl-, Methylbenzyl, Dimethylbenzyl, Methoxybenzyl-, Chlorbenzyl-, Butyl-, Hydroxybutyl-, Hexyl-, Dodecyl-, Hydroxydodecyl-, Octadecyl-, 3-Butoxy-2-hydroxypropyl-, 3-Pentoxy-2-hydroxypropyl-, 3-Phenoxy-2-hydroxypropyl-, Dodecyl-2-hydroxypropylether-, Aminoethyl-, Dimethylaminoethyl-, Diethylaminoethyl-, Diisopropylaminoethyl-, Piperidinoethyl-, Morpholinoethyl-, Dimethylaminopropyl-, Diethylaminopropyl-, 3-Dimethylamino-2-methylpropyl-, Triethylammoniumethyl-, Benzyldiethylammoniumethyl-, Sulfobutyl-, Carboxybutyl-, Carboxyoctadecyl-, Cyanoethyl-, Allyl-, Isobutyl-, Mercaptododecyl-, Dodecylthio-2-hydroxypropyl-ether-, Phenylthio-2-hydroxypropyl-Gruppe ist.

**17.** Verfahren nach einem der Ansprüche 1 bis 12, dadurch gekennzeichnet, daß die modifizierte Cellulose eine durch die Formel

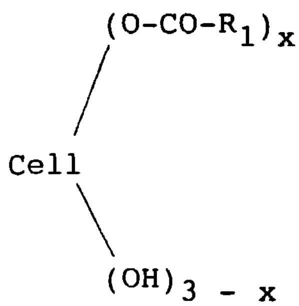

wiedergegebene Esterstruktur aufweist, worin Cell die Monomereinheit der unmodifizierten Cellulose ist, x dem Veresterungsgrad entspricht, der im Bereich von 0,01 bis 2,60 liegt und worin $R_1$ ein gegebenenfalls substituierter Alkyl- und/oder Alkenyl- und/oder Cycloalkyl- und/oder Cycloalkenyl- und/oder Aryl- und/oder Arylalkyl- und/oder Arylalkenyl-Rest ist, und die Kohlenstoffkette durch Sauerstoff oder Schwefelatome unterbrochen sein kann.

**18.** Verfahren nach Anspruch 17, dadurch gekennzeichnet, daß der substituierte Rest eine Gruppe gemäß Anspruch 14 oder 15 enthält.

**19.** Verfahren nach Anspruch 17 oder 18, dadurch gekennzeichnet, daß $R_1$-CO der Rest von Propionsäure, Buttersäure, Capronsäure, Caprylsäure, Caprinsäure, Laurinsäure, Myristinsäure, Palmitinsäure, Stearinsäure, Arachinsäure, Behensäure, Lauroleinsäure, Myristoleinsäure, Palmitoleinsäure, Ölsäure, Erucansäure, Linolsäure, Linolensäure, Eläostearinsäure, Arachidonsäure, Erucasäure, Acrylsäure, Glutarsäure, Adipinsäure, Pimelinsäure, Korksäure, Azelainsäure, Sebacinsäure, Nonandicarbonsäure, Undecandicarbonsäure, Dodecandicarbonsäure, Itaconsäure, Aconitsäure, 5-Norbornen-2,3-dicarbonsäure, Dodecenylbernsteinsäure, Hexadecenylbernsteinsäure, Isovaleriansäure, Isocapronsäure, Önanthsäure, Sorbinsäure, Crotonsäure, 4-Chlorbutansäure, 2-Chlorvaleriansäure, Phenylessigsäure, Benzoesäure, Hydroxybenzoesäure, Toluylsäure, Phthalsäure, Sulfophthalsäure, Naphtalinsäure ist.

**20.** Verfahren zur Herstellung einer Dialysemembran nach Anspruch 1 bis 12, dadurch gekennzeichnet, daß die modifizierte Cellulose eine durch die Formel

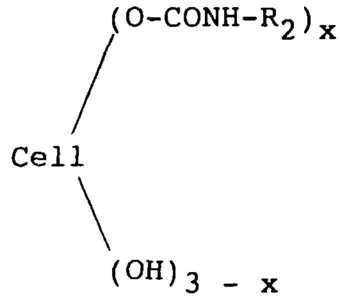

wiedergegebene Carbamatstruktur aufweist, worin Cell die Monomereinheit der unmodifizierten Cellulose ist, x dem Modifizierungsgrad entspricht, der im Bereich von 0,01 bis 2,60 liegt, worin R ein Alkyl- und/oder Alkenyl- und/oder Cycloalkyl- und/oder Cycloalkenyl- und/oder Aryl- und/oder Arylalkyl- und/oder Arylalkenyl- und/oder Naphtyl-Rest ist, der gegebenenfalls mit Gruppen entsprechend Anspruch 14 oder 15 substituiert ist und die Kohlenstoffkette durch Sauerstoff oder Schwefelatome unterbrochen sein kann.

**21.** Verfahren nach Anspruch 20, dadurch gekennzeichnet, daß $R_2$-NHCO der Rest des Substituenten ist, der durch Umsetzung von Cellulose mit Butylisocyanat, 2-Methylpropylisocyanat, Octadecylisocyanat, Phenylisocyanat, Tolylisocyanat, Naphtylisocyanat, Cyclohexanisocyanat, Chlorphenylisocyanat, Chlortolylisocyanat entsteht.

**22.** Verfahren nach einem der Ansprüche 1 bis 12, dadurch gekennzeichnet, daß die Spinnlösung 1 bis 50 Gew% bezogen auf unmodifizierte bzw. modifizierte Cellulose von einem synthetischen Homo- und/oder Copolymer aus Acrylsäureestern und/oder Methacrylsäureestern und/oder Maleinsäureestern mit Acrylsäure und/oder Methacrylsäure und/oder Maleinsäure und/oder Acrylamid und/oder Methacrylamid und/oder Vinylbenzol und/oder Vinylalkohol enthalten kann, wobei im synthetischen Polymer bis zu 40 Mol% freie Carboxylgruppen vorkommen können.

**23.** Verfahren nach einem der Ansprüche 1 bis 12, dadurch gekennzeichnet, daß die Spinnlösung 1 bis 50 Gew% modifiziertes und/oder unmodifiziertes Polyacrylnitril und/oder modifiziertes und/oder unmodifiziertes Polyamid bezogen auf unmodifizierte bzw. modifizierte Cellulose enthalten kann.

**24.** Verfahren nach einem der Ansprüche 1 bis 23, dadurch gekennzeichnet, daß die Spinnlösung 1 bis 50 Gew% einer oder mehrerer organischer niedermolekularer Verbindungen aus der Gruppe der Fettalkohole, Fettsäuren, Fettsäureester oder Fettamine, bezogen auf die gelösten cellulosischen und synthetischen Polymere, enthält.

**25.** Verfahren nach einem der Ansprüche 1 oder 22 bis 24, dadurch gekennzeichnet, daß man das synthetische Polymer oder die organische niedermolekulare Verbindung in einem mit Wasser und/oder tertiärem Aminoxyd mischbaren organischen Lösungsmittel löst und mit der bereits im tertiären Aminoxid gelösten Cellulose bzw. modifizierten Cellulose, welche Lösung ggf. noch weitere Flüssigkeiten, Stabilisatoren, Porenbildner und weitere Spinnlösungsadditive enthält, vor dem Extrudieren vermischt.

**26.** Verfahren nach einem der Ansprüche 1 bis 12 und 22 bis 25, dadurch gekennzeichnet, daß die Spinnlösung bis zu 40 Gew% Spinnadditive bezogen auf die gelösten cellulosischen und synthetischen Polymere enthält.

**27.** Verfahren nach Anspruch 26, dadurch gekennzeichnet, daß als Additiv ein oder mehrere Verbindungen aus der Gruppe Gallussäureester, Phosphonatsalze, Citronensäure, Ascorbinsäure, Manose, Glucose, Sorbit, Maltodextrin, microkristalline Cellulose, Glycerin, Ethylenglykol, Polyethylenglykol, Polyvinylpyrrolidon u.dgl. oder anorganische Salze verwendet werden.

**28.** Verfahren zur Herstellung einer Dialysemembran nach einem der Ansprüche 1 bis 27, dadurch gekennzeichnet, daß die Membran vor dem Trocknen mit einer wäßrigen Lösung von Polyethylenglykol, Polyvinylpyrrolidon und/oder mehrwertigem Alkohol wie Glycerin, Ethylenglykol, Propandiol, Sorbit, Glucose oder deren Gemischen nachbehandelt wird.

**29.** Verfahren nach einem der Ansprüche 1 bis 28, dadurch gekennzeichnet, daß die Membran vor dem Trocknen mit einer Lösung eines Vernetzungsmittels behandelt wird.

**30.** Verfahren zur Herstellung einer Dialysemembran nach Anspruch 29, dadurch gekennzeichnet, daß das Vernetzungsmittel eine Verbindung ist, die mehr als eine Glycidyl-, Isocyanat-, Anhydrid-, Vinyl- und/oder andere Gruppen, die mit OH-Gruppen reagieren, enthält.

**31.** Verfahren zur Herstellung einer Dialysemembran nach einem der Ansprüche 1 bis 30 in Form einer Hohlfasermembran, dadurch gekennzeichnet, daß man eine Hohlfaserdüse verwendet und ein Fluid als Innenfüllung zwecks Bildung des Lumens der Hohlfasermembran verwendet, wobei die Innenfüllung für die Hohlraumbildung eine über 70°C siedende Flüssigkeit wie Fettsäureester, Paraffinöle, hochkonzentrierte wäßrige Aminoxidlösungen, Glycerin, N-Methylpyrrolidon, Dimethylsulfoxid, Dimethylformamid, Polyethylenglycol, Dimethylacetamid oder wäßrige Lösungen derselben Verbindungen oder ein gasförmiger Stoff wie Luft, Stickstoff, Kohlendioxid ist.

**32.** Verfahren zur Herstellung einer Dialysemembran nach einem der Ansprüche 1 bis 12, dadurch gekennzeichnet, daß die Modifizierung der Cellulose direkt in einer Lösung eines tertiären Aminoxids vorgenommen wird.

**33.** Verfahren nach einem oder mehreren der Ansprüche 1 bis 32, dadurch gekennzeichnet, daß man durch Zusatz eines Carbonats zur Spinnlösung und Verwendung eines sauren Fällbades eine Porenbildung in der Membran bewirkt.

**34.** Verfahren nach einem oder mehreren der Ansprüche 1 bis 32, dadurch gekennzeichnet, daß man durch Zusatz eines Ammoniumsalzes zur Spinnlösung und Verwendung eines alkalischen Fällbades eine Porenbildung in der Membran bewirkt.

**35.** Verfahren nach einem oder mehreren der Ansprüche 1 bis 34, dadurch gekennzeichnet, daß man das Waschen oder die Extraktion der Membranen in einem Bad einer Temperatur von 20 bis 95, vorzugsweise 40 - 85°C durchführt.

**36.** Cellulosische Dialysemembranen in Form von Flach-, Schlauch- oder Hohlfasermembranen erhältlich nach einem Verfahren gemäß einem der Ansprüche 1 bis 35.

**37.** Cellulosische Dialysemembranen nach Anspruch 36, dadurch gekennzeichnet, daß die Differenz zwischen der Extinktion des cellulosischen Materials der hergestellten Membran und der Extinktion des zur Herstellung der Spinnlösung verwendeten cellulosischen Materials im Bereich der Wellenlänge von 245 bis 320 nm 0 bis 15 % ist.

**38.** Cellulosische Dialysemembran nach Anspruch 37, dadurch gekennzeichnet, daß die Differenz zwischen den Extinktionen < als 10 % ist.

**39.** Cellulosische Dialysemembran nach einem der Ansprüche 36 bis 38 in Form einer Hohlfasermembran, dadurch gekennzeichnet, daß die Hohlfaser eine Außenwand mit einer dichteren Struktur oder einer Haut mit einer Porengröße unter 10 nm aufweist, eine poröse Innenwand besitzt, wobei die Poren der Innenwand größer sind als die Poren der Außenwand, und daß der zwischen der Innen- und Außenwand liegende Bereich der Membran porös ist.

**40.** Cellulosische Dialysemembran nach einem der Ansprüche 36 bis 38 in Form einer Hohlfasermembran, dadurch gekennzeichnet, daß die Hohlfaser eine poröse Außenwand und eine Innenwand mit einer dichteren Struktur oder einer Haut mit einer Porengröße unter 10 nm besitzt, wobei die Poren der Außenwand größer als die Poren der Innenwand sind, und daß der zwischen der Innenwand und der Außenwand liegende Bereich porös ist.

**41.** Cellulosische Dialysemembran nach einem der Ansprüche 36 bis 38 in Form einer Hohlfasermembran, dadurch gekennzeichnet, daß die Hohlfaser eine Außenwand und eine Innenwand mit einer dichteren Struktur oder einer Haut mit einer Porengröße unter 10 nm besitzt und daß der zwischen der Innenwand und der Außenwand liegende Bereich porös ist.

**42.** Cellulosische Dialysemembran nach einem der Ansprüche 36 bis 38 in Form einer Hohlfasermembran, dadurch gekennzeichnet, daß die Hohlfaser eine poröse Außen- und Innenwand besitzt und daß der zwischen der Innenwand und der Außenwand liegende Bereich porös ist.

**43.** Cellulosische Dialysemembran nach einem der Ansprüche 36 bis 38 in Form einer Hohlfasermembran, dadurch gekennzeichnet, daß die Hohlfaser durchgehend eine Struktur mit Poren unter 10 nm besitzt.

**44.** Cellulosische Dialysemembran für den low-flux Bereich nach einem der Ansprüche 36 bis 43, gekennzeichnet

durch eine Ultrafiltrationsrate von 4 bis 15 ml/h.$m^2$.mmHg.

**45.** Cellulosische Dialysemembran für den middle-flux Bereich nach einem der Ansprüche 36 bis 43, gekennzeichnet durch eine Ultrafiltrationsrate von 15 bis 50 ml/h.$m^2$.mmHg.

**46.** Cellulosische Dialysemembran nach einem der Ansprüche 36 bis 42 für den high-flux Bereich, gekennzeichnet durch eine Ultrafiltrationsrate von 50 bis 500 vzw. 60 bis 300 ml/h.$m^2$.mmHg.

**47.** Cellulosische Dialysemembran nach einem oder mehreren der Ansprüche 36 bis 46, dadurch gekennzeichnet, daß die Membran affine zur Absorption befähigte Gruppen aufweist.

**48.** Verwendung der cellulosischen Dialysemembranen nach einem der Ansprüche 36 bis 47 für die Hämodialyse, Hämofiltration und die Hämodiafiltration.

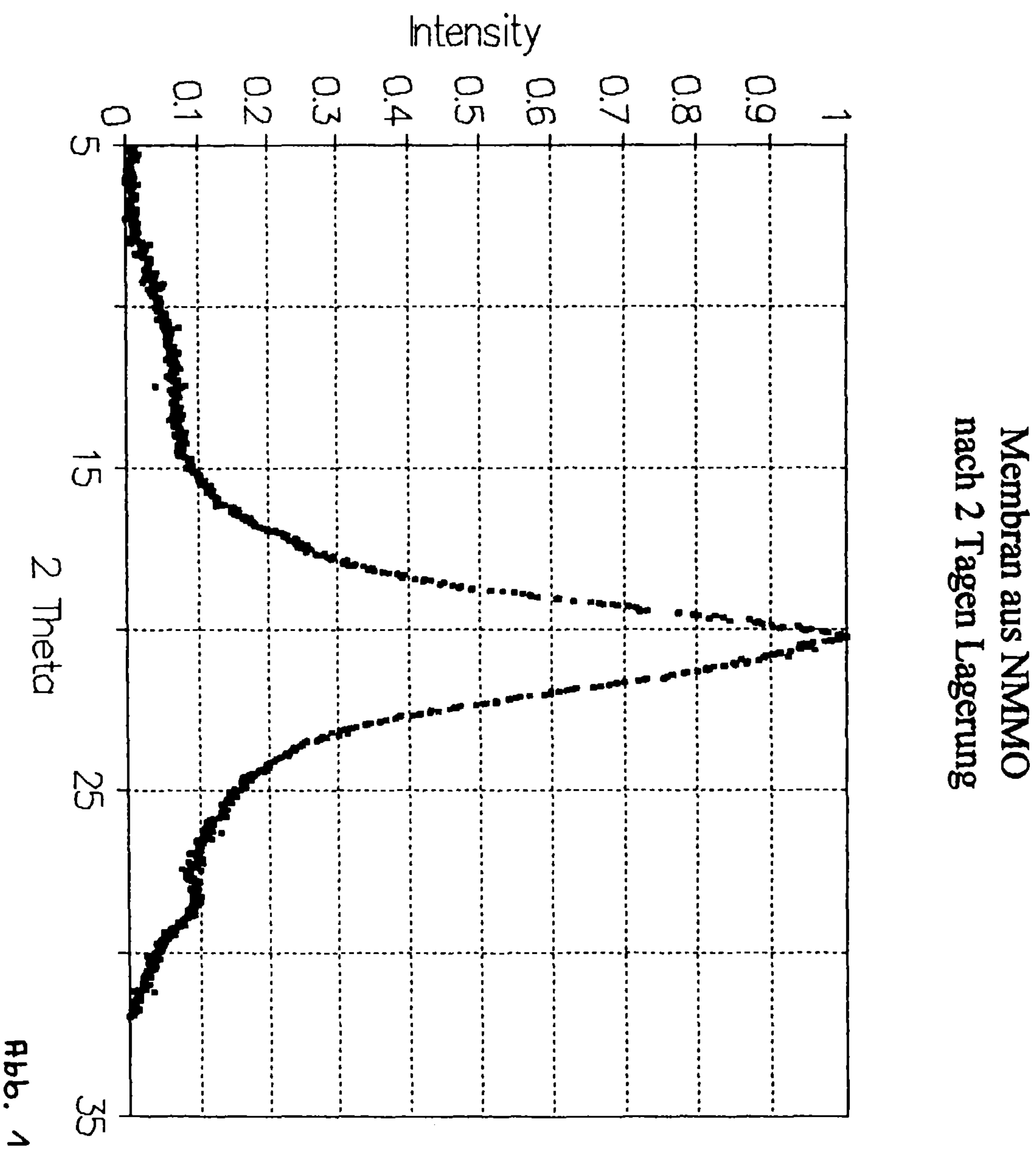
Membran aus NMMO
nach 2 Tagen Lagerung
Intensity
0
0.1
0.2
0.3
0.4
0.5
0.6
0.7
0.8
0.9
1
5
15
25
35
2 Theta

Abb. 1

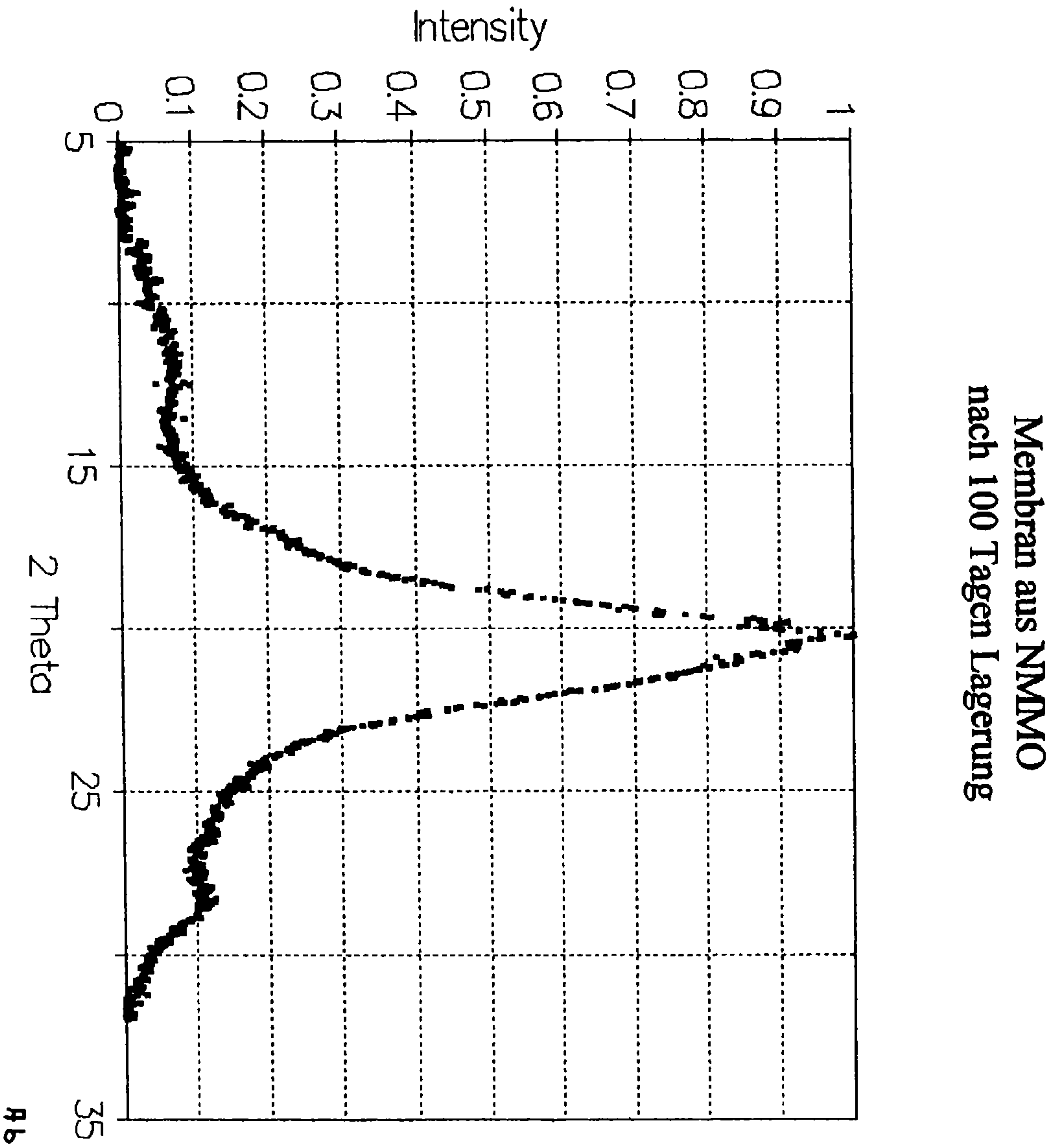
Membran aus NMMO
nach 100 Tagen Lagerung
Intensity
0
0.1
0.2
0.3
0.4
0.5
0.6
0.7
0.8
0.9
1
5
15
25
35
2 Theta

Abb. 2

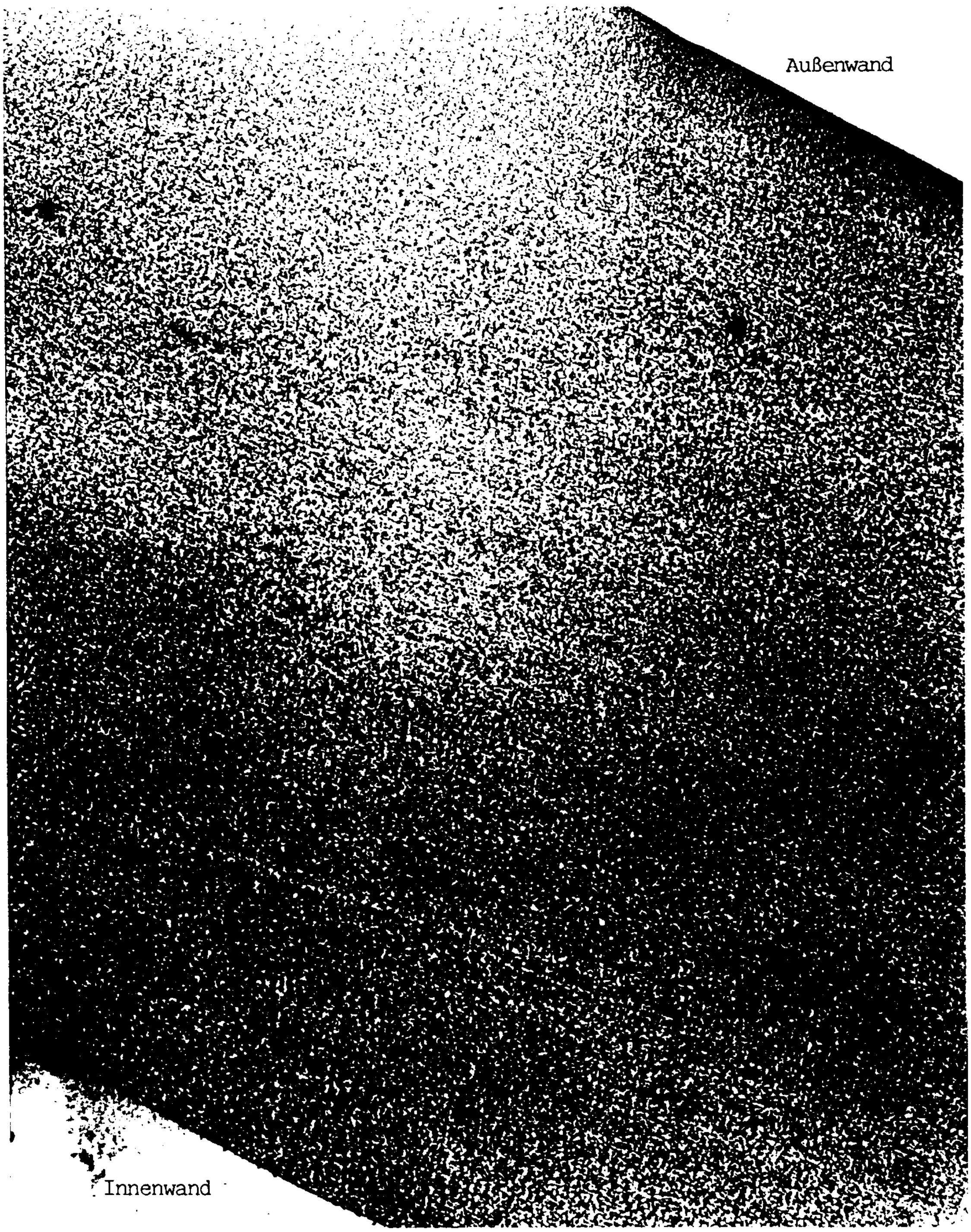


1 : 7500

Abb. 3

1 : 32 500

Abb. 4

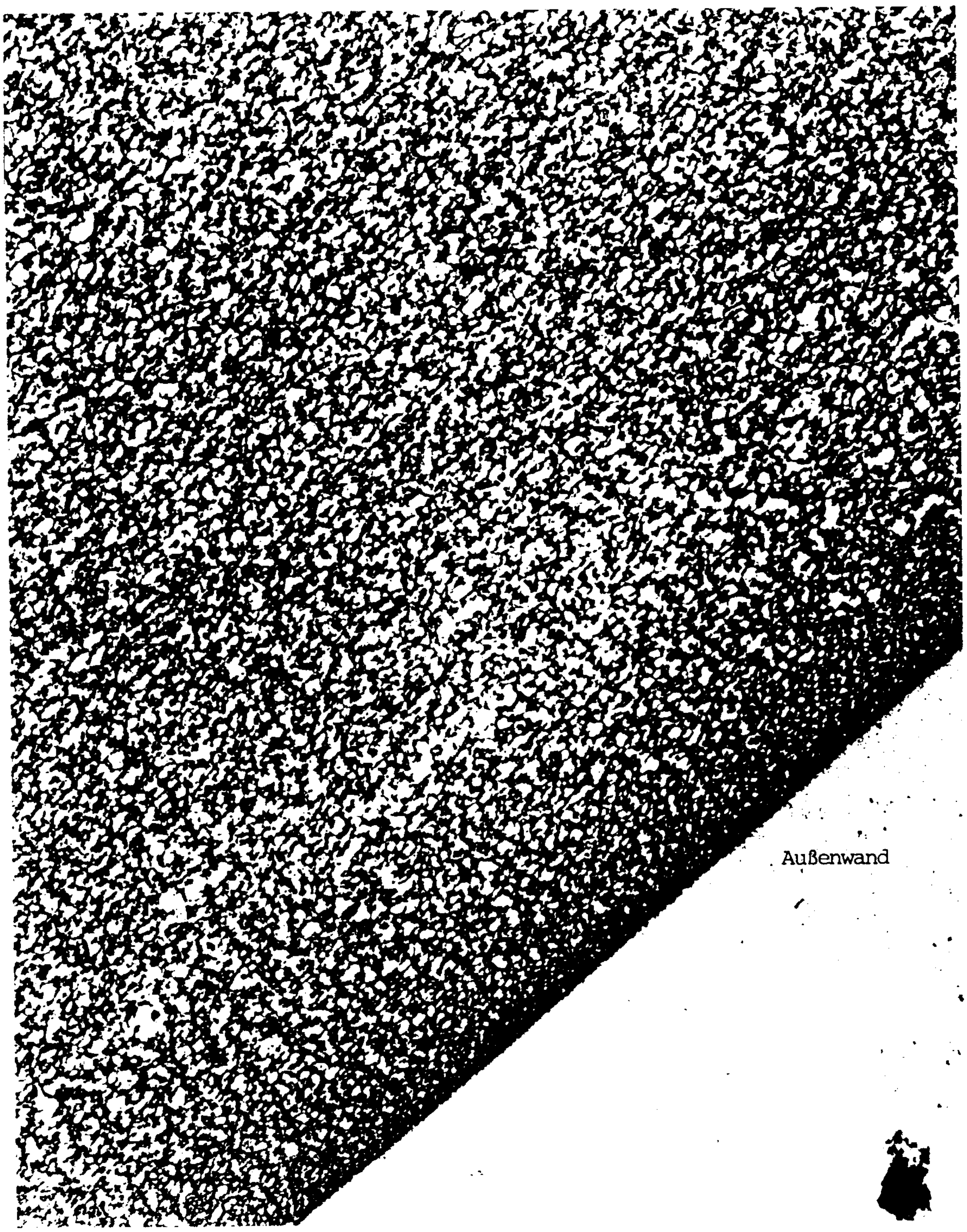

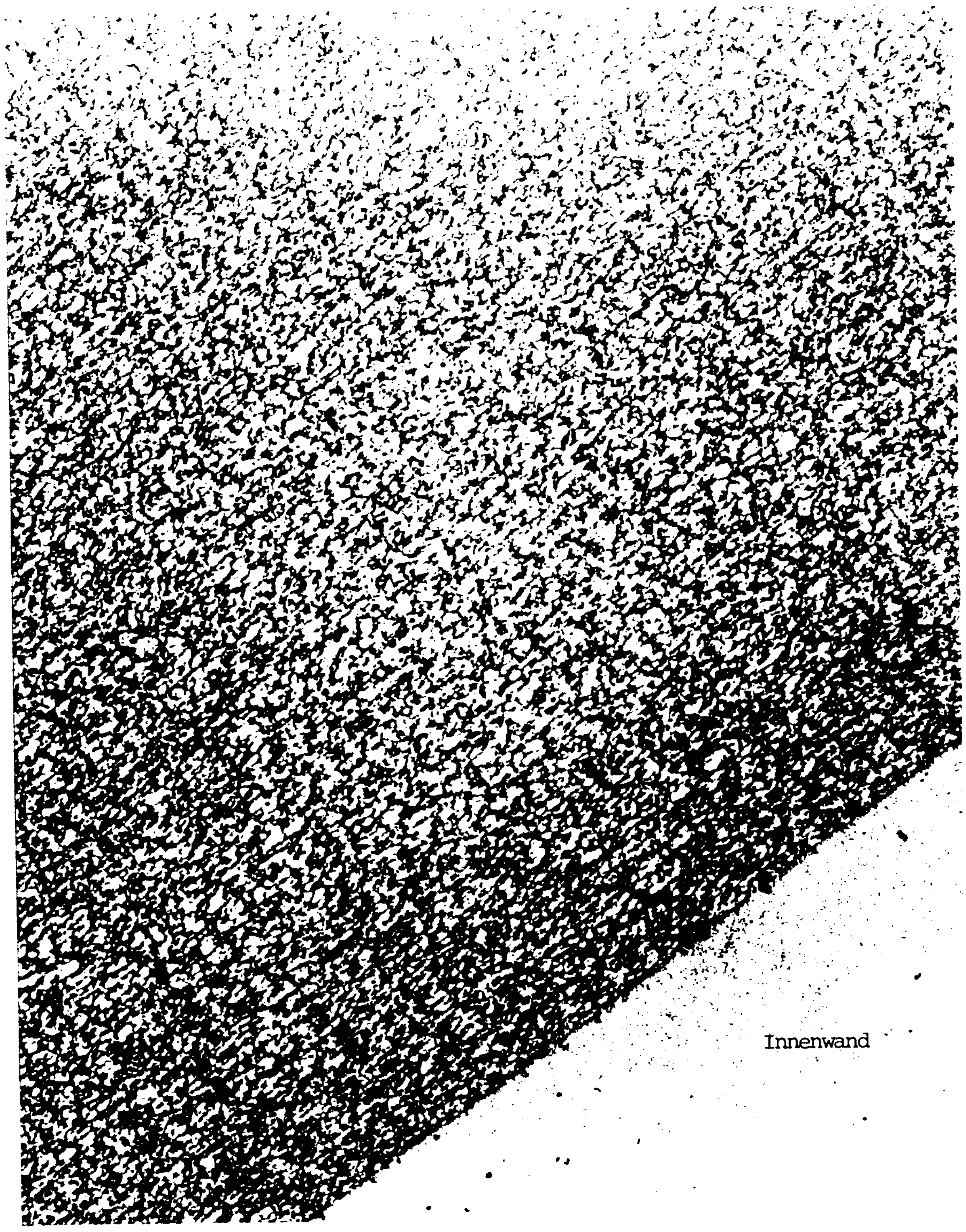


1 : 32 500

Abb. 5

1 : 55 0000

Außenwand

Abb. 6

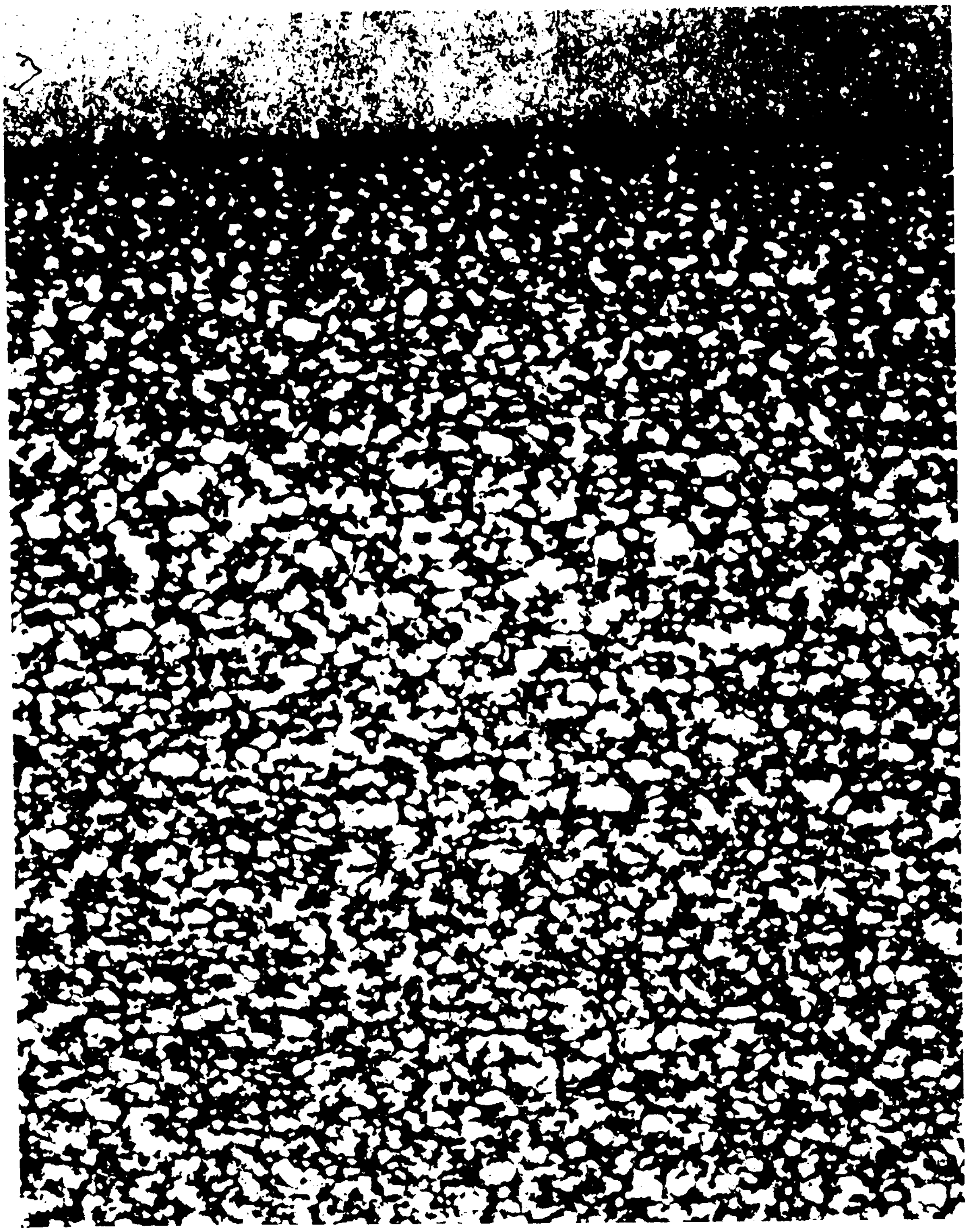

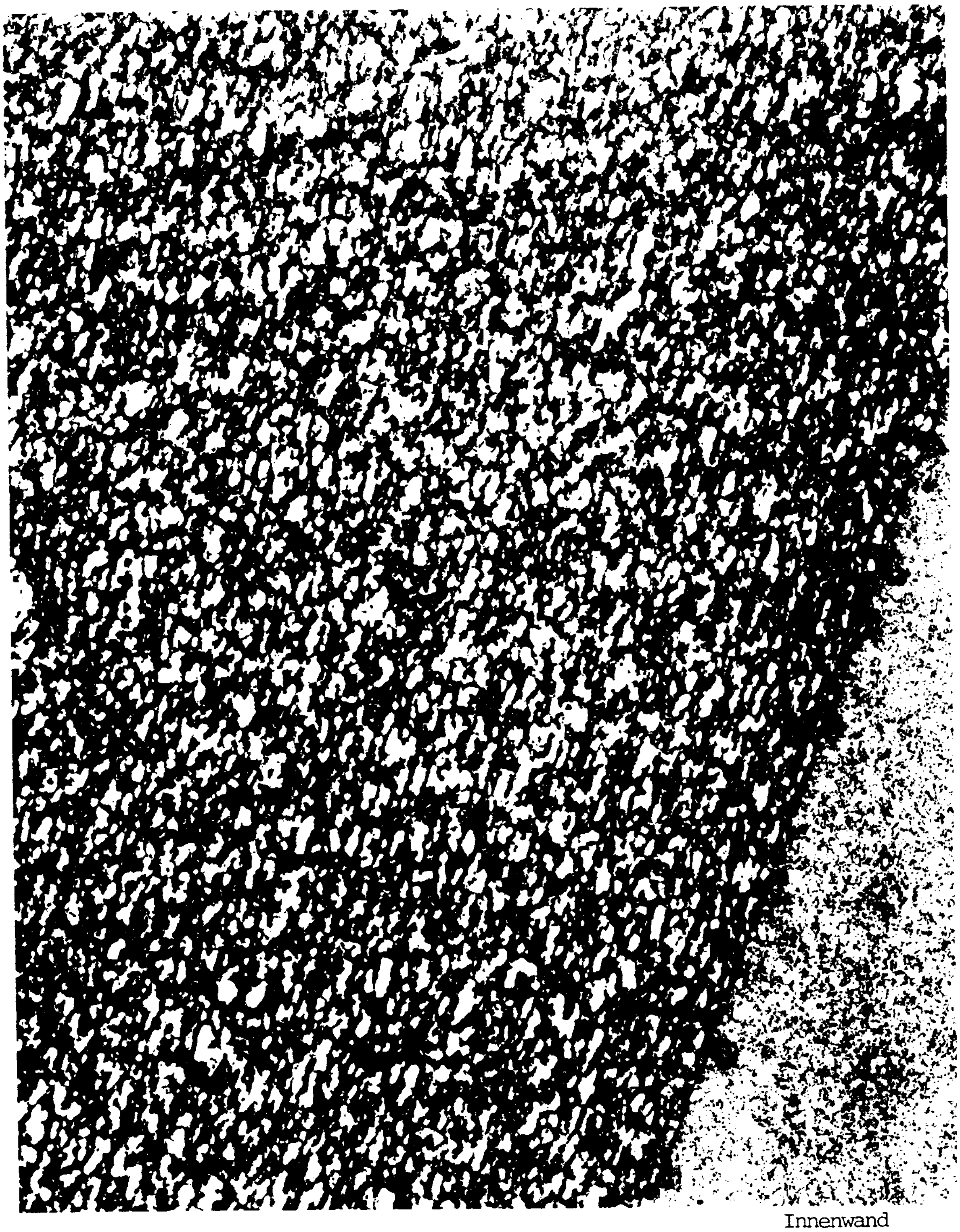


1 : 50 000
Abb. 7

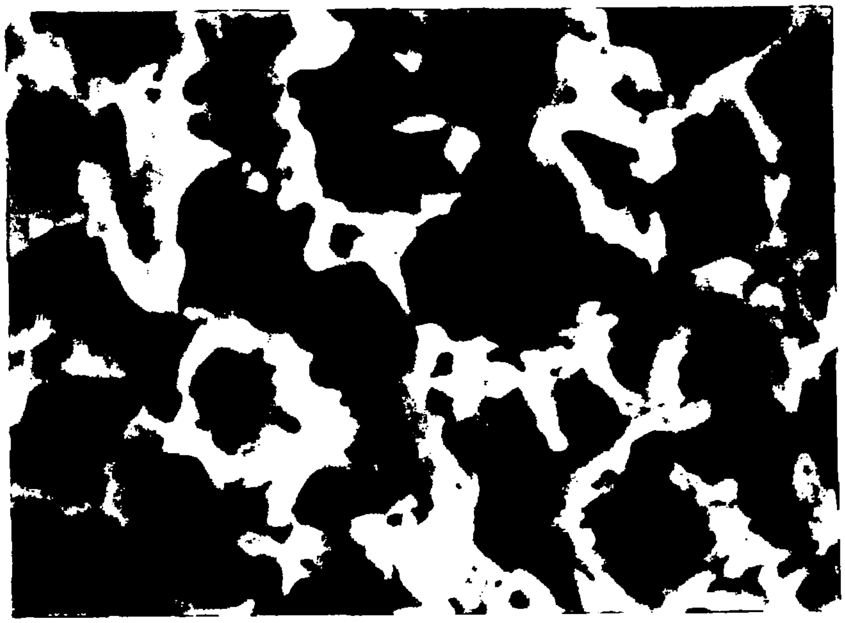

Abb. 8

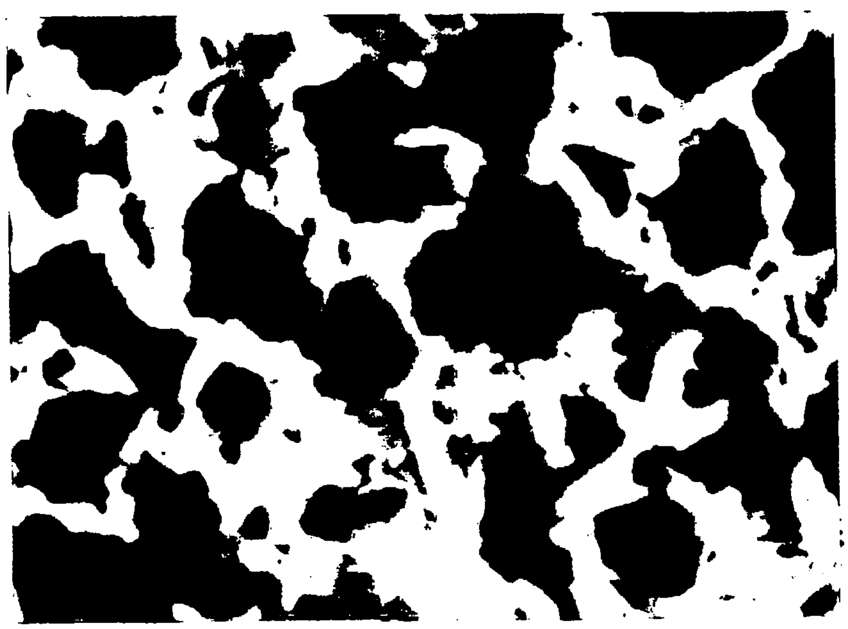

Abb. 9

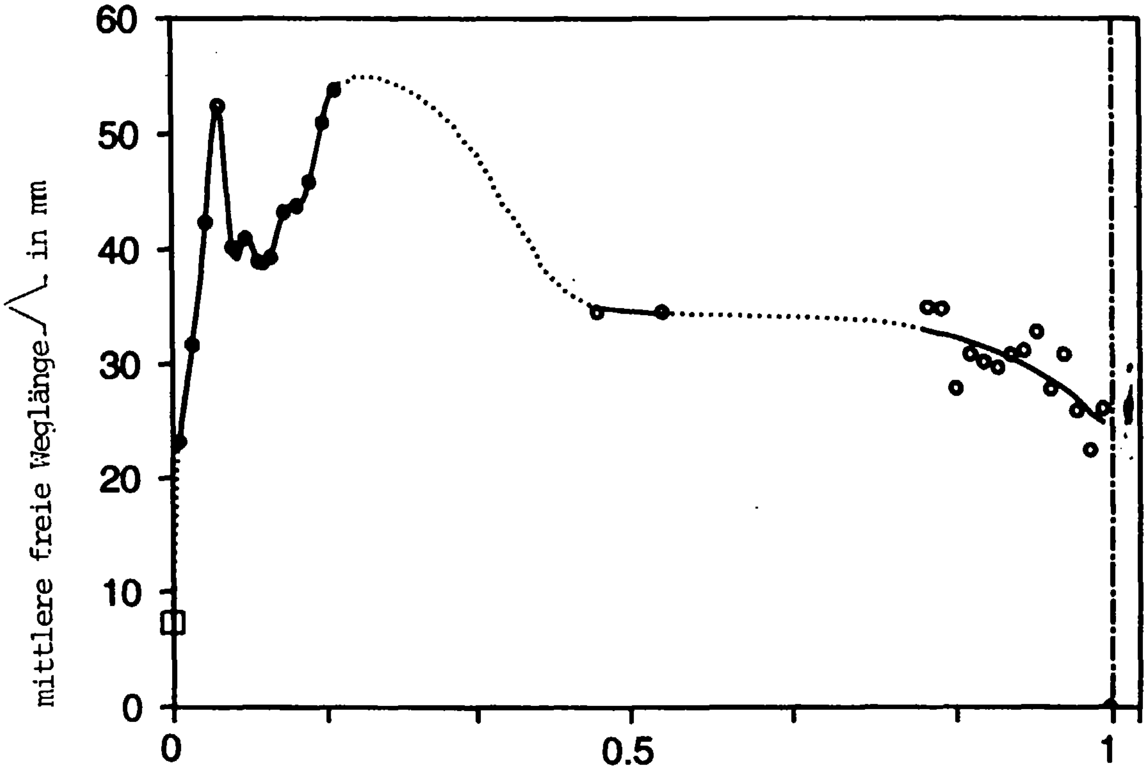


° gemessen

□ geschätzt

... extrapoliert

—

Abb. 10

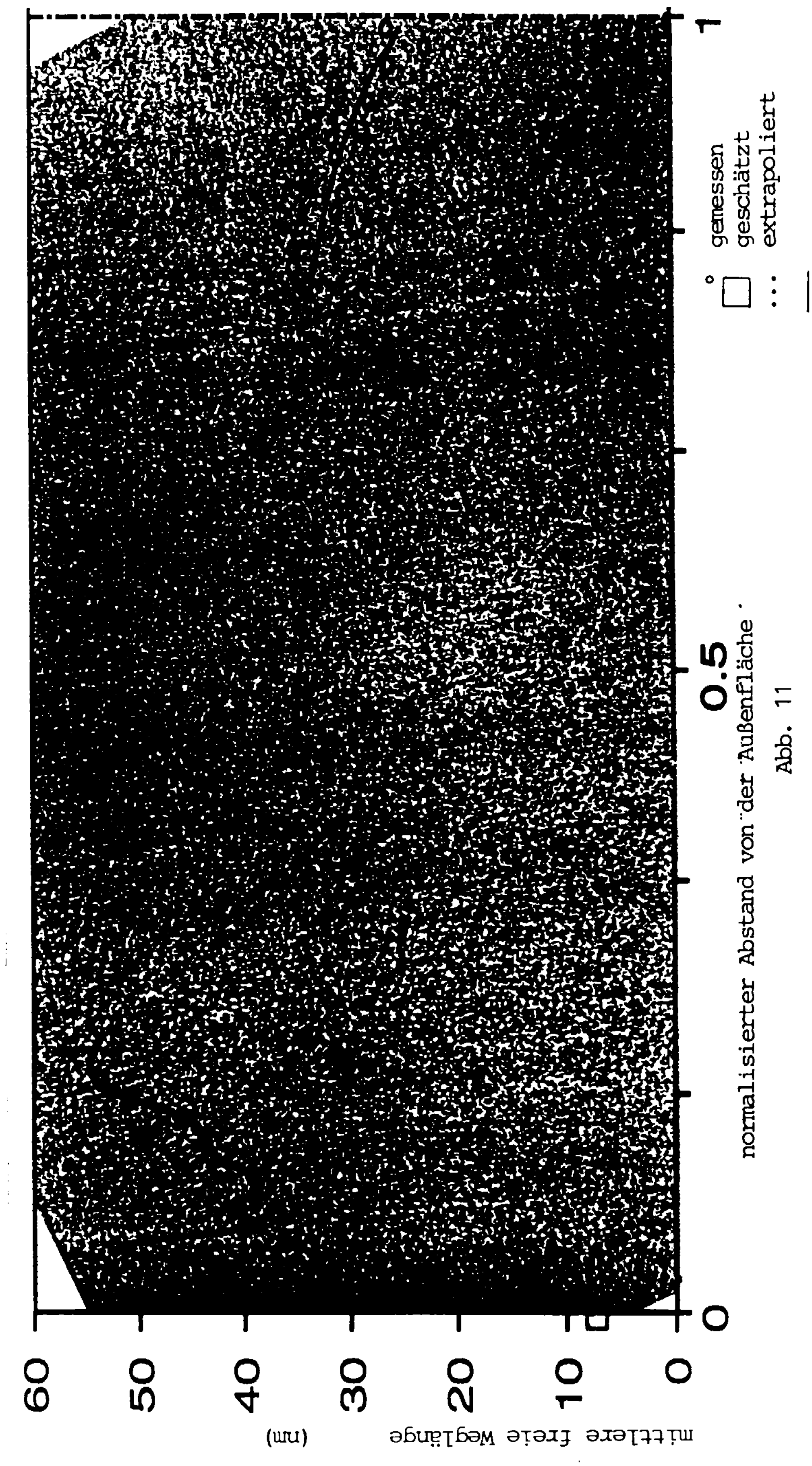
mittlere freie Weglänge (nm)
60
50
40
30
20
10
0
0
0.5
1
normalisierter Abstand von der Außenfläche
° gemessen
□ geschätzt
... extrapoliert

Abb. 11

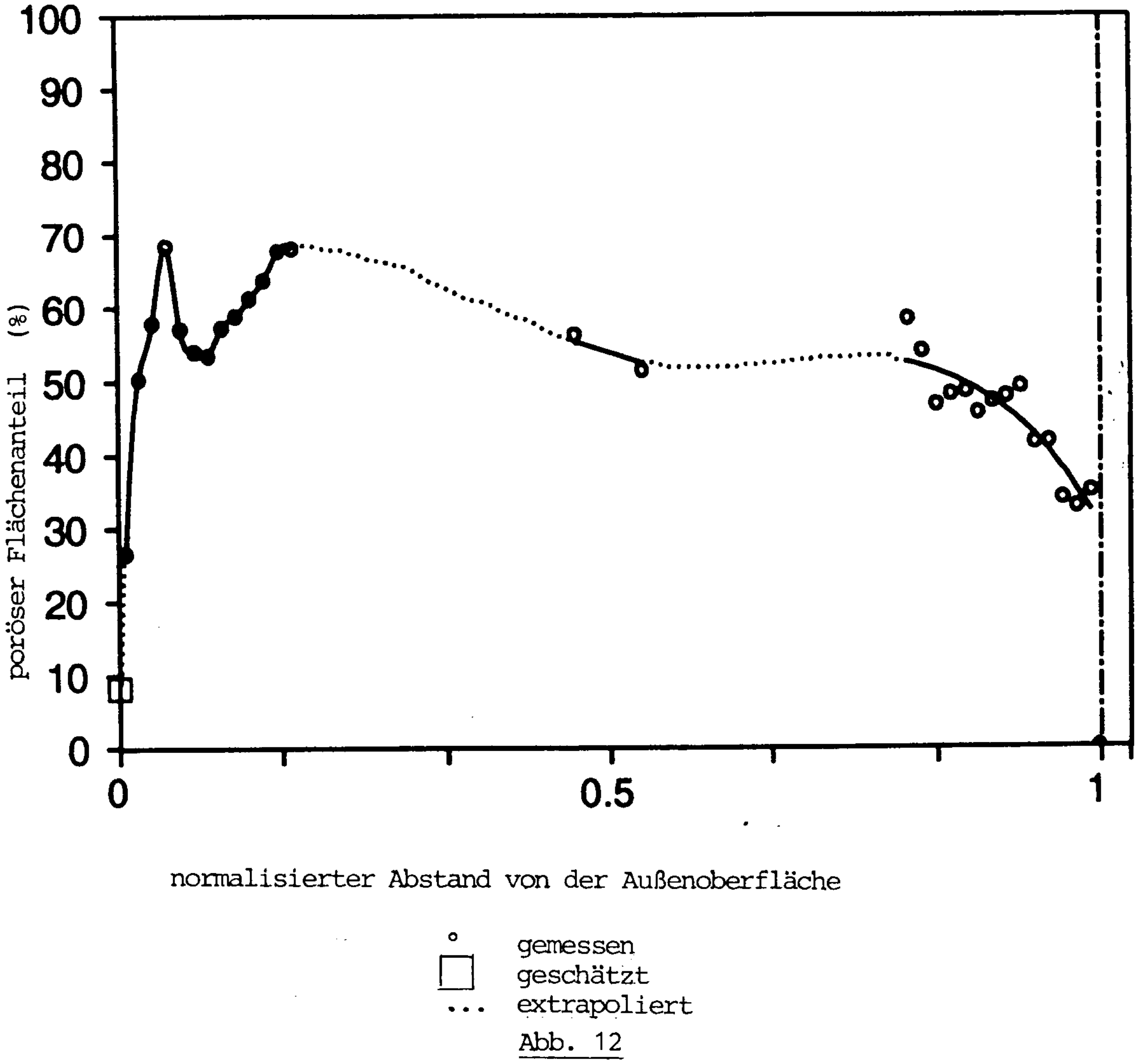
100
90
80
70
60
50
40
30
20
10
0
poröser Flächenanteil (%)
0
0.5
1
normalisierter Abstand von der Außenoberfläche
gemessen
geschätzt
extrapoliert

Abb. 12

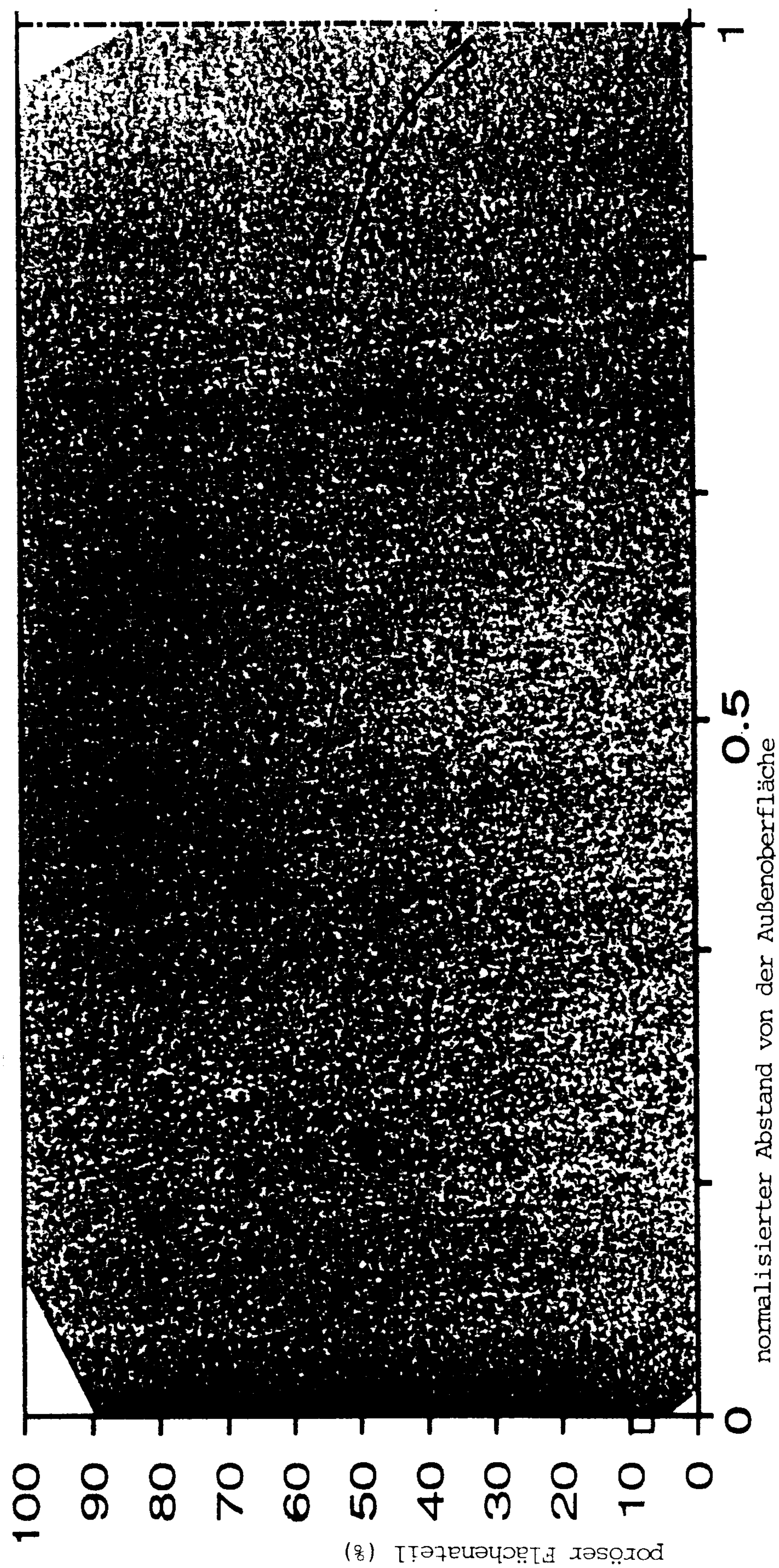
normalisierter Abstand von der Außenoberfläche
0
0.5
1
poröser Flächenteil (%)
100
90
80
70
60
50
40
30
20
10
0

Abb. 13

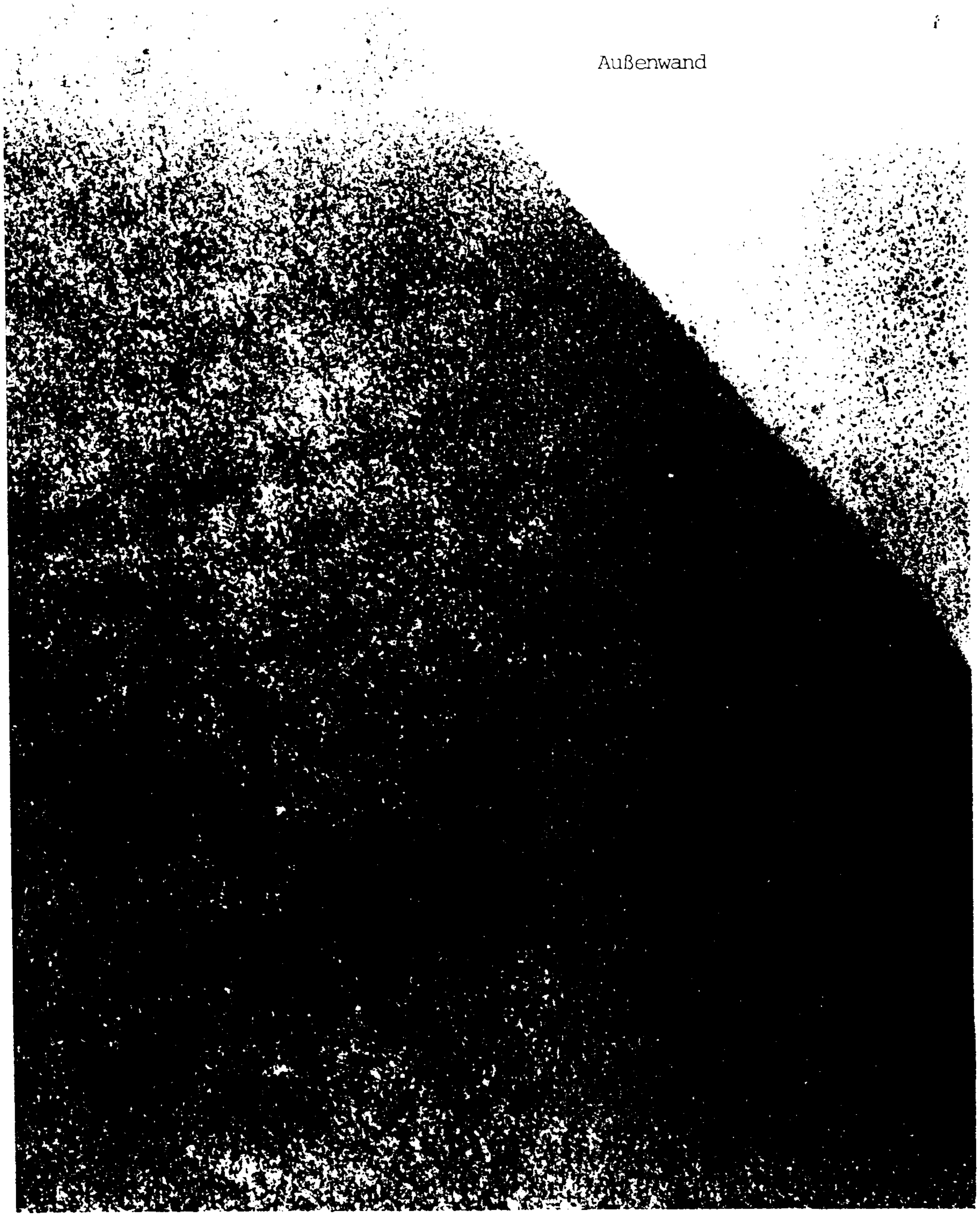


1 : 32 500

Abb. 14

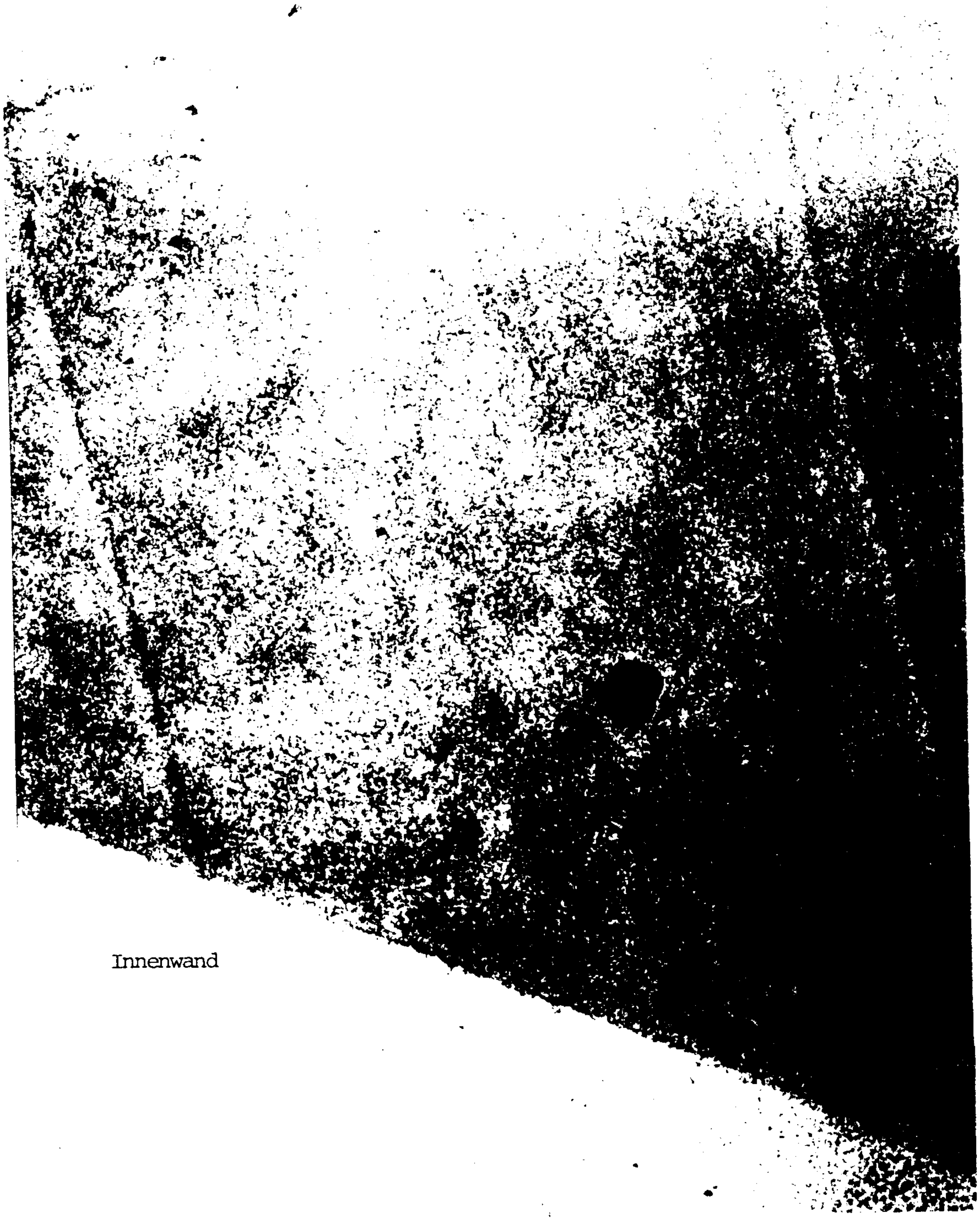


1 : 32 500

Abb. 15

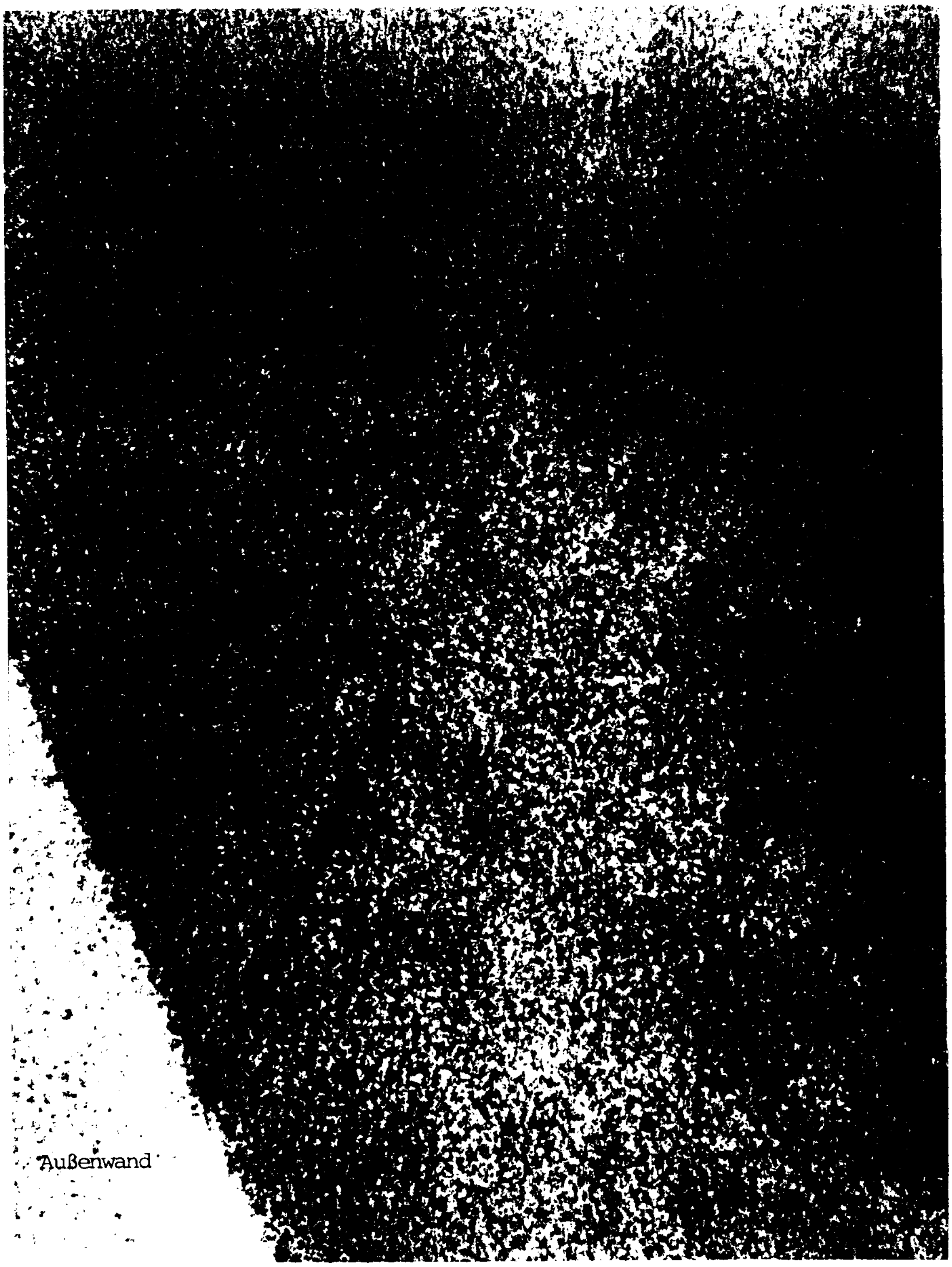


1 : 55 000

Abb. 16

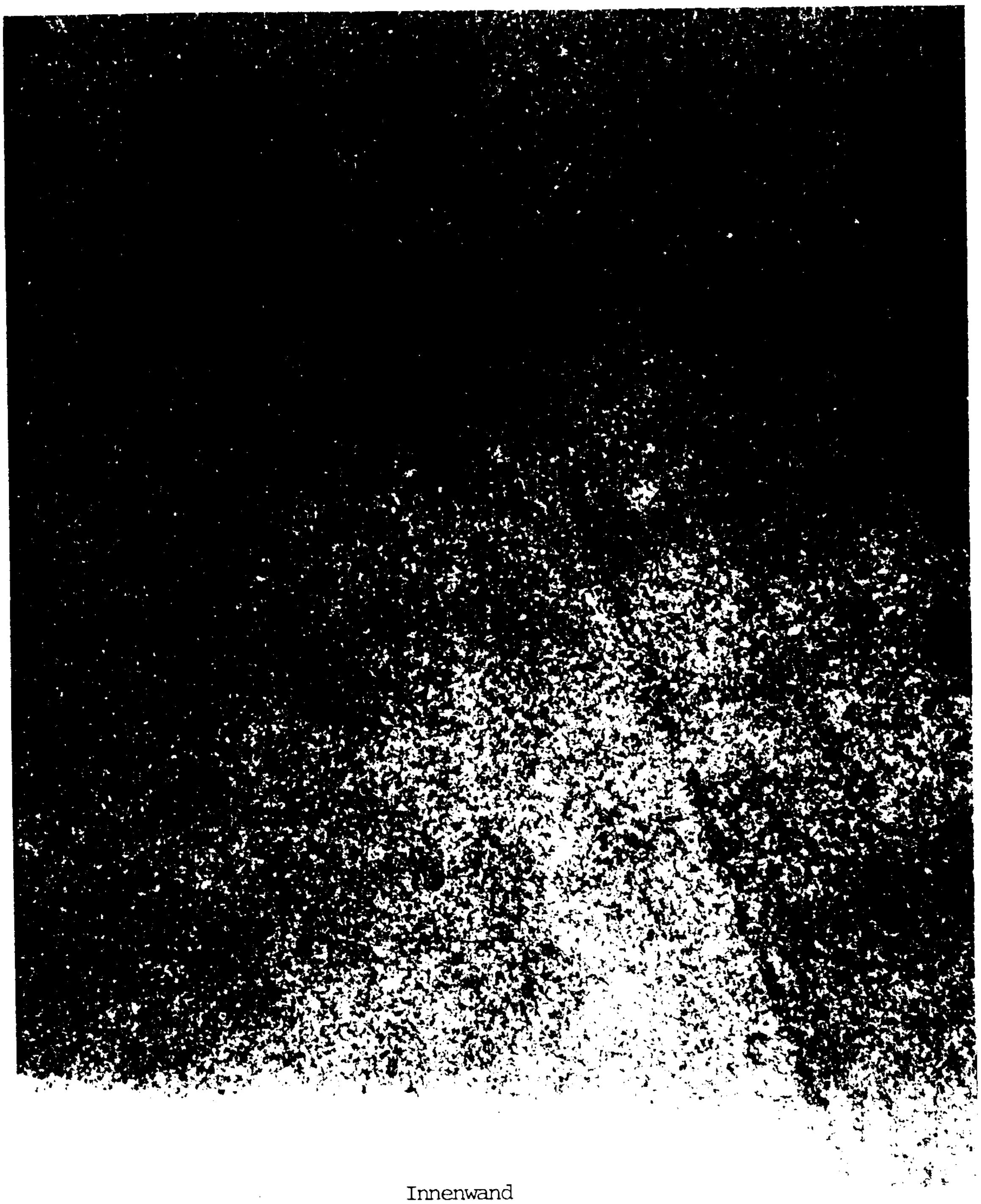

Innenwand

1 : 55 000

Abb. 17

Abb. 18 Maximale Porengröße in der Membran

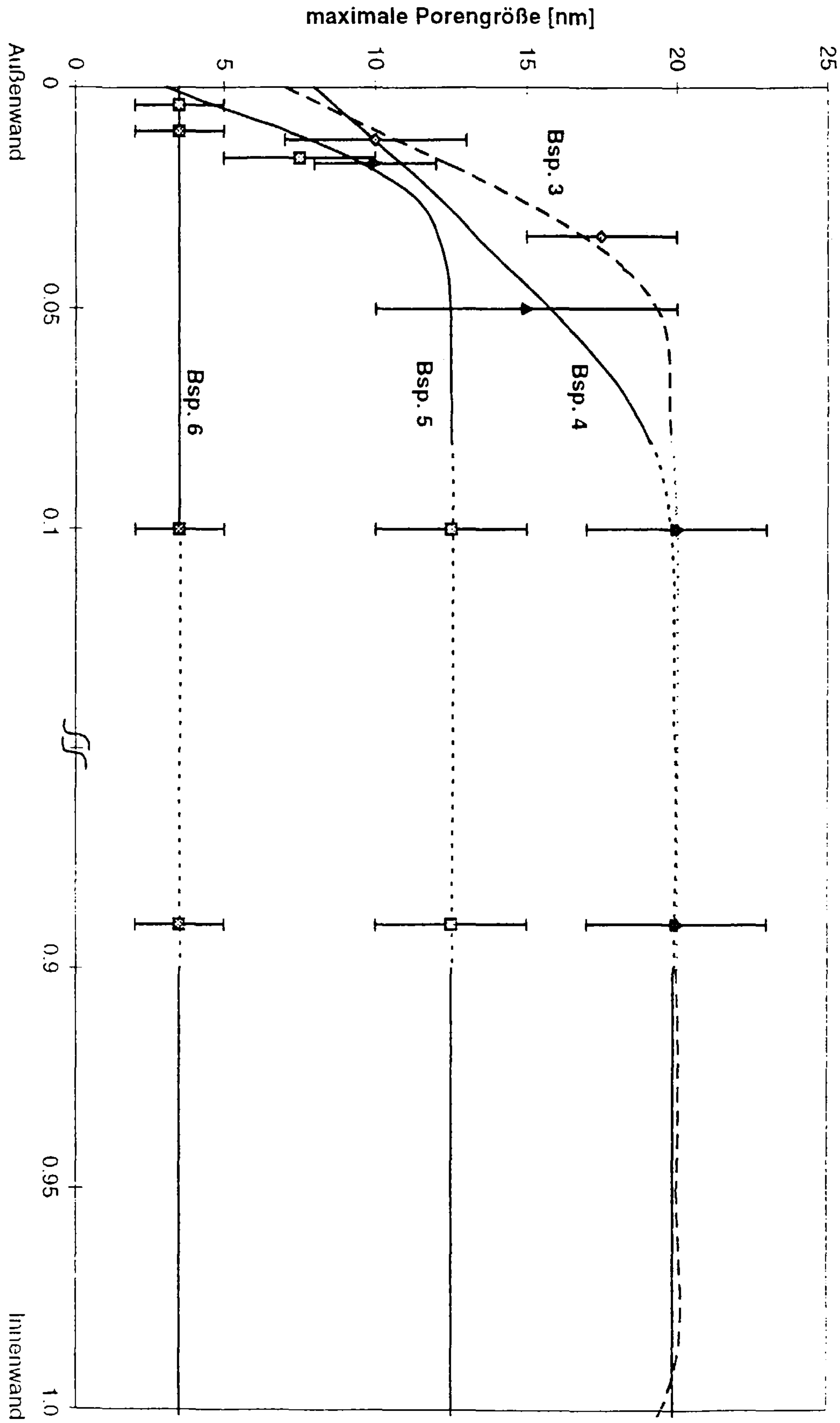

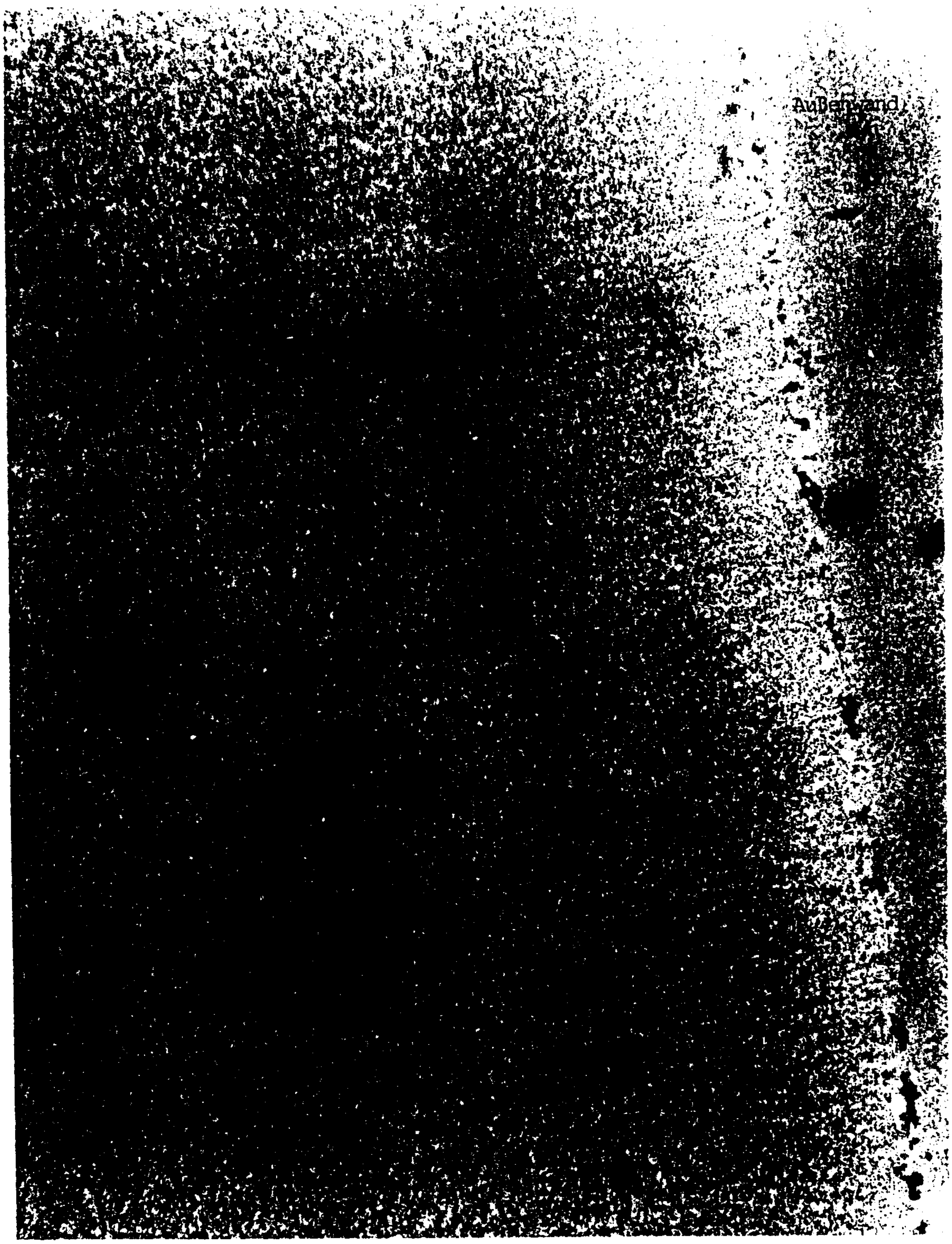


1 : 87 500

Abb. 19

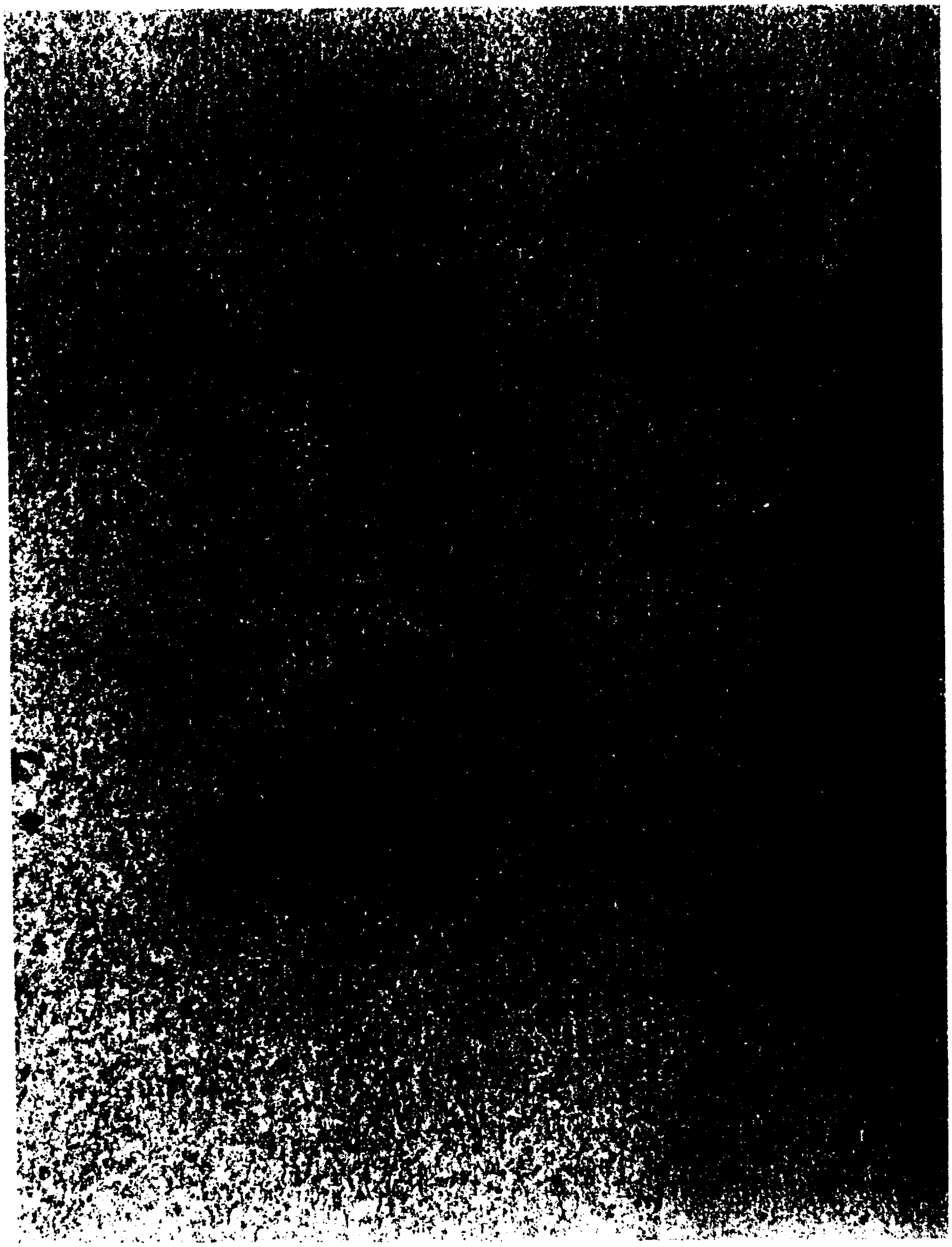

1 : 87 500 Innenwand

Abb. 20

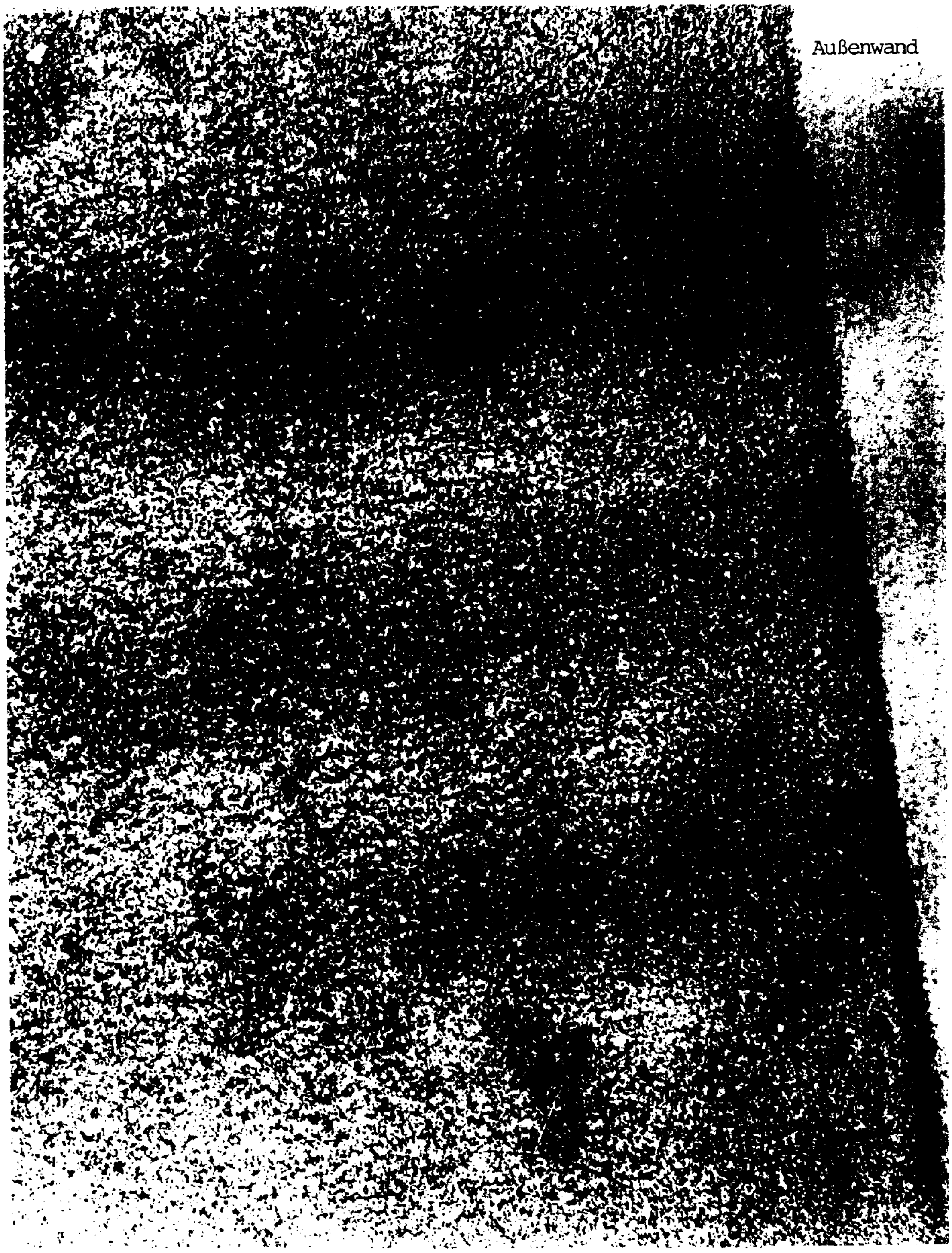


1 : 87 500

Abb. 21

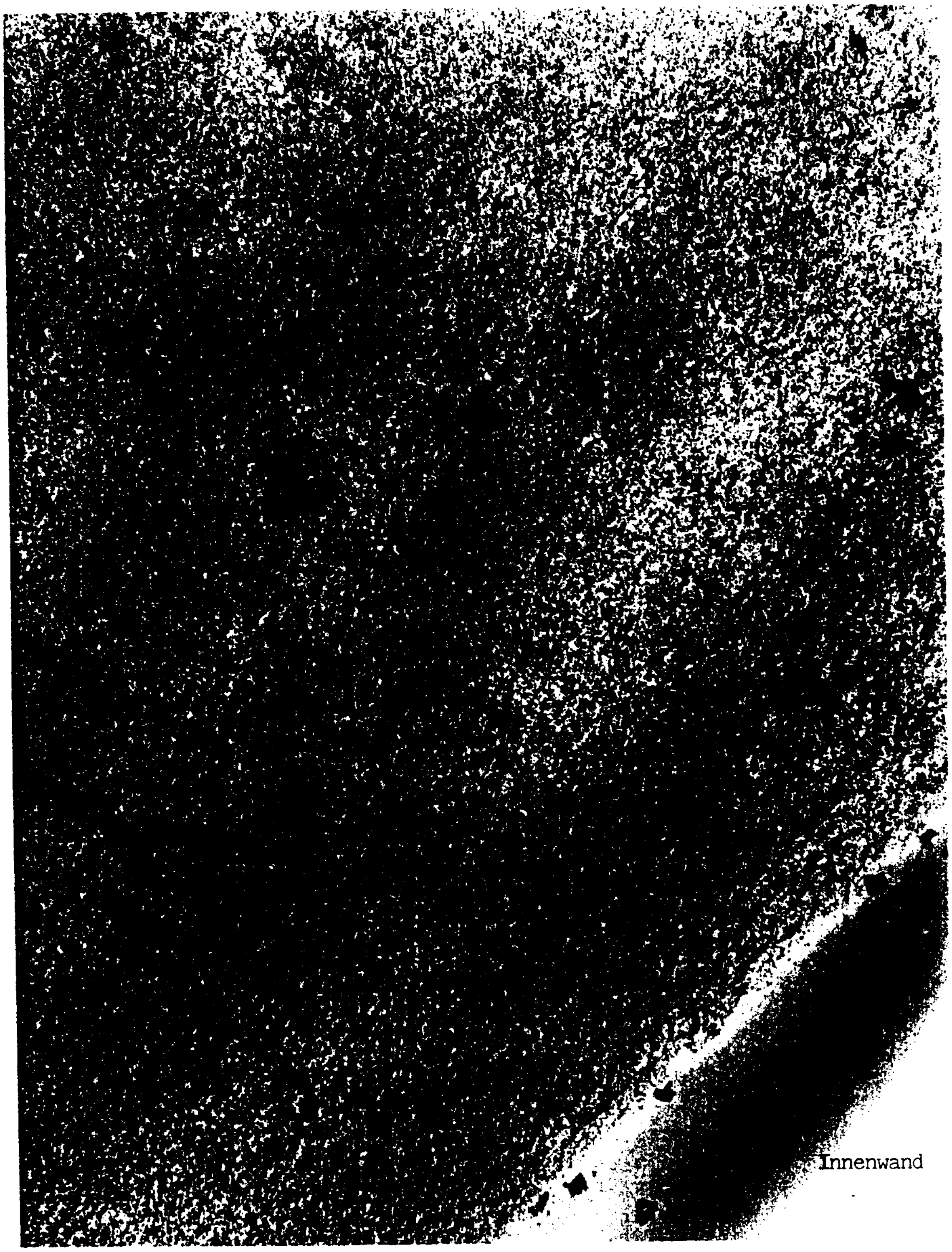


1 : 87 500

Abb. 22

## Abb. 23

## Maximale Porengröße in der Membran

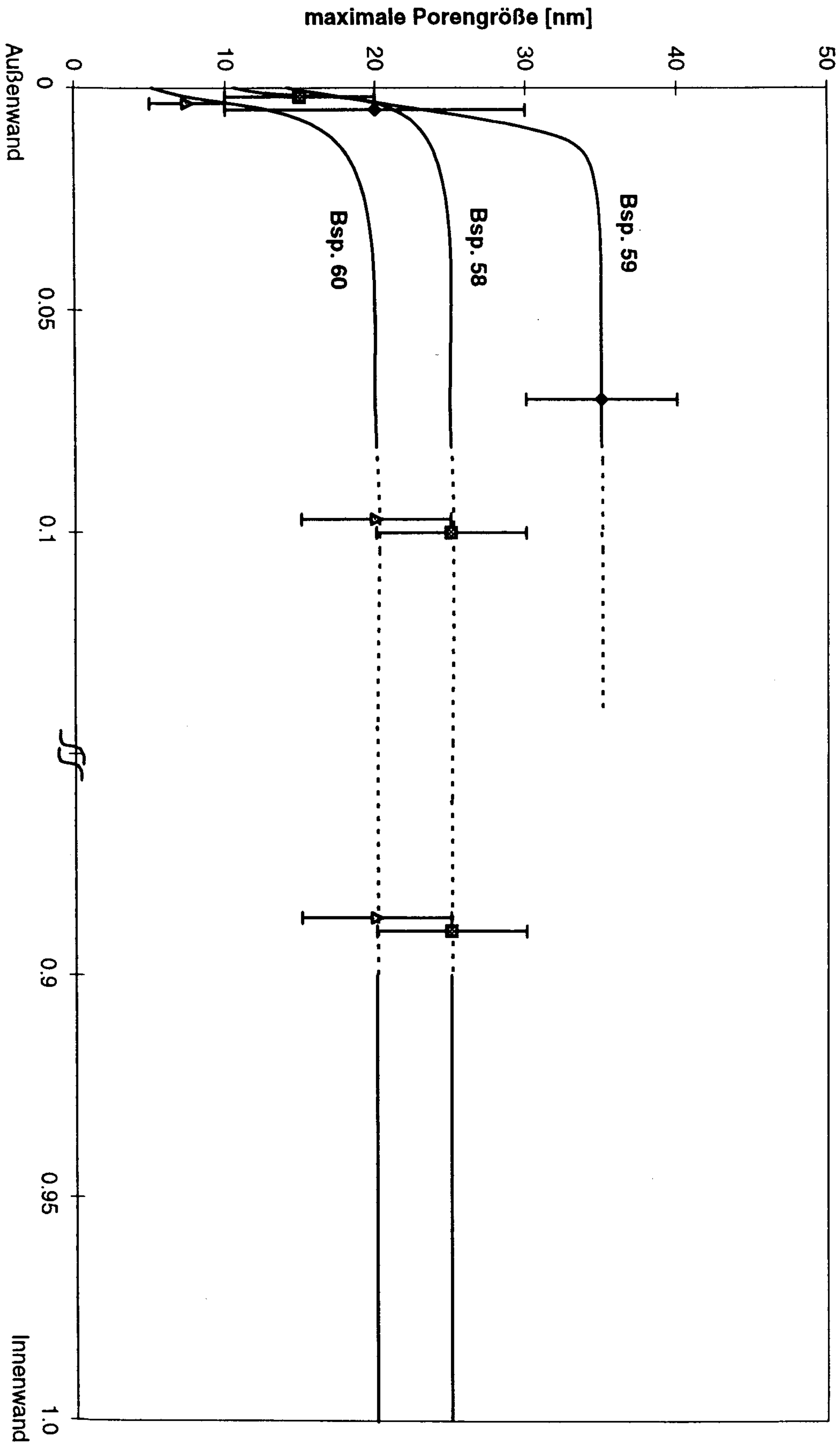

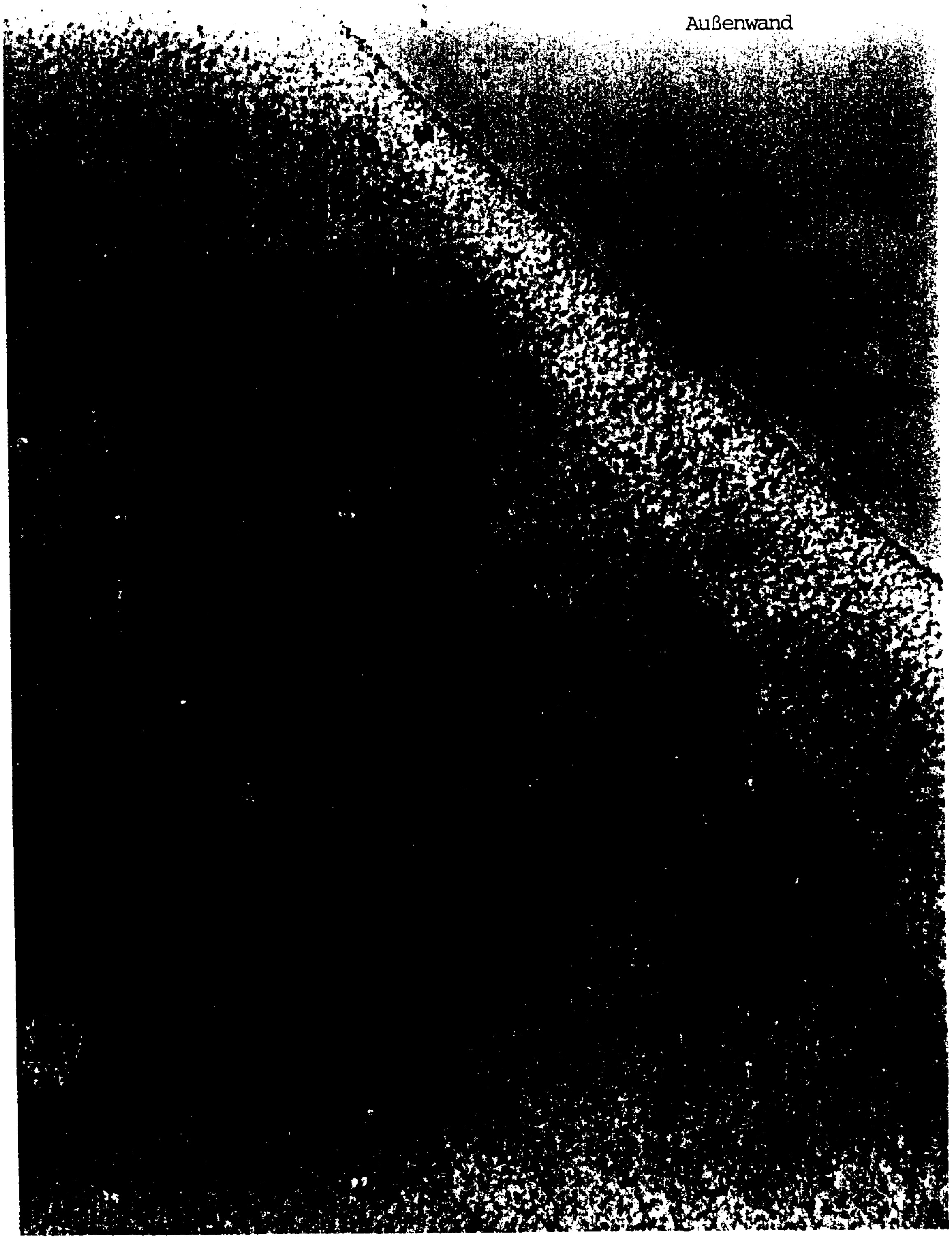


1 : 87 500

Abb. 24

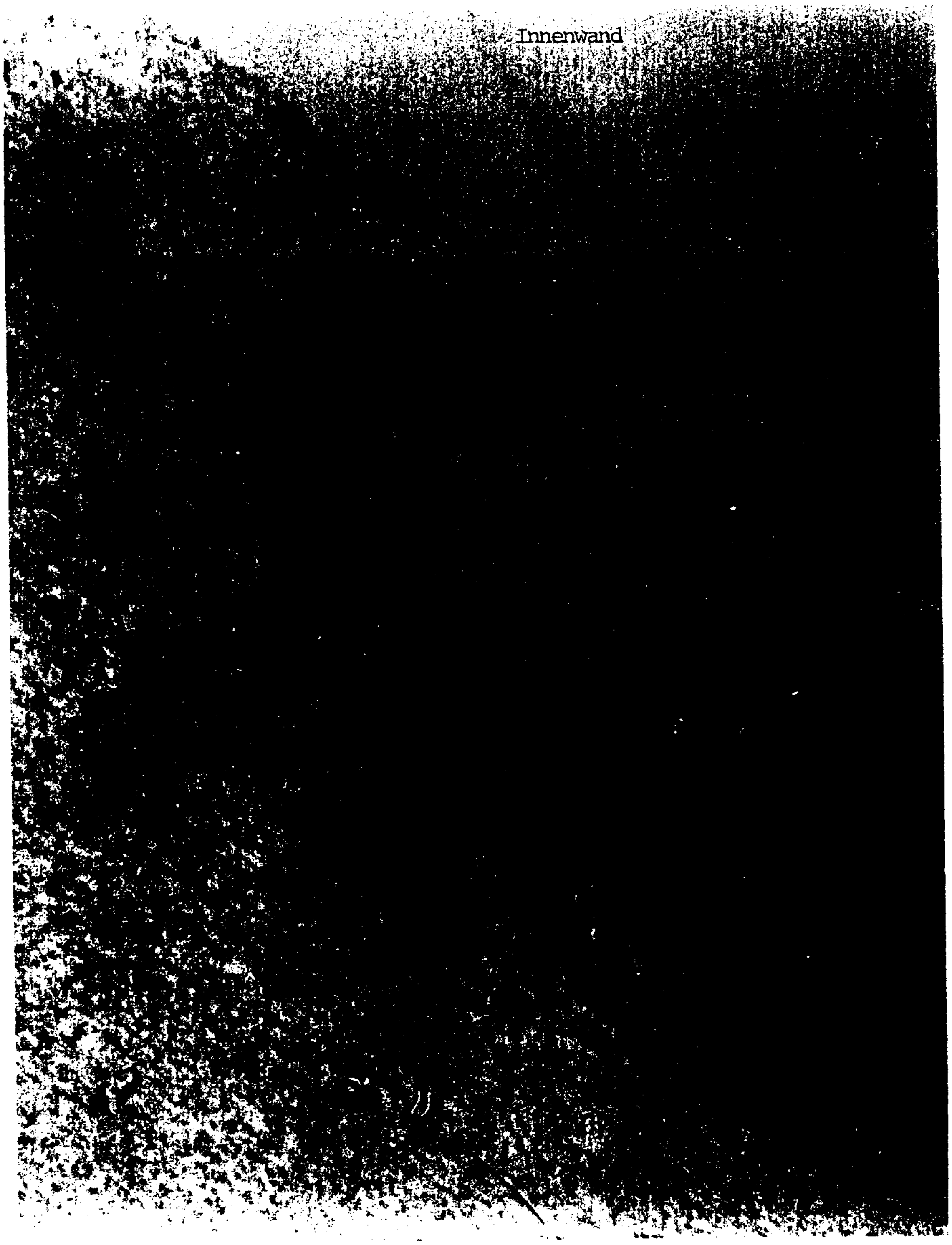


1 : 87 500

Abb. 25

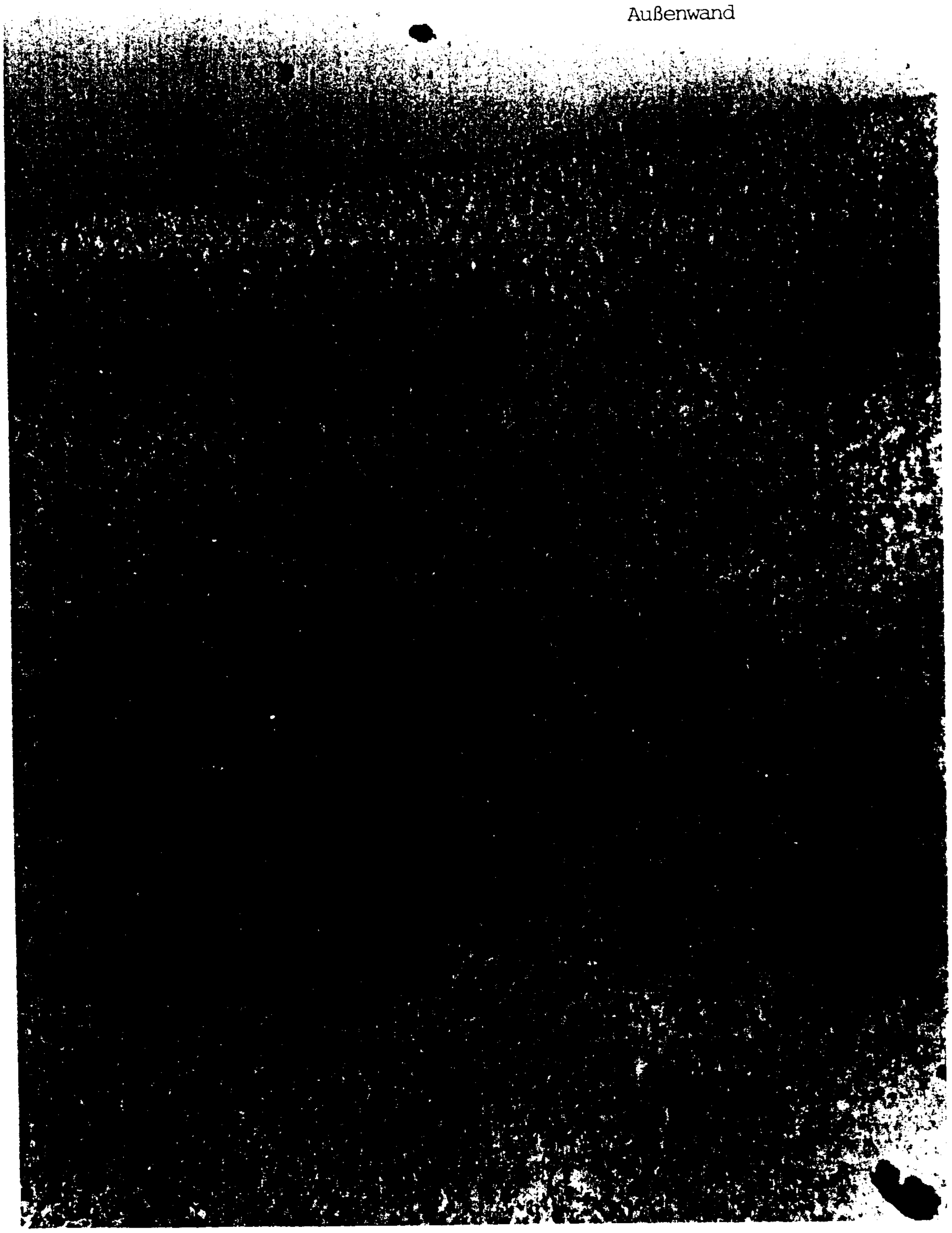


1 : 87 500

Abb. 26

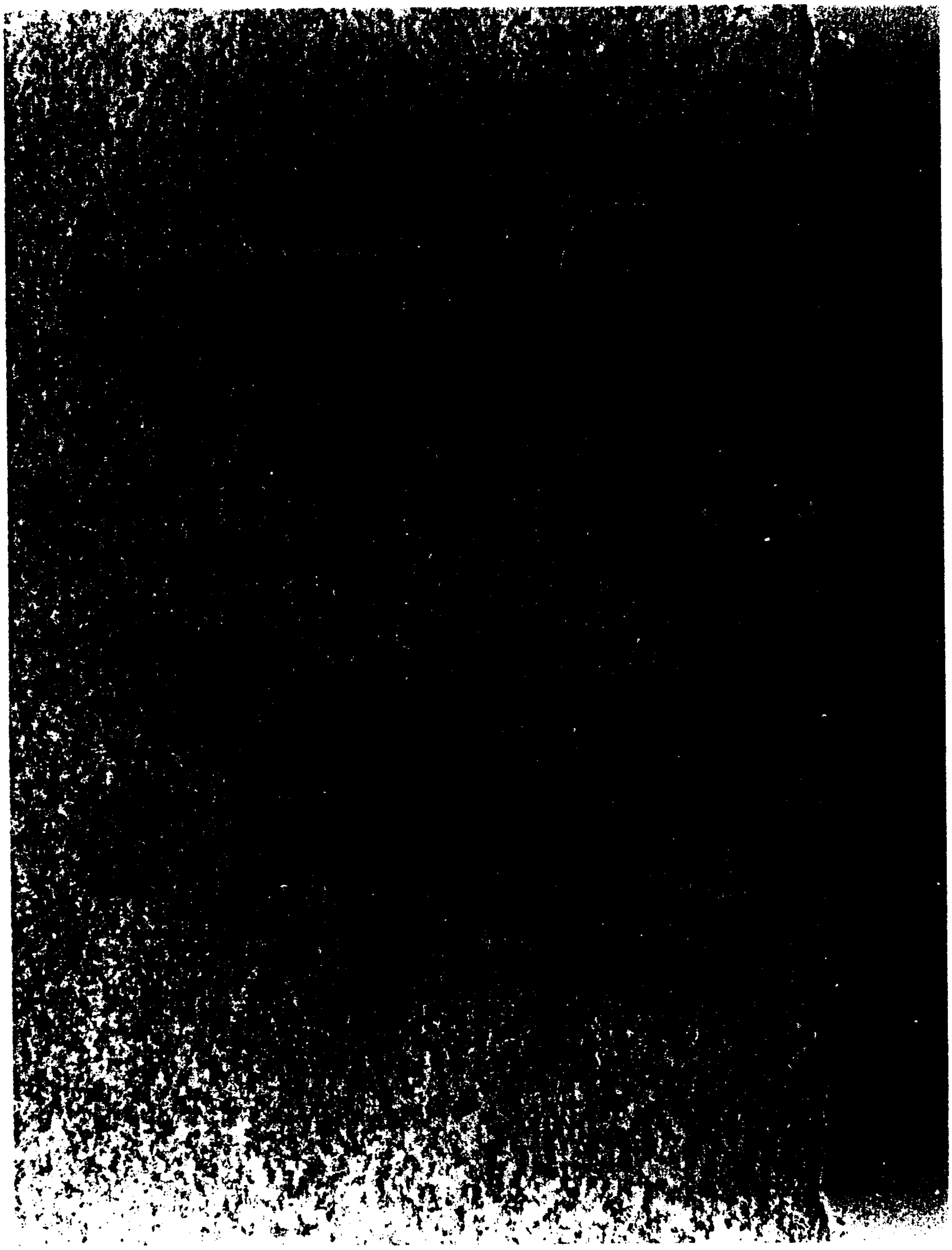

1 : 87 500 Innenwand

Abb. 27

Abb. 28

Maximale Porengröße in der Membran

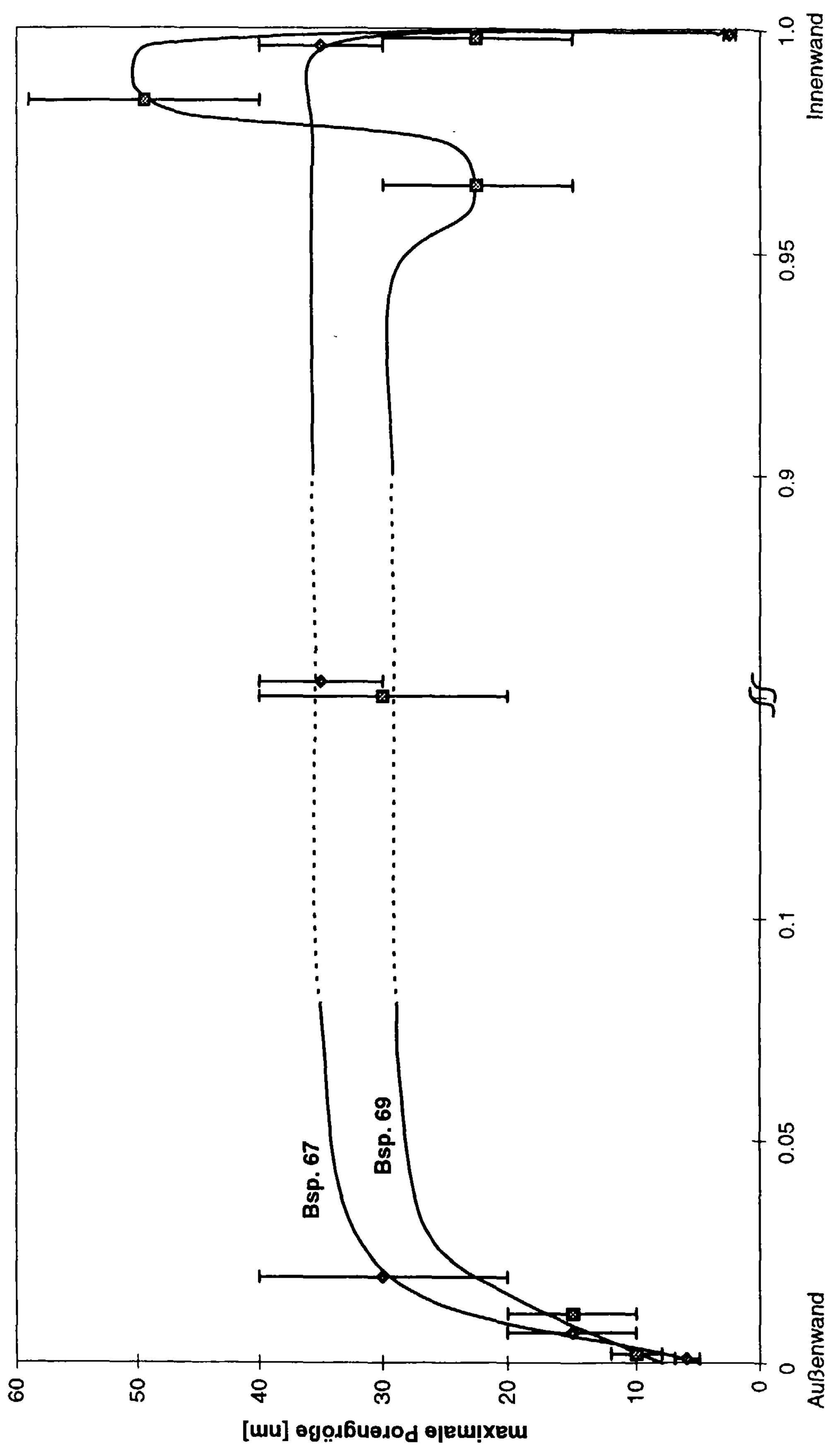

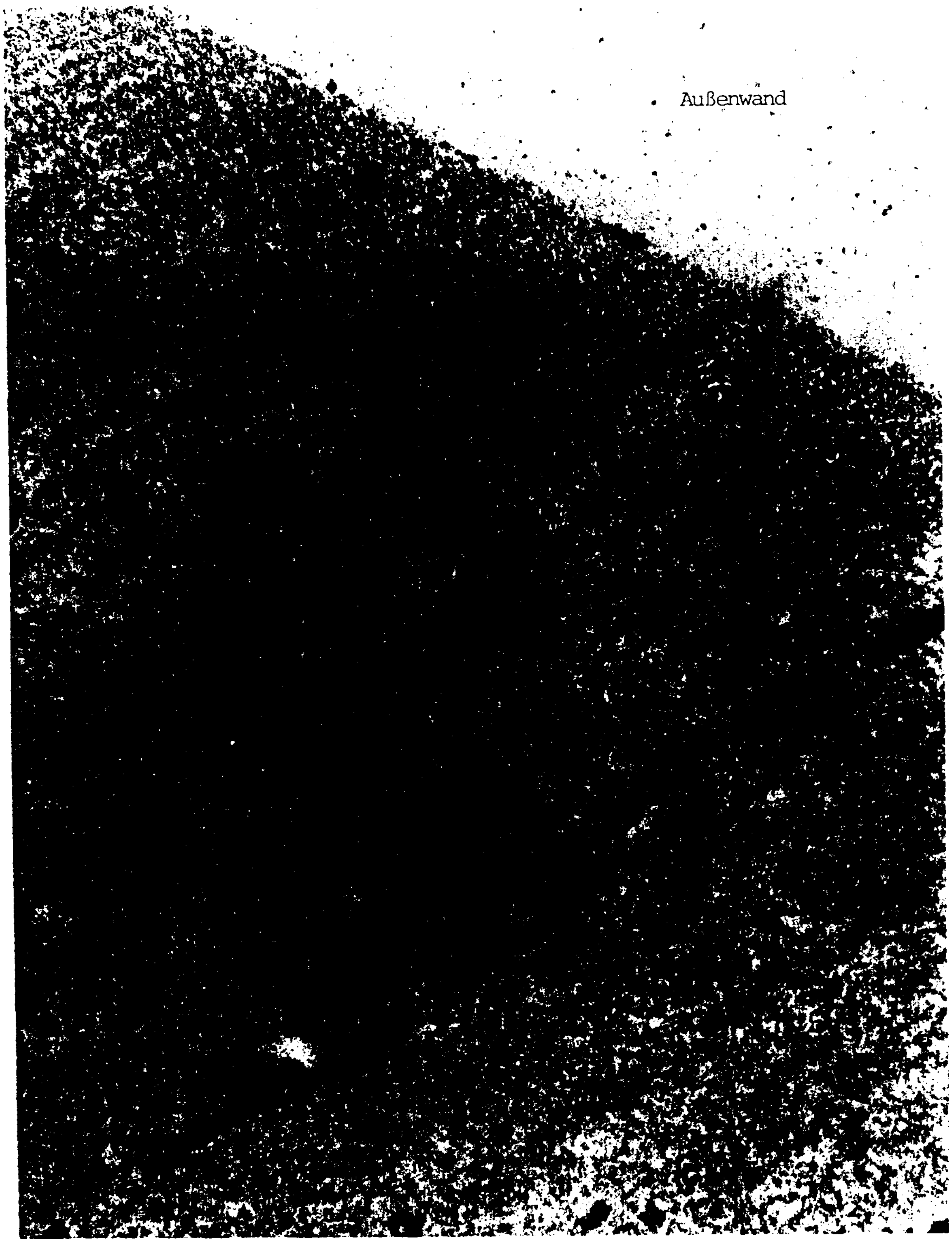


1 : 87 500

Abb. 29

Innenwand

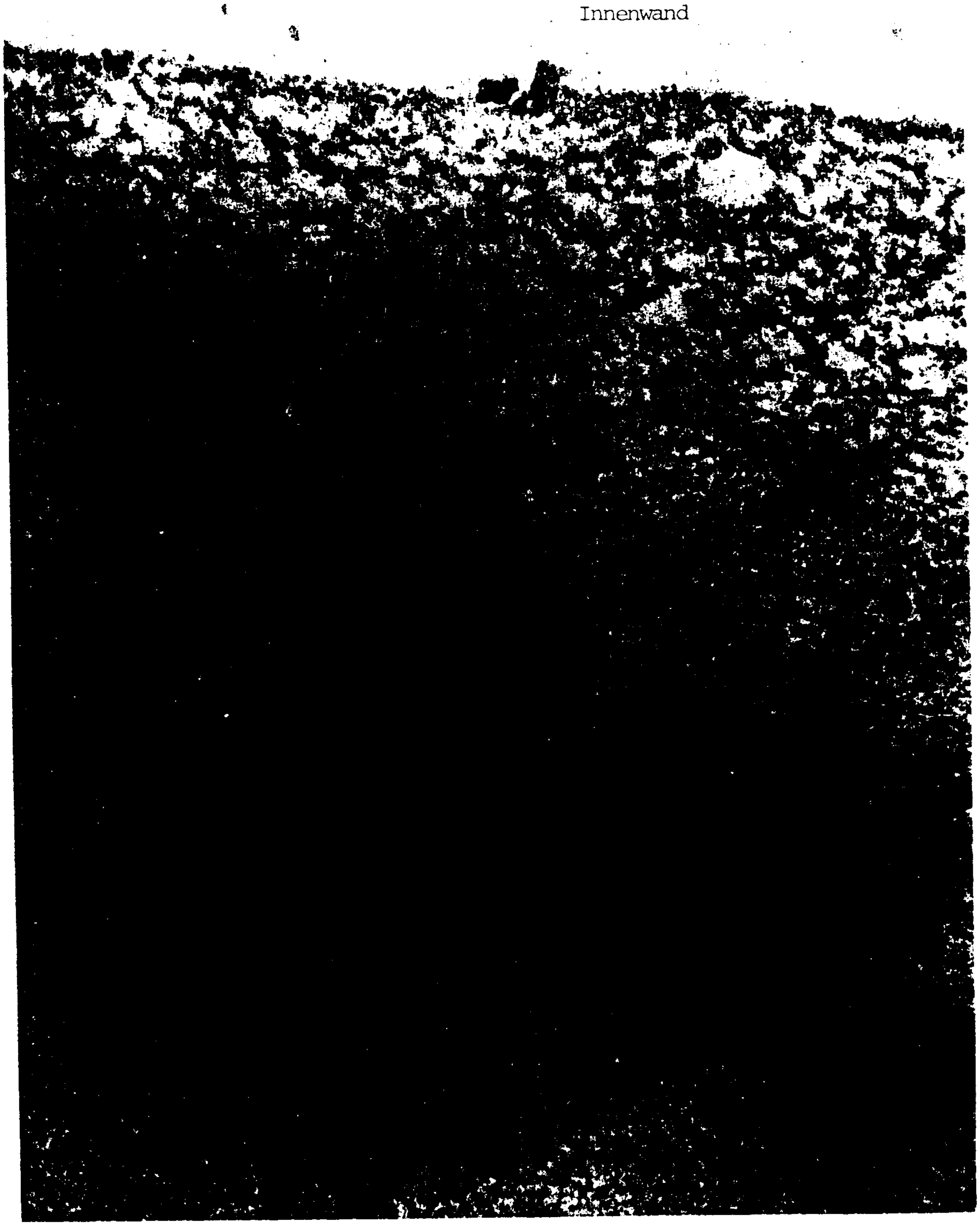

1 : 87 500

Abb. 30

Abb. 31

Maximale Porengröße in der Membran

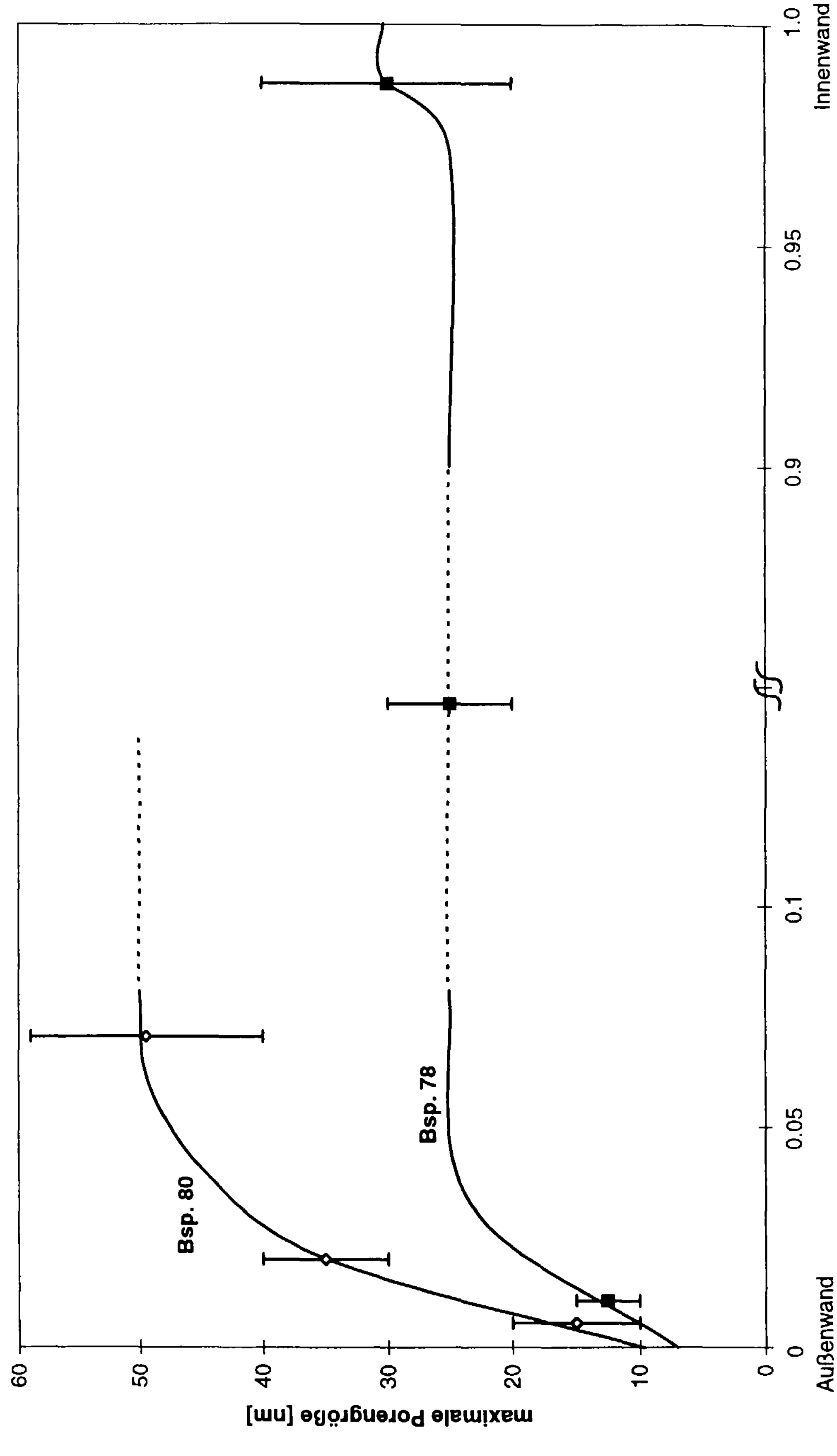

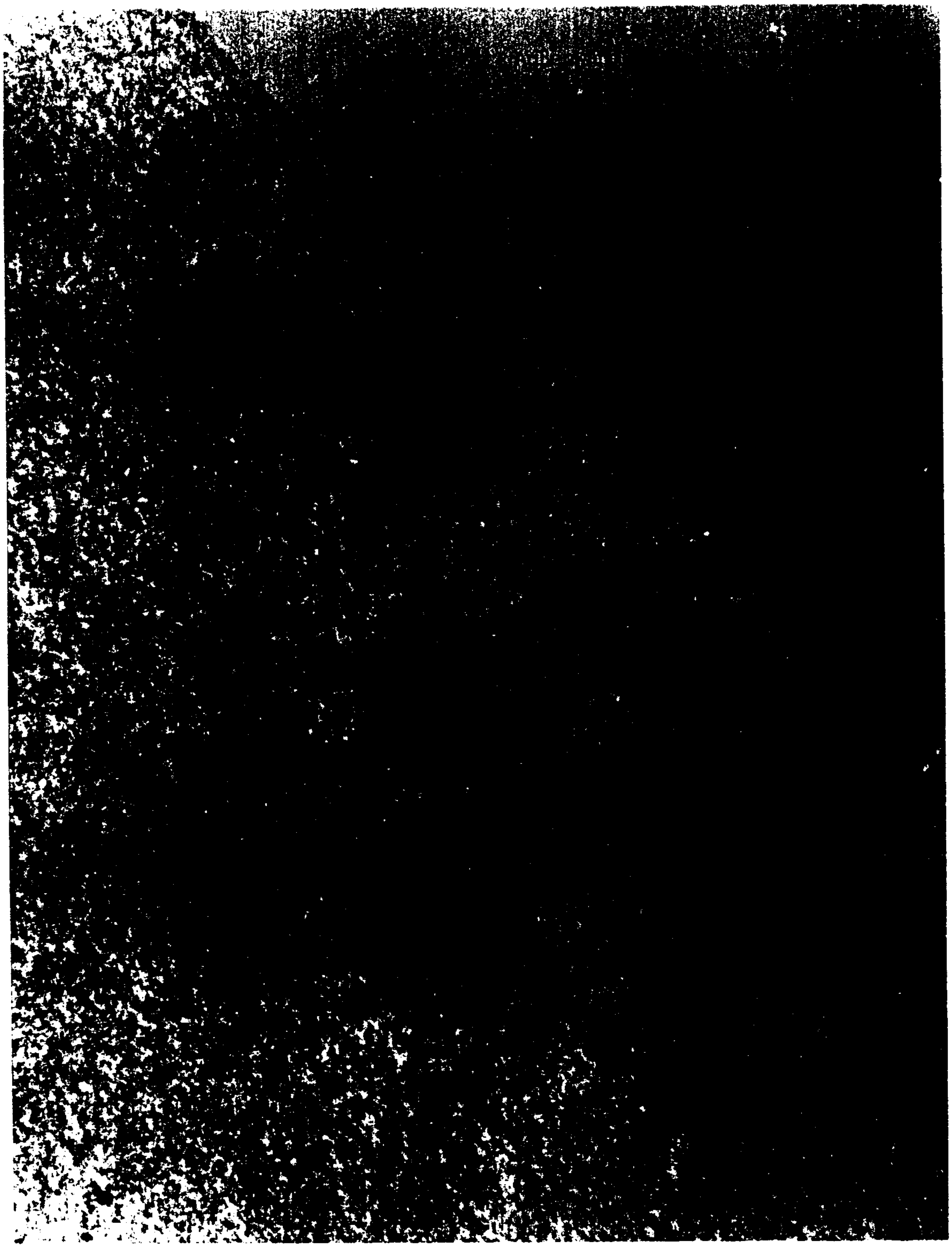

1 : 87 500
Abb. 32

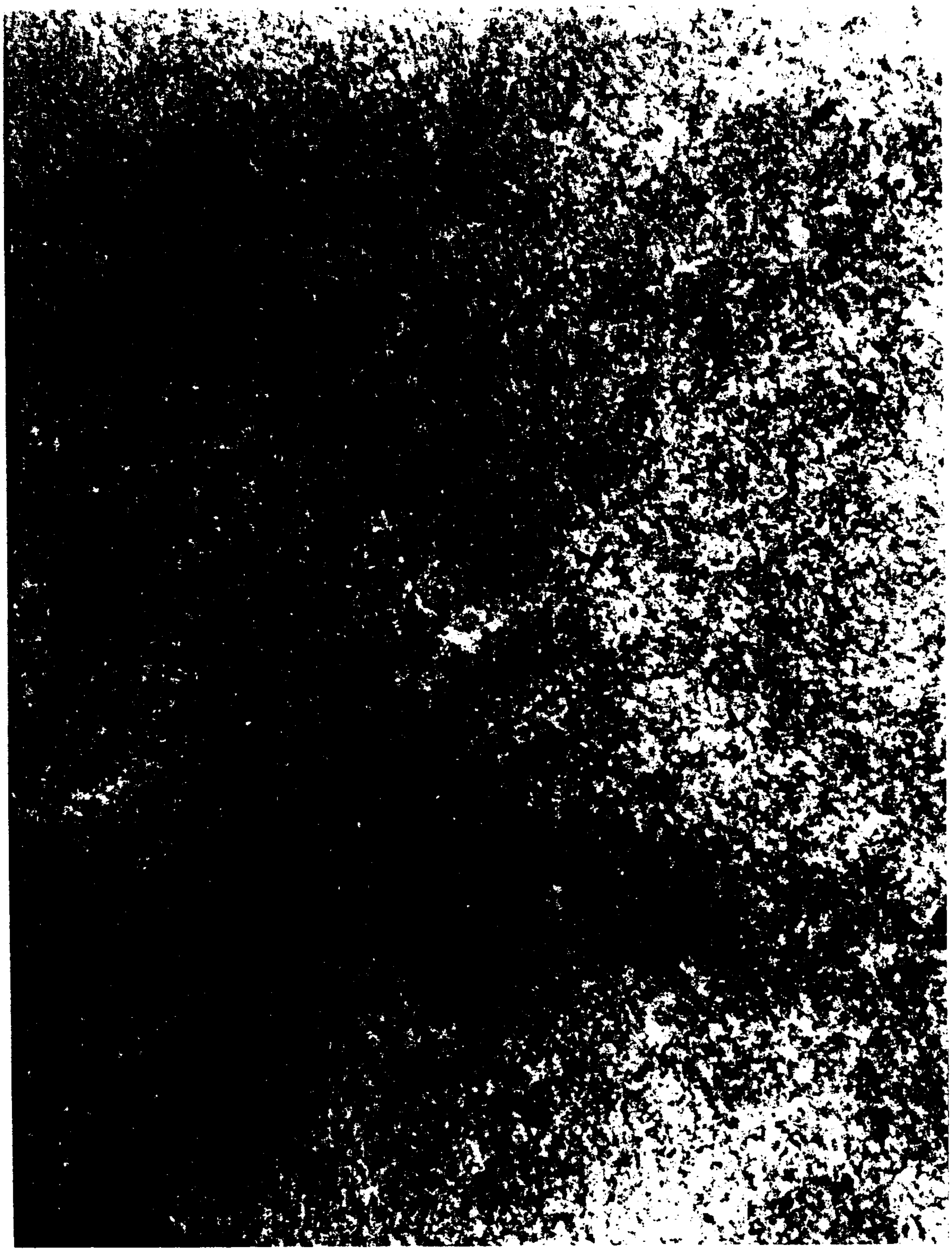

Membraninneres

1 : 87 500

Abb. 33

Europäisches Patentamt

# EUROPÄISCHER RECHERCHENBERICHT

Nummer der Anmeldung
EP 97 10 7174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A<br><br>D | EP 0 042 517 A (AKZO GMBH)<br>* Ansprüche; Beispiel 3 *<br>& DE 30 21 943 A<br>--- | 1 | B01D71/10<br>B01D71/12<br>C08L1/02 |
| A | EP 0 550 879 A (AKZO N.V.)<br>* Ansprüche *<br>--- | 13,17 | |
| A | EP 0 459 293 A (AKZO N.V.)<br>* Ansprüche *<br>----- | 13 | |
| | | | **RECHERCHIERTE SACHGEBIETE (Int.Cl.6)** |
| | | | B01D<br>C08L<br>C08B<br>A61M |

Der vorliegende Recherchenbericht wurde für alle Patentansprüche erstellt

| Recherchenort | Abschlußdatum der Recherche | Prüfer |
|---|---|---|
| BERLIN | 18.August 1997 | Cordero Alvarez, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)